# EUROPEAN PATENT APPLICATION

(11) **EP 4 847 344 A1**
(43) Date of publication of application: **02.12.2026**
(21) Application number: 25744689.8
(22) Date of filing: 23.01.2025
(51) Int. Cl.: B62B 7/06, B62B 9/00

(54) **STROLLER FRAME AND UNLOCKING MECHANISM THEREOF**

(30) Priority: 24.01.2024 CN 202410103141; 09.09.2024 CN 202411259370; 22.10.2024 CN 202411479528; 17.01.2025 CN 202510083312
(71) Applicant: Wonderland Switzerland AG, 6312 Steinhausen (CH)
(72) Inventor: SUN, Mingxing, Dongguan, Guangdong 523648 (CN); WANG, Erxue, Dongguan, Guangdong 523648 (CN); HU, Zhiqiang, Dongguan, Guangdong 523648 (CN); YIN, Hongtao, Dongguan, Guangdong 523648 (CN)
(74) Representative: Flentje, Hanno Alexander Peter
(86) International application number: PCT/CN2025/074408
(87) International publication number: WO 2025/157226

(57) **Abstract**

A stroller frame and an unlocking mechanism thereof. The unlocking mechanism (100X) comprises a first unlocking member (110X), which is rotatably arranged on a stroller frame (1000X), wherein the first unlocking member (110X) is drivingly connected to a folding locking mechanism (500X), so as to allow a lower handle frame (220X) to pivot relative to a wheel frame (300X); a second unlocking member (120X), which is rotatably arranged on the stroller frame (1000X), wherein the second unlocking member (120X) is drivingly connected to a height adjustment locking mechanism (400X), so as to allow an upper handle frame (210X) to move relative to the lower handle frame (220X); and an operating member (130X), which is movably arranged on the stroller frame (1000X) and adapted to drive any one of the first unlocking member (110X) and the second unlocking member (120X) to rotate. Therefore, a user can control the first unlocking member to rotate by driving the operating member, thereby indirectly controlling the folding locking mechanism. Moreover, the user can further control the second unlocking member to rotate by driving the operating member, thereby indirectly controlling the height adjustment locking mechanism. The user can respectively control different locking mechanisms by simply operating the unlocking mechanism, thereby improving the operation convenience of the user.

## Description

### CROSS-REFERENCE TO RELATED ACPPLCATIONS

This application claims priority to Chinese Patent Application No. 2025100833121, filed with the Chinese Patent Office on January 17, 2025 and entitled "Stroller frame and unlocking mechanism thereof", Chinese Patent Application No. 202410103141X, filed with the Chinese Patent Office on January 24, 2024 and entitled "Stroller frame and unlocking mechanism thereof", Chinese Patent Application No. 2024112593707, filed with the Chinese Patent Office on September 09, 2024 and entitled "Stroller frame and unlocking mechanism thereof", and Chinese Patent Application No. 2024114795281, filed with the Chinese Patent Office on October 22, 2024 and entitled "Stroller frame and unlocking mechanism thereof", the content of which is hereby incorporated by reference in its entirety.

### TECHNICAL FIELD

The present disclosure relates to the field of baby product technologies, and in particular, to a stroller frame and an unlocking mechanism thereof.

### BACKGROUND

For families with infants, using a child stroller as an auxiliary care tool during traveling becomes quite common and convenient.

In order to meet requirements of users for practicability and convenience of the child stroller, a frame of the child stroller is usually provided with a fold locking mechanism, and the user can keep the child stroller in an unfolded state or a folded state through the fold locking mechanism. In addition, in order to improve applicability of the child stroller, a handlebar frame of the child stroller is further provided with a height adjustment locking mechanism, and the user can adjust a height of the handlebar frame through the height adjustment locking mechanism to meet grip requirements of different users. Currently, the fold locking mechanism and the height adjustment locking mechanism of a common child stroller are two independent mechanisms, and adjustment of the state of the frame and the height of the handlebar frame is realized through two independent operating mechanisms. However, such a design easily causes inconvenience in operation for the user.

### SUMMARY

Accordingly, in order to solve the aforementioned problem, a stroller frame and an unlocking mechanism thereof are provided. The unlocking mechanism is capable of unlocking a fold locking mechanism and a height adjustment locking mechanism.

The present disclosure provides an unlocking mechanism applying for a stroller frame. The stroller frame includes an upper handlebar frame, a lower handlebar frame, a wheel frame, a height adjustment locking mechanism, and a fold locking mechanism. The upper handlebar frame and the lower handlebar frame are restricted from moving relatively or allowed to move relatively through the height adjustment locking mechanism. The lower handlebar frame and the wheel frame are pivotally connected and restricted from pivoting relatively or allowed to pivot relatively through the fold locking mechanism. The unlocking mechanism includes a first unlocking member, a second unlocking member and an operating member. The first unlocking member is rotatably arranged on the stroller frame. The first unlocking member is drivingly connected to the fold locking mechanism to allow the lower handlebar frame to pivot relative to the wheel frame. The second unlocking member is rotatably arranged on the stroller frame. The second unlocking member is drivingly connected to the height adjustment locking mechanism to allow the upper handlebar frame to move relative to the lower handlebar frame. The operating member is movably arranged on the stroller frame and adapted to drive either of the first unlocking member and the second unlocking member to rotate.

In the aforementioned unlocking mechanism, the first unlocking member is rotatably arranged on the stroller frame and drivingly connected to the fold locking mechanism, the second unlocking member is rotatably arranged on the stroller frame and drivingly connected to the height adjustment locking mechanism, the operating member is movable and configured to drive either of the first unlocking member and the second unlocking member to rotate, the fold locking mechanism can allow the lower handlebar frame to pivot relative to the wheel frame, and the height adjustment locking mechanism can allow the upper handlebar frame to slide relative to the lower handlebar frame, therefore, a user can control the first unlocking member to rotate by driving the operating member to move, and then indirectly control the fold locking mechanism, so that the stroller frame can switch between an unfolded state and a locked state. Meanwhile, the user can also control the second unlocking member to rotate by driving the operating member to move, and then indirectly control the height adjustment locking mechanism, so that a height of the stroller frame can be adjusted. Since the user can control different locking mechanisms only by operating the aforementioned unlocking mechanism, convenience of an operation of the user is improved.

In an embodiment, the unlocking mechanism further includes a safety lock. The safety lock is movably arranged on the stroller frame and switchable between a first position and a second position. When the safety lock is located at the first position, the operating member is drivingly connected to the first unlocking member through the safety lock. When the safety lock is located at the second position, the operating member is drivingly connected to the second unlocking member through the safety lock.

In an embodiment, the safety lock includes a toggle member, a first linkage member and a second linkage member. The toggle member is movably arranged on the stroller frame along a first direction and switchable between the first position and the second position. The first linkage member is movably connected to the toggle member along a second direction and drivingly connected to the first unlocking member. The second linkage member is movably connected to the toggle member along the second direction and drivingly connected to the second unlocking member. The first direction intersects with the second direction, and the operating member is movable relative to the stroller frame along the second direction. When the toggle member is located at the first position, the operating member is capable of being operated to push against the first linkage member to move, such that the first unlocking member is rotated. When the toggle member is located at the second position, the operating member is capable of being operated to push against the second linkage member to move, such that the second unlocking member is rotated.

In an embodiment, the first linkage member has a first abutting portion, the second linkage member has a second abutting portion, and the operating member has a first driving portion and a second driving portion which are spaced apart. When the toggle member is located at the first position, the first abutting portion is aligned with the first driving portion, and the second abutting portion is misaligned with the second driving portion. When the toggle member is located at the second position, the second abutting portion is aligned with the second driving portion, and the first abutting portion is misaligned with the first driving portion.

In an embodiment, the operating member further has a third driving portion and a fourth driving portion, and the third driving portion and the fourth driving portion are spaced apart and located between the first driving portion and the second driving portion. The first linkage member and the second linkage member are spaced apart, and a third avoidance portion is formed between the first linkage member and the second linkage member. The first linkage member further has a third abutting portion, and the second linkage member further has a fourth abutting portion. When the toggle member is located at the first position, the third abutting portion is aligned with the third driving portion, and the fourth driving portion is aligned with the third avoidance portion. When the toggle member is located at the second position, the fourth abutting portion is aligned with the fourth driving portion, and the third driving portion is aligned with the third avoidance portion.

In an embodiment, a first avoidance portion is formed between the first abutting portion and the third abutting portion. A second avoidance portion is formed between the second abutting portion and the fourth abutting portion. When the toggle member is located at the first position and the operating member is operated, the second avoidance portion is configured to avoid the second driving portion. When the toggle member is located at the second position and the operating member is operated, the first avoidance portion is configured to avoid the first driving portion.

In an embodiment, one of the first linkage member and the first unlocking member has a first guide concave portion, and the other has a first engaging convex portion. The first engaging convex portion is slidably arranged in the first guide concave portion, and the first guide concave portion extends along the first direction. One of the second linkage member and the second unlocking member has a second guide concave portion, and the other has a second engaging convex portion. The second engaging convex portion is slidably arranged in the second guide concave portion, and the second guide concave portion extends along the first direction.

In an embodiment, the unlocking mechanism further includes a first elastic member. The first elastic member abuts between the stroller frame and the toggle member and is configured to provide an elastic restoring force for the toggle member, so as to keep the toggle member at the first position or the second position.

In an embodiment, the operating member has an initial position and an unlock position. When the operating member is located at the initial position, the operating member is capable of being operated to move to push against the first linkage member or the second linkage member to move. When the operating member is located at the unlock position, the operating member pushes against the first linkage member or the second linkage member.

In an embodiment, the unlocking mechanism further includes a second elastic member. The second elastic member abuts between the stroller frame and the operating member and is configured to provide an elastic restoring force for the operating member, so as to keep the operating member at the initial position.

In an embodiment, the operating member has an initial position and an unlock position. One of the first unlocking member and the stroller frame is provided with a first stop concave portion, and the other is provided with a first stop convex portion. The first stop convex portion abuts against one side wall of the first stop concave portion when the operating member switches to the initial position, and the first stop convex portion abuts against the other corresponding side wall of the first stop concave portion when the operating member switches to the unlock position. One of the second unlocking member and the stroller frame is provided with a second stop concave portion, and the other is provided with a second stop convex portion. The second stop convex portion abuts against one side wall of the second stop concave portion when the operating member switches to the initial position, and the second stop convex portion abuts against the other corresponding side wall of the second stop concave portion when the operating member switches to the unlock position.

In an embodiment, the first unlocking member is provided with a first connecting portion. The first connecting portion is misaligned with a rotation center of the first unlocking member, and the first connecting portion is configured to be connected to the fold locking mechanism. The second unlocking member is provided with a second connecting portion. The second connecting portion is misaligned with a rotation center of the second unlocking member, and the second connecting portion is configured to be connected to the height adjustment locking mechanism.

The present disclosure further provides a stroller frame, which includes an upper handlebar frame, a lower handlebar frame, a wheel frame, a fold locking mechanism, a height adjustment locking mechanism, and the unlocking mechanism as mentioned above. The upper handlebar frame and the lower handlebar frame are restricted from moving relatively or allowed to move relatively through the height adjustment locking mechanism. The lower handlebar frame and the wheel frame are pivotally connected and restricted from pivoting relatively or allowed to pivot relatively through the fold locking mechanism. The unlocking mechanism is arranged on the handlebar frame or the wheel frame and drivingly connected to the fold locking mechanism and the height adjustment locking mechanism, so as to allow the lower handlebar frame to pivot relative to the wheel frame and the upper handlebar frame to move relative to the lower handlebar frame.

In an embodiment, the fold locking mechanism includes a first locking member and a fixing member. The fixing member is provided with a locking concave portion and mounted on one of the wheel frame and the lower handlebar frame, and the first locking member is movably arranged on the other of the wheel frame and the lower handlebar frame and operably connected to the first unlocking member. When the first locking member is inserted into the locking concave portion, the lower handlebar frame is restricted from pivoting relative to the wheel frame, and when the first locking member is withdrawn from the locking concave portion, the lower handlebar frame is capable of pivoting relative to the wheel frame.

In an embodiment, the fold locking mechanism further includes a first traction member. The first traction member is connected between the first unlocking member and the first locking member, and the first unlocking member drives the first locking member to withdraw from the locking concave portion through the first traction member.

In an embodiment, the height adjustment locking mechanism includes a handlebar locking assembly and a locking hole. One of the upper handlebar frame and the lower handlebar frame is provided with the locking hole, the other is provided with the handlebar locking assembly, and the handlebar locking assembly is capable of being engaged with the locking hole to lock the upper handlebar frame and the lower handlebar frame.

In an embodiment, the handlebar locking assembly is arranged on the upper handlebar frame, and the handlebar locking assembly includes a moving member and a second locking member. The moving member is movably arranged on the upper handlebar frame and operably connected to the second unlocking member. The moving member is provided with a guide groove, and the guide groove extends obliquely relative to a moving direction of the moving member. The second locking member has a guide column. The guide column extends into the guide groove and is slidably engaged with the guide groove, so as to extend into or withdraw from the locking hole.

In an embodiment, the height adjustment locking mechanism further includes a second traction member. The second traction member is connected between the second unlocking member and the moving member, and the second unlocking member drives the moving member to move through the second traction member, so as to drive the second locking member to withdraw from the locking hole.

In an embodiment, a plurality of locking holes are provided, and the plurality of locking holes are arranged at intervals along a direction of sliding of the upper handlebar frame relative to the lower handlebar frame.

The present disclosure provides an unlocking mechanism applying for a stroller frame. The stroller frame includes a handlebar frame, a wheel frame, a direction-change locking mechanism, and a fold locking mechanism. The handlebar frame is rotatably arranged on the wheel frame. Both the direction-change locking mechanism and the fold locking mechanism are arranged between the handlebar frame and the wheel frame. The handlebar frame is capable of being restricted from rotating relative to the wheel frame for direction changing or allowed to rotate relative to the wheel frame for direction changing through the direction-change locking mechanism. The handlebar frame is further capable of being restricted from rotating relative to the wheel frame for folding or allowed to rotate relative to the wheel frame for folding through the fold locking mechanism. The unlocking mechanism includes a first unlocking member, a second unlocking member and an operating member. The first unlocking member is rotatably arranged on the stroller frame and drivingly connected to the direction-change locking mechanism to allow the handlebar frame to rotate relative to the wheel frame for direction changing. The second unlocking member is rotatably arranged on the stroller frame and drivingly connected to the fold locking mechanism to allow the handlebar frame to rotate relative to the wheel frame for folding. The operating member is movably arranged on the stroller frame and selectively drives the first unlocking member or the second unlocking member to rotate.

In an embodiment, the unlocking mechanism further includes a safety lock. The safety lock is movably arranged on the stroller frame and switchable between a first position and a second position. When the safety lock is located at the first position, the operating member is drivingly connected to the first unlocking member through the safety lock. When the safety lock is located at the second position, the operating member is drivingly connected to the second unlocking member through the safety lock.

In an embodiment, the safety lock includes a first linkage member, a second linkage member and a toggle member. The first linkage member is drivingly connected to the first unlocking member. The second linkage member is drivingly connected to the second unlocking member. The toggle member is connected to the first linkage member and the second linkage member. The toggle member is movably arranged on the stroller frame and switchable between the first position and the second position, so as to drive the first linkage member and the second linkage member to move along a first direction. When the toggle member is located at the first position, the operating member is operated to push against the first linkage member to move along a second direction, such that the first unlocking member is rotated. When the toggle member is located at the second position, the operating member is operated to push against the second linkage member to move along the second direction, such that the second unlocking member is rotated. The first direction intersects with the second direction.

In an embodiment, the first unlocking member is provided with a first connecting portion, the first connecting portion is misaligned with a rotation center of the first unlocking member, and the first connecting portion is configured to be connected to the direction-change locking mechanism. The second unlocking member is provided with a second connecting portion, the second connecting portion is misaligned with a rotation center of the second unlocking member, and the second connecting portion is configured to be connected to the fold locking mechanism.

The present disclosure further provides a stroller frame having an unfolded state and a folded state, which includes a wheel frame, a handlebar frame, a direction-change locking mechanism, a fold locking mechanism and the unlocking mechanism as mentioned above. The handlebar frame is rotatably arranged on the wheel frame. The direction-change locking mechanism is arranged between the handlebar frame and the wheel frame. The handlebar frame is capable of being restricted from rotating relative to the wheel frame for direction changing or allowed to rotate relative to the wheel frame for direction changing through the direction-change locking mechanism. The fold locking mechanism is arranged between the handlebar frame and the wheel frame. The handlebar frame is capable of being restricted from rotating relative to the wheel frame for folding or allowed to rotate relative to the wheel frame for folding through the fold locking mechanism. The unlocking mechanism is arranged on the handlebar frame and drivingly connected to the fold locking mechanism and the unlocking mechanism, so as to allow the handlebar frame to rotate relative to the wheel frame for direction changing or folding.

In an embodiment, the handlebar frame and the wheel frame are pivotally connected at a first pivot point, so that the handlebar frame has a first use position and a second use position relative to the wheel frame. The direction-change locking mechanism includes a first locking member, a first engaging member, and a second engaging member. The first engaging member and the second engaging member are spaced apart on the wheel frame along a circumferential direction of the first pivot point, and the first locking member is arranged on the handlebar frame and adapted to be engaged with the first engaging member or the second engaging member. When the first locking member is engaged with the first engaging member, the handlebar frame is located at the first use position, and when the first locking member is engaged with the second engaging member, the handlebar frame is located at the second use position.

In an embodiment, when the handlebar frame is at the first use position, a top portion of the handlebar frame is located on a first side of the wheel frame. When the handlebar frame is at the second use position, the top portion of the handlebar frame is located on a second side of the wheel frame. The first side and the second side are arranged opposite to each other relative to a travel direction of the stroller frame.

In an embodiment, the first locking member has a locking portion, and each of the first engaging member and the second engaging member is provided with an engaged locking portion adapted to be engaged with the locking portion. The first locking member is movably arranged on the handlebar frame and has a first lock position and a first unlock position. When the first locking member is at the first lock position, the locking portion is engaged with the engaged locking portion to restrict the handlebar frame from switching between the first use position and the second use position. When the first locking member is at the first unlock position, the locking portion is disengaged from the engaged locking portion to allow the handlebar frame to switch between the first use position and the second use position.

In an embodiment, the direction-change locking mechanism further includes a first driving member and a first traction member. The first driving member is movably arranged on the handlebar frame and connected to the first locking member. The first traction member is connected to the first driving member and the first unlocking member. When the first unlocking member rotates, the first unlocking member drives the first driving member to move through the first traction member, so as to drive the first locking member to move from the first lock position to the first unlock position.

In an embodiment, the handlebar frame and the wheel frame are pivotally connected at a first pivot point, so that the handlebar frame has a first use position and a third use position relative to the wheel frame. When the handlebar frame is at the first use position, the handlebar frame gets away from the wheel frame around the first pivot point, so as to cause the stroller frame to be in the unfolded state. When the handlebar frame is at the third use position, the handlebar frame gets close to the wheel frame around the first pivot point, so as to cause the stroller frame to be in the folded state.

In an embodiment, the fold locking mechanism includes a second locking member. The second locking member is movable relative to the handlebar frame and has a second lock position and a second unlock position. The wheel frame includes a rear wheel frame and a first transmission member. One end of the first transmission member is pivotally connected to the rear wheel frame, and the other end of the first transmission member is pivotally connected to the handlebar frame at the first pivot point. When the second locking member is at the second lock position, the second locking member is engaged with the first transmission member to restrict the handlebar frame from pivoting relative to the first transmission member, thereby restricting the handlebar frame from switching between the first use position and the third use position. When the second locking member is at the second unlock position, the second locking member is disengaged from the first transmission member to allow the handlebar frame to pivot relative to the first transmission member, thereby allowing the handlebar frame to switch between the first use position and the third use position.

In an embodiment, the first transmission member has a first concave portion and a second concave portion. When the stroller frame is in the unfolded state, the second locking member is engaged with the first concave portion. When the stroller frame is in the folded state, the second locking member is engaged with the second concave portion.

In an embodiment, the fold locking mechanism further includes: a second driving assembly and a second traction member. The second driving assembly is movably arranged on the handlebar frame and drivingly connected to the second locking member. The second traction member is connected to the second driving assembly and the second unlocking member. When the second unlocking member rotates, the second unlocking member drives the second driving assembly to move through the second traction member, so as to drive the second locking member to move from the second lock position to the second unlock position.

The present disclosure provides an unlocking mechanism applying for a stroller frame. The stroller frame includes a handlebar frame, a wheel frame, a wheel base, and a wheel locking mechanism. The handlebar frame includes an upper handlebar frame, a lower handlebar frame, and a height adjustment locking mechanism arranged between the upper handlebar frame and the lower handlebar frame. The upper handlebar frame and the lower handlebar frame are restricted from moving relatively or allowed to move relatively through the height adjustment locking mechanism. The wheel base is rotatably connected to the wheel frame. The wheel locking mechanism is arranged between the wheel frame and the wheel base and configured to restrict the wheel base from rotating relative to the wheel frame or allow the wheel base to rotate relative to the wheel frame. The unlocking mechanism includes a first unlocking member, a second unlocking member and an operating member. The first unlocking member is rotatably arranged on the stroller frame and drivingly connected to the wheel locking mechanism to allow the wheel base to rotate relative to the wheel frame. The second unlocking member is rotatably arranged on the stroller frame and drivingly connected to the height adjustment locking mechanism to allow the upper handlebar frame to move relative to the lower handlebar frame. The operating member is movably arranged on the stroller frame and selectively drives the first unlocking member or the second unlocking member to rotate.

In an embodiment, the first unlocking member is provided with a first connecting portion. The first connecting portion is misaligned with a rotation center of the first unlocking member, and the first connecting portion is configured to be connected to the wheel locking mechanism. The second unlocking member is provided with a second connecting portion. The second connecting portion is misaligned with a rotation center of the second unlocking member, and the second connecting portion is configured to be connected to the height adjustment locking mechanism.

The present disclosure further provides a stroller frame, which includes a handlebar frame, a wheel frame, a wheel base, a wheel locking mechanism, and the unlocking mechanism as mentioned above. The handlebar frame includes an upper handlebar frame, a lower handlebar frame, and a height adjustment locking mechanism arranged between the upper handlebar frame and the lower handlebar frame. The upper handlebar frame and the lower handlebar frame are restricted from moving relatively or allowed to move relatively through the height adjustment locking mechanism. The wheel base is rotatably connected to the wheel frame. The wheel locking mechanism is arranged between the wheel frame and the wheel base and configured to restrict the wheel base from rotating relative to the wheel frame or allow the wheel base to rotate relative to the wheel frame. The unlocking mechanism is arranged on the handlebar frame and drivingly connected to the wheel locking mechanism and the height adjustment locking mechanism, so as to allow the wheel base to rotate relative to the wheel frame and the upper handlebar frame to move relative to the lower handlebar frame.

In an embodiment, the wheel locking mechanism includes a first locking concave portion, a first locking member and a first traction member. The first locking concave portion is arranged in the wheel base. The first locking member is movably arranged on the wheel frame and adapted to be locked and engaged with the first locking concave portion. The first traction member is connected between the first unlocking member and the first locking member. When the first locking member extends into the first locking concave portion for locking and engagement, the wheel base is restricted from rotating relative to the wheel frame, and when the first unlocking member drives the first locking member to withdraw from the first locking concave portion for disengagement through the first traction member, the wheel base is allowed to rotate relative to the wheel frame.

In an embodiment, the first traction member is configured within the handlebar frame and the wheel frame and passes through the height adjustment locking mechanism.

In an embodiment, the height adjustment locking mechanism includes a support base. The support base is provided with a first penetrating channel. The first penetrating channel is a U-shaped channel, and an end of the first traction member away from the first unlocking member extends into one opening of the U-shaped channel and extends out of the other opening of the U-shaped channel, so that the first traction member is arranged around the support base.

In an embodiment, the upper handlebar frame is slidable relative to the lower handlebar frame. The height adjustment locking mechanism includes a second engaged locking portion, a second locking assembly and a second traction member. The second engaged locking portion is arranged on the lower handlebar frame. The second locking assembly is movably arranged on the upper handlebar frame and adapted to be locked and engaged with the second engaged locking portion. The second traction member is connected between the second unlocking member and the second locking assembly. When the second locking assembly extends into the second engaged locking portion for locking and engagement, the upper handlebar frame is restricted from sliding relative to the lower handlebar frame. When the second unlocking member drives the second locking assembly to withdraw from the second engaged locking portion for disengagement through the second traction member, the upper handlebar frame is allowed to slide relative to the lower handlebar frame.

In an embodiment, the height adjustment locking mechanism further includes a support base. The support base is provided with a first penetrating channel and a second penetrating channel. The first penetrating channel is a U-shaped channel. The second penetrating channel is a linear channel. The second traction member is received in the linear channel. The wheel locking mechanism includes a first traction member. The first traction member is configured within the wheel frame and the handlebar frame and passes through the U-shaped channel.

In an embodiment, the height adjustment locking mechanism includes a first connecting base, a second connecting base and a second locking member. The first connecting base is connected to the upper handlebar frame. The second connecting base is connected to the lower handlebar frame and pivotally connected to the first connecting base. The second locking member is movably arranged between the first connecting base and the second connecting base axially to restrict or allow relative pivoting of the first connecting base and the second connecting base.

In an embodiment, the height adjustment locking mechanism further includes a driving member and a second traction member. The driving member is movably arranged on a side of the first connecting base opposite to the second connecting base, or a side of the second connecting base opposite to the first connecting base. The driving member axially passes through the first connecting base or the second connecting base and abuts against the second locking member to drive the second locking member to move. The second traction member is connected to the driving member and the second unlocking member. When the second unlocking member is operated, the second traction member drives the second locking member to move through the driving member, so as to allow the first connecting base to pivot relative to the second connecting base.

### BRIEF DESCRIPTION OF THE DRAWINGS

The accompanying drawings which form part of the present disclosure are used to provide further understanding of the present disclosure, and schematic embodiments of the present disclosure and the description thereof are used to explain the present disclosure and do not constitute improper definition of the present disclosure.

In order to illustrate the technical solutions in the embodiments of the present disclosure more clearly, the drawings required for describing the embodiments will be described briefly. Apparently, the following described drawings are merely for some embodiments of the present disclosure, and other drawings can be derived from these drawings by those of ordinary skill in the art without any creative effort.

Furthermore, the drawings are not drawn to scale of 1:1, and the relative sizes of various elements are drawn in the drawings by way of example only and not necessarily to true scale. In the drawings:
FIG. 1 schematically shows a perspective view of a stroller frame according to an embodiment of the present disclosure;
FIG. 2 schematically shows a perspective view of the stroller frame according to an embodiment of the present disclosure from another perspective;
FIG. 3 is a sectional view taken along line U1-U1 of FIG. 1, where a first locking member is inserted into a locking concave portion;
FIG. 4 is a sectional view taken along line U1-U1 of FIG. 1, where the first locking member withdraws from the locking concave portion;
FIG. 5 is a perspective view of a handlebar frame of the stroller frame shown in FIG. 1;
FIG. 6 is a perspective view of the handlebar frame of the stroller frame shown in FIG. 1 from another perspective;
FIG. 7 is a perspective view of an upper handlebar frame of the handlebar frame shown in FIG. 5, where a moving member and a second locking member of a height adjustment locking mechanism are assembled;
FIG. 8 is a perspective view of the upper handlebar frame of the handlebar frame shown in FIG. 5, where the moving member and the second locking member of the height adjustment locking mechanism are separated;
FIG. 9 is a schematic enlarged structural diagram of circle A in FIG. 2;
FIG. 10 is an exploded structural view of an unlocking mechanism on the handlebar frame shown in FIG. 5;
FIG. 11 is a schematic enlarged structural diagram of circle B in FIG. 10;
FIG. 12 is a schematic diagram of a partial structure in the unlocking mechanism, where a toggle member is at a first position and an operating member is at an initial position;
FIG. 13 is a schematic diagram of the partial structure in the unlocking mechanism, where the toggle member is at the first position and the operating member is at an unlock position;
FIG. 14 is a schematic diagram of the partial structure in the unlocking mechanism, where the toggle member is at a second position and the operating member is at the initial position;
FIG. 15 is a schematic diagram of the partial structure in the unlocking mechanism, where the toggle member is at the second position and the operating member is at the unlock position;
FIG. 16 is a perspective view of the stroller frame in an unfolded state according to an embodiment of the present disclosure, where the second locking member is at a second lock position;
FIG. 17 is a perspective view when the stroller frame is in the unfolded state according to an embodiment of the present disclosure, where the second locking member is at a second unlock position;
FIG. 18 is a side view of the stroller frame shown in FIG. 16;
FIG. 19 is a schematic enlarged structural diagram of circle A shown in FIG. 16;
FIG. 20 is a schematic enlarged structural diagram of circle B shown in FIG. 17;
FIG. 21 is a sectional view of the handlebar frame of the stroller frame shown in FIG. 16, where the operating member is at the initial position;
FIG. 22 is a sectional view of the handlebar frame of the stroller frame shown in FIG. 16, where the operating member is at an unlock position and a first unlocking member rotates;
FIG. 23 is a perspective view of the stroller frame in a folded state according to an embodiment of the present disclosure;
FIG. 24 is a side view of the stroller frame in the folded state according to an embodiment of the present disclosure;
FIG. 25 is a sectional view taken along line U1-U1 of FIG. 18;
FIG. 26 is a schematic enlarged structural diagram of circle C shown in FIG. 23;
FIG. 27 is a schematic enlarged structural diagram of circle D shown in FIG. 21;
FIG. 28 is a sectional view of the handlebar frame of the stroller frame shown in FIG. 16, where the operating member is at the unlock position and a second unlocking member rotates;
FIG. 29 is a perspective view of the unlocking mechanism of the stroller frame shown in FIG. 16;
FIG. 30 is a schematic diagram of a partial structure of the unlocking mechanism shown in FIG. 29;
FIG. 31 is an exploded view of the unlocking mechanism shown in FIG. 29;
FIG. 32 is a sectional view of the unlocking mechanism shown in FIG. 30;
FIG. 33 is a perspective view of the stroller frame in the unfolded state according to an embodiment of the present disclosure;
FIG. 34 is a sectional view of the stroller frame shown in FIG. 33;
FIG. 35 is a perspective view of the stroller frame shown in FIG. 33 in the folded state;
FIG. 36 is a sectional view of the stroller frame shown in FIG. 34;
FIG. 37 is a sectional view of the handlebar frame of the stroller frame shown in FIG. 33;
FIG. 38 is a perspective view of the unlocking mechanism of the stroller frame shown in FIG. 33;
FIG. 39 is a schematic diagram of a partial structure of the unlocking mechanism shown in FIG. 38;
FIG. 40 is an exploded view of the unlocking mechanism shown in FIG. 38;
FIG. 41 is a sectional view of the unlocking mechanism shown in FIG. 37, where the first unlocking member is rotated;
FIG. 42 is a sectional view of the unlocking mechanism shown in FIG. 37, where the second unlocking member is rotated;
FIG. 43 is a sectional view of the unlocking mechanism shown in FIG. 39;
FIG. 44 is a perspective view of the handlebar frame in another embodiment;
FIG. 45 is a perspective view of the handlebar frame of the stroller frame according to an embodiment of the present disclosure;
FIG. 46 is a side view of the handlebar frame shown in FIG. 45;
FIG. 47 is an exploded view of a partial structure of the handlebar frame shown in FIG. 45;
FIG. 48 is a sectional view of the handlebar frame shown in FIG. 45, where the second locking member is at a lock position;
FIG. 49 is a sectional view of a partial structure of the handlebar frame shown in FIG. 45, where the second locking member is at an unlock position; and
FIG. 50 is a sectional view of a partial structure of the handlebar frame according to another embodiment of the present disclosure.

### Reference signs

1000X: stroller frame; 100X: unlocking mechanism; 110X: first unlocking member; 111X: first connecting portion; 112X: first stop convex portion; 120X: second unlocking member; 121X: second connecting portion; 122X: second stop convex portion; 130X: operating member; 131X: first driving portion; 132X: second driving portion; 133X: third driving portion; 134X: fourth driving portion; 135X: limiting column; 140X: safety lock; 141X: toggle member; 1411X: pushing portion; 142X: first linkage member; 1421X: first abutting portion; 1422X: third abutting portion; 1423X: first avoidance portion; 143X: second linkage member; 1431X: second abutting portion; 1432X: fourth abutting portion; 1433X: second avoidance portion; 144X: third avoidance portion; 150X: first elastic member; 160X: second elastic member; 171X: first fixing cover; 171X1: operating hole; 172X: second fixing cover; 200X: handlebar frame; 210X: upper handlebar frame; 211X: first support tube; 212X: pushing handle tube; 2121X: first stop concave portion; 2122X: second stop concave portion; 220X: lower handlebar frame; 221X: second support tube; 300X: wheel frame; 310X: front wheel frame; 311X: front rod member; 312X: front cross rod; 313X: front wheel base; 320X: rear wheel frame; 321X: rear rod member; 322X: reinforcing rod; 323X: rear wheel base; 400X: height adjustment locking mechanism; 410X: handlebar locking assembly; 411X: moving member; 4111X: guide groove; 412X: second locking member; 413X: support base; 414X: fourth elastic member; 420X: locking hole; 430X: second traction member; 500X: fold locking mechanism; 510X: first locking member; 520X: fixing member; 521X: locking concave portion; 530X: first traction member; 610X: front wheel; 620X: rear wheel; F1: first direction; F2: second direction;
1000Y: stroller frame; 100Y: handlebar frame; 110Y: support tube; 120Y: pushing handle tube; 130Y: fixing support base; 140Y: mounting base; 200Y: wheel frame; 210Y: front wheel frame; 220Y: rear wheel frame; 230Y: first transmission member; 240Y: armrest member; 250Y: second transmission member; 260Y: third transmission member; 270Y: wheel; 300Y: direction-change locking mechanism; 310Y: first locking member; 311Y: locking portion; 320Y: first engaging member; 330Y: second engaging member; 301Y: engaged locking portion; 340Y: first driving member; 350Y: first traction member; 360Y: first connecting member; 370Y: first reset member; 400Y: fold locking mechanism; 410Y: second locking member; 420Y: second driving assembly; 421Y: second sliding sleeve; 422Y: second driving member; 430Y: second traction member; 440Y: second reset member; 450Y: second connecting member; 500Y: unlocking mechanism; 510Y: first unlocking member; 511Y: first connecting portion; 520Y: second unlocking member; 521Y: second connecting portion; 530Y: operating member; 531Y: first driving portion; 532Y: second driving portion; 533Y: third driving portion; 534Y: fourth driving portion; 540Y: safety lock; 541Y: first linkage member; 5411Y: first abutting portion; 5412Y: third abutting portion; 542Y: second linkage member; 5421Y: second abutting portion; 5422Y: fourth abutting portion; 543Y: toggle member; 5431Y: pushing portion; 544Y: third avoidance portion; 550Y: third reset member; 560Y: fourth reset member; 571Y: first fixing cover; 5711Y: operating hole; 572Y: second fixing cover; A1: first pivot point; A2: second pivot point; A3: third pivot point; A4: fourth pivot point; A5: fifth pivot point; A6: sixth pivot point; F1: first direction; F2: second direction;
1000Z: stroller frame; 100Z: handlebar frame; 110Z: upper handlebar frame; 111Z: first support tube; 112Z: pushing handle tube; 120Z: lower handlebar frame; 121Z: second support tube; 130Z: height adjustment locking mechanism; 131Z: second locking assembly; 1311Z: second locking member; 13111Z: locking tooth; 1312Z: driving member; 132Z: first engaged locking portion; 133Z: second engaged locking portion; 1331Z: bottom second engaged locking portion; 1332Z: middle second engaged locking portion; 1333Z: top second engaged locking portion; 1341Z: cover; 1342Z: penetrating space; 135Z: third reset member; 136Z: support base; 1361Z: first guide portion; 1363Z: first pushing inclined surface; 1364Z: second pushing inclined surface; 1365Z: first penetrating channel; 1366Z: second penetrating channel; 137Z: second traction member; 138Z: first connecting base; 1381Z: first chamber; 1382Z: first locking groove; 139Z: second connecting base; 1391Z: second chamber; 140Z: abutting member; 200Z: wheel frame; 210Z: front wheel frame; 211Z: front rod member; 212Z: front cross rod; 220Z: rear wheel frame; 221Z: rear rod member; 222Z: rear cross rod; 230Z: wheel base; 230AZ: front wheel base; 230BZ: rear wheel base; 240Z: wheel; 240AZ: front wheel; 240BZ: rear wheel; 300Z: unlocking mechanism; 310Z: first unlocking member; 311Z: first connecting portion; 320Z: second unlocking member; 321Z: second connecting portion; 330Z: operating member; 331Z: first driving portion; 332Z: second driving portion; 333Z: third driving portion; 334Z: fourth driving portion; 340Z: mounting base; 350Z: safety lock; 351Z: first linkage member; 3511Z: first abutting portion; 3512Z: third abutting portion; 352Z: second linkage member; 3521Z: second abutting portion; 3522Z: fourth abutting portion; 353Z: toggle member; 3531Z: pushing portion; 354Z: third avoidance portion; 360Z: fourth reset member; 370Z: fifth reset member; 381Z: first fixing cover; 3811Z: operating hole; 382Z: second fixing cover; 400Z: first pivot base; 500Z: wheel locking mechanism; 510Z: first locking member; 520Z: first locking concave portion; 530Z: second reset member; 540Z: first traction member; 600Z: handlebar fold locking mechanism; 610Z: engaging member; 620Z: second locking concave portion; 630Z: fixing base; 640Z: first reset member; α1: first included angle; α2: second included angle; α3: third included angle; α4: fourth included angle; F1: first direction; F2: second direction; .

### DETAILED DESCRIPTION

In order to make the aforementioned objects, features and advantages of the present application more apparent, the embodiments of the present application are described below in detail with reference to the accompanying drawings. In the following description, numerous specific details are set forth, so as to provide a thorough understanding of the present application. However, the present application may be implemented in many ways different from those described herein, those skilled in the art may make similar improvements without departing from the essence of the present application, and therefore, the present application is not limited to the examples disclosed below.

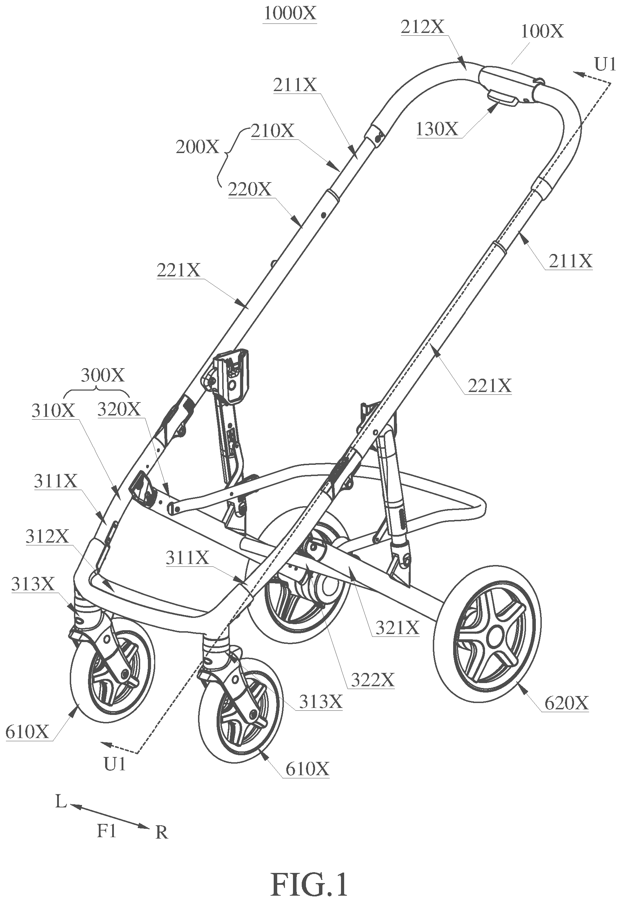

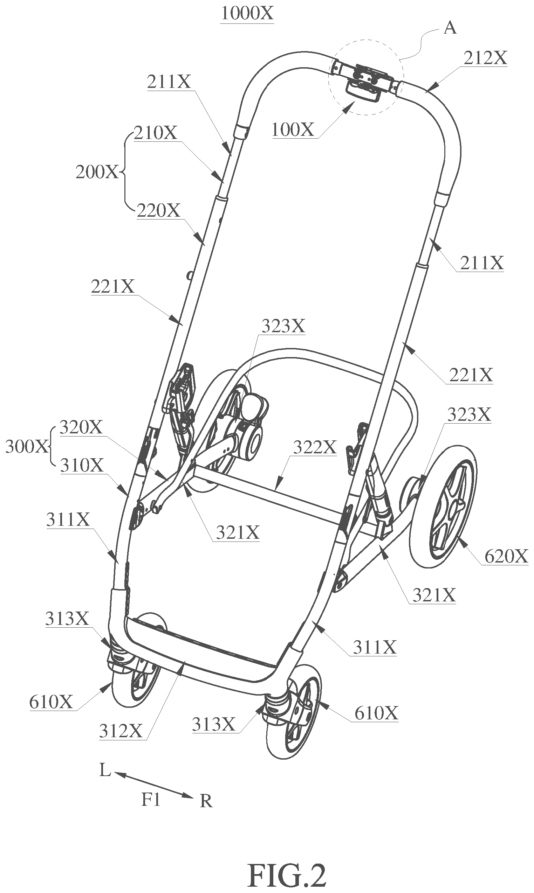

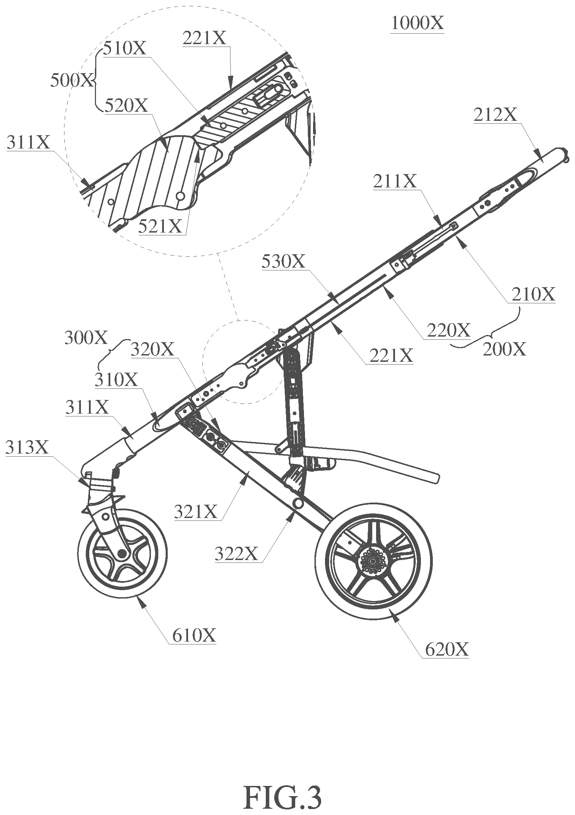

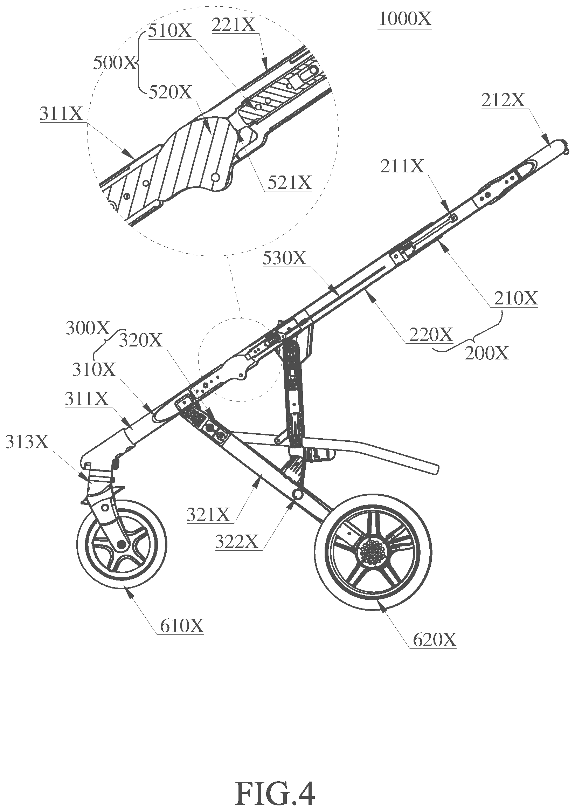

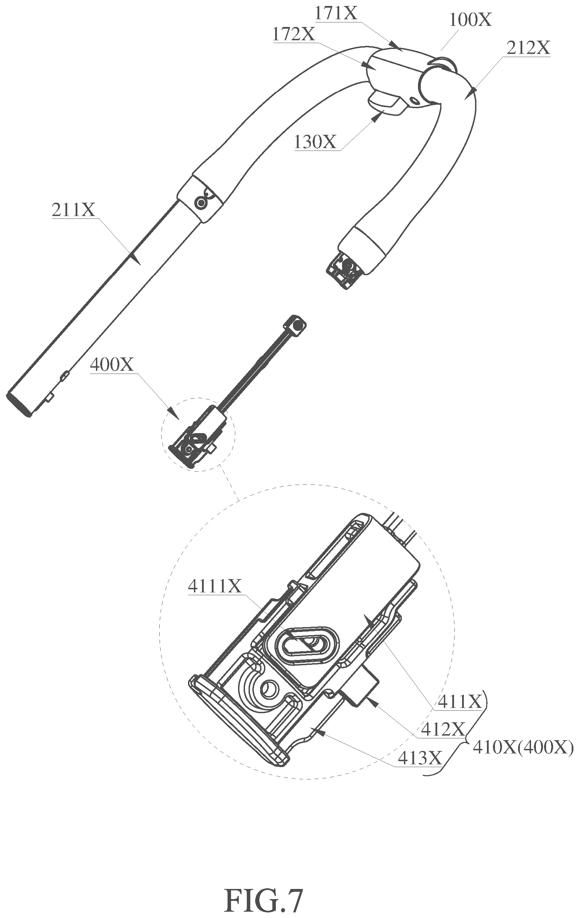

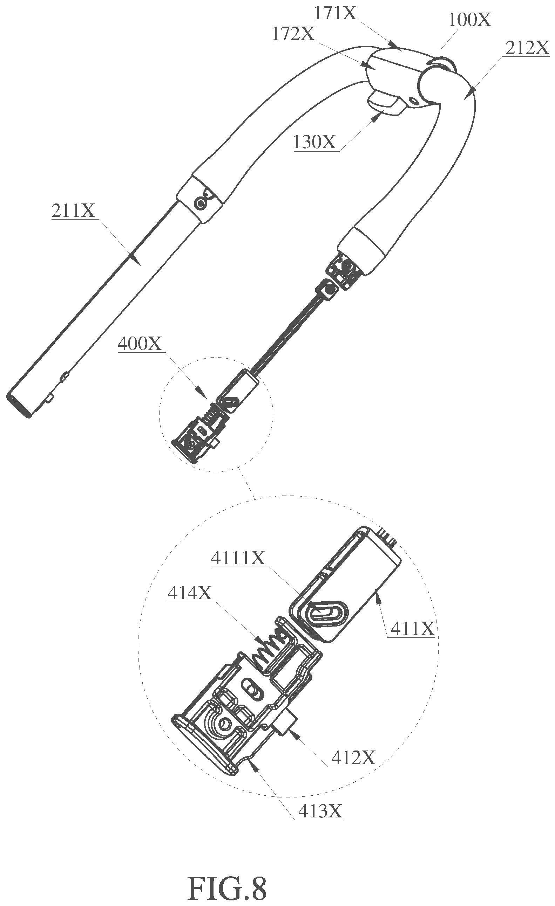

FIG. 1 and FIG. 2 show a stroller frame 1000X according to some embodiments of the present invention, and an overall structure of the stroller frame 1000X is substantially bilaterally symmetric, and may include a handlebar frame 200X, a wheel frame 300X, a height adjustment locking mechanism 400X (see FIG. 7 and FIG. 8), a fold locking mechanism 500X (see FIG. 3 and FIG. 4), and an unlocking mechanism 100X according to some embodiments of the present invention. The handlebar frame 200X, the wheel frame 300X, the height adjustment locking mechanism 400X, the fold locking mechanism 500X, and the unlocking mechanism 100X will be described one by one below while the stroller frame 1000X is described.

With continued reference to FIG. 1 and FIG. 2, the stroller frame 1000X can be used as a frame for a child stroller, a pet stroller, or a cargo stroller. The wheel frame 300X and the handlebar frame 200X are pivotally connected to each other, so that the stroller frame 1000X is switchable between an unfolded state and a folded state (in other embodiments, the folded state can also be called the collapsed state or the closed state). Specifically, the handlebar frame 200X includes an upper handlebar frame 210X and a lower handlebar frame 220X which are movable relative to each other, and an end of the lower handlebar frame 220X away from the upper handlebar frame 210X is pivotally connected to the wheel frame 300X. More specifically, the wheel frame 300X includes a front wheel frame 310X and a rear wheel frame 320X that are pivotally connected, and the lower handlebar frame 220X is pivotally connected to one of the front wheel frame 310X and the rear wheel frame 320X. For example, in this embodiment, the lower handlebar frame 220X is pivotally connected to the front wheel frame 310X. Specific structures of the wheel frame 300X (including the front wheel frame 310X and the rear wheel frame 320X) and the handlebar frame 200X (including the upper handlebar frame 210X and the lower handlebar frame 220X) will be further described one by one below.

Referring to FIG. 1 and FIG. 2, in an embodiment, the front wheel frame 310X has a U-shaped structure, for example, which includes front rod members 311X on left and right sides and a front cross rod 312X connected between the two front rod members 311X. The front cross rod 312X extends roughly along a first direction F1, and the first direction F1 is equivalent to the left-right direction. The front cross rod 312X may also be used as a foot pedal when the stroller frame 1000X is used as the frame of the child stroller.

In an embodiment, at least one front wheel base 313X is mounted at the bottom of the front wheel frame 310X. Specifically, in this embodiment, as shown in FIG. 1 and FIG. 2, two front wheel bases 313X are mounted at the bottom of the front wheel frame 310X, and the two front wheel bases 313X are spaced apart in the left-right direction (i.e., the first direction F1). More specifically, the two front wheel bases 313X are mounted at left and right ends of the front cross rod 312X, and the two front rod members 311X are connected to the front wheel bases 313X on the same sides respectively. Each of the front wheel bases 313X is configured to mount a front wheel 610X, so that the stroller frame 1000X is movable. Certainly, in another alternative embodiment, the front wheel frame 310X may alternatively have other implementations. For example, the front wheel frame 310X only includes two front rod members 311X, one ends of the two front rod members 311X are connected to form a V-shaped structure, and one front wheel base 313X may be centrally mounted at the bottom of the front wheel frame 310X. Alternatively, for example, the front wheel frame 310X includes only two front rod members 311X substantially parallel in the left-right direction, and two front wheel bases 313X are connected to the two front rod members 311X respectively.

It should be noted that, unless otherwise explicitly stated and limited, the orientation terms "left", "right", or the like, of the stroller frame 1000X in the embodiments of the present invention are based on the orientations "left" and "right" of the normally traveling stroller frame 1000X, and the "left" and "right" directions are schematically shown by arrows L and R in the drawings. These orientation terms are used only to make the description of the embodiments of the present invention clearer, and are not used to unduly define the protection scope of the present invention.

In an embodiment, the rear wheel frame 320X may also have a U-shaped structure, for example, which includes two rear rod members 321X on left and right sides and a rear cross rod (not shown in the drawings) connected between the two rear rod members 321X, and the rear cross rod extends along the first direction F1. Certainly, in another alternative embodiment, the rear wheel frame 320X may have other implementations. For example, the rear wheel frame 320X only includes two rear rod members 321X, one ends of the two rear rod members 321X are connected to form a V-shaped structure. Specifically, referring to FIG. 1 and FIG. 2, in this embodiment, the rear wheel frame 320X may include two rear rod members 321X substantially parallel in the left-right direction, and a reinforcing rod 322X connected between the two rear rod members 321X. Thus, structural stability of the rear wheel frame 320X may be improved. Specifically, bottom ends of the two rear rod members 321X are provided with rear wheel bases 323X respectively. Each of the rear wheel bases 323X is configured to mount a rear wheel 620X, so that the stroller frame 1000X is movable. In this embodiment, a size of the rear wheel 620X is larger than that of the front wheel 610X, so that the overall structure of the stroller frame 1000X is more stable. Certainly, in another alternative embodiment, the size of the rear wheel 620X may be the same as or larger than that of the front wheel 610X.

Specifically, in this embodiment, upper ends of the two rear rod members 321X are pivotally connected to the front rod members 311X on the same sides respectively to form pivot points. That is, the rear rod members 321X on the same sides can rotate around the corresponding pivot points relative to the front rod members 311X on the same sides. Thus, a volume of the wheel frame 300X may be changed.

Referring to FIG. 1 and FIG. 2, the handlebar frame 200X includes the upper handlebar frame 210X and the lower handlebar frame 220X which are movable relative to each other. For example, the upper handlebar frame 210X can be in slidably sleeved connection with the lower handlebar frame 220X, so that a height of the handlebar frame 200X relative to the ground can be changed to facilitate grip by users with different heights, thereby improving applicability of the stroller frame 1000X. Specifically, the upper handlebar frame 210X has, for example, a U-shaped structure including two first support tubes 211X and a pushing handle tube 212X connected between the two first support tubes 211X. The first support tubes 211X are straight tubes, and the pushing handle tube 212X has a U-shaped structure and is connected between the two first support tubes 211X and configured to be gripped by the user to push the stroller frame 1000X. More specifically, the lower handlebar frame 220X includes, for example, two second support tubes 221X, upper ends of the two second support tubes 221X are in slidably sleeved connection with, for example, the first support tubes 211X on the same sides respectively, and lower ends of the two second support tubes 221X are pivotally connected to, for example, the front rod members 311X on the same sides respectively. It should be noted that the two second support tubes 221X are in slidably sleeved connection with the first support tubes 211X on the same sides respectively, which includes the following two implementations: the second support tube 221X sleeves the first support tube 211X, and the first support tube 211X sleeves the second support tube 221X. Specifically, in this embodiment, a cooperation principle of the second support tube 221X and the first support tube 211X is specifically described by taking the example that the second support tube sleeves the first support tube.

In order to prevent the handlebar frame 200X from freely rotating relative to the wheel frame 300X to stably keep the stroller frame 1000X in the unfolded state, in an embodiment, the handlebar frame 200X and the wheel frame 300X can be restricted from pivoting relative to each other or allowed to pivot relative to each other through the fold locking mechanism 500X. In addition, in order to prevent the upper handlebar frame 210X from moving freely relative to the lower handlebar frame 220X to stably keep the handlebar frame 200X at a certain height, in an embodiment, the upper handlebar frame 210X and the lower handlebar frame 220X may be restricted from moving relative to each other or allowed to move relative to each other through the height adjustment locking mechanism 400X. Specific structures and working principles of the fold locking mechanism 500X and the height adjustment locking mechanism 400X will be further described one by one below.

Referring to FIG. 3 and FIG. 4, in an embodiment, the fold locking mechanism 500X includes a first locking member 510X and a fixing member 520X. The fixing member 520X is provided with a locking concave portion 521X and mounted on one of the wheel frame 300X and the lower handlebar frame 220X, and the first locking member 510X is movably arranged on the other of the wheel frame 300X and the lower handlebar frame 220X and operably connected to a first unlocking member 110X. For example, when the fixing member 520X is arranged on the wheel frame 300X, the first locking member 510X is movably arranged in the lower handlebar frame 220X. Alternatively, when the fixing member 520X is arranged on the lower handlebar frame 220X, the first locking member 510X is movably arranged on the wheel frame 300X. Specifically, in this embodiment, the fixing member 520X is fixedly arranged in the front rod member 311X of the front wheel frame 310X, and the first locking member 510X is movably arranged in the second support tube 221X of the lower handlebar frame 220X. When the first locking member 510X is inserted into the locking concave portion 521X (see FIG. 3), the lower handlebar frame 220X is restricted from pivoting relative to the wheel frame 300X. When the first locking member 510X withdraws from the locking concave portion 521X (see FIG. 4), the lower handlebar frame 220X can pivot relative to the wheel frame 300X.

In an embodiment, the fold locking mechanism 500X further includes a first traction member 530X (see FIG. 3 and FIG. 4), the first traction member 530X being configured to be connected to the first locking member 510X. Thus, the user may drive the first locking member 510X to withdraw from the locking concave portion 521X by pulling the first traction member 530X.

In an embodiment, the fold locking mechanism 500X further includes a third elastic member (not shown in the drawings), the third elastic member abutting between the first locking member 510X and the lower handlebar frame 220X and being configured to drive the first locking member 510X to be reset, so that the third elastic member constantly has a tendency of insertion into the locking concave portion 521X. Specifically, for example, the third elastic member may be an elastic member having elasticity such as a spring or an elastic sheet.

In this embodiment, in order to improve stability of the fold locking mechanism 500X during locking, two fold locking mechanisms 500X are arranged on the stroller frame 1000X, and one fold locking mechanism 500X is arranged between the front rod member 311X and the second support tube 221X on the same side.

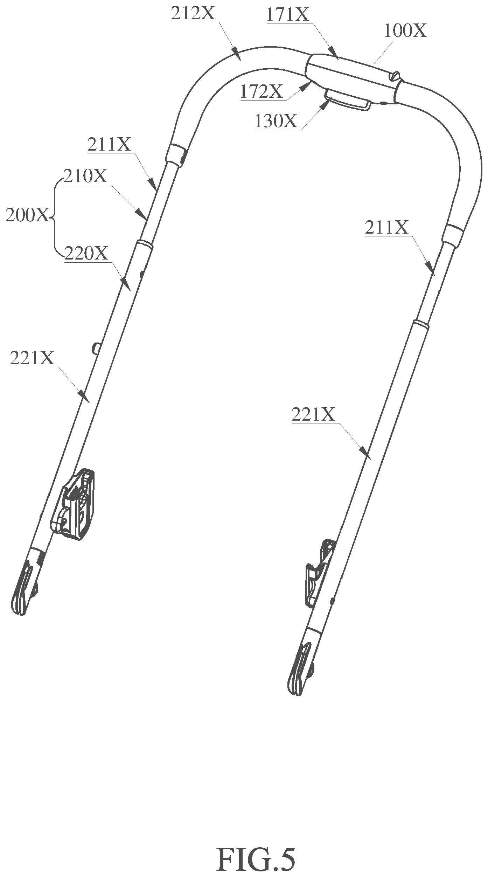

Referring to FIG. 5 to FIG. 8, in an embodiment, the height adjustment locking mechanism 400X includes a handlebar locking assembly 410X and a locking hole 420X. One of the upper handlebar frame 210X and the lower handlebar frame 220X is provided with the locking hole 420X, and the other is provided with the handlebar locking assembly 410X. Specifically, in this embodiment, the second support tube 221X of the lower handlebar frame 220X is provided with the locking hole 420X, the first support tube 211X of the upper handlebar frame 210X is provided with the handlebar locking assembly 410X, the handlebar locking assembly 410X can be engaged with the locking hole 420X, and when the first support tube 211X and the corresponding second support tube 221X move relatively to make the handlebar locking assembly 410X face the locking hole 420X, the handlebar locking assembly 410X is inserted into the locking hole 420X to lock the upper handlebar frame 210X and the lower handlebar frame 220X. More specifically, a plurality of locking holes 420X are provided, and the plurality of locking holes 420X are arranged at intervals in a direction of sliding of the upper handlebar frame 210X relative to the lower handlebar frame 220X. Thus, the upper handlebar frame 210X can be maintained at different heights relative to the lower handlebar frame 220X when the handlebar locking assembly 410X is inserted into different locking holes 420X.

Referring to FIG. 7 and FIG. 8, in an embodiment, the handlebar locking assembly 410X is arranged in the first support tube 211X of the upper handlebar frame 210X according to the foregoing description. The handlebar locking assembly 410X includes a moving member 411X and a second locking member 412X. The moving member 411X is movably arranged in the first support tube 211X of the upper handlebar frame 210X. Specifically, the moving member 411X is provided with a guide groove 4111X, the guide groove 4111X extending obliquely relative to a moving direction of the moving member 411X. The second locking member 412X has a guide column (not shown in the drawings), the guide column extending into the guide groove 4111X and being slidably engaged with the guide groove 4111X to be capable of extending into or withdrawing from the locking hole 420X. Specifically, in an embodiment, as shown in FIG. 7 and FIG. 8, the handlebar locking assembly 410X further includes a support base 413X, the support base 413X is fixedly arranged in the first support tube 211X, and the second locking member 412X is movably arranged on the support base 413X to be capable of extending into the locking hole 420X or withdrawing from the locking hole 420X. More specifically, the handlebar locking assembly 410X further includes a fourth elastic member 414X (see FIG. 8), and the fourth elastic member 414X abuts between the support base 413X and the moving member 411X and is configured to drive the moving member 411X to be reset, so that the second locking member 412X constantly has a tendency of insertion into the locking hole 420X. Specifically, for example, the fourth elastic member 414X may also be an elastic member having elasticity such as a spring or an elastic sheet.

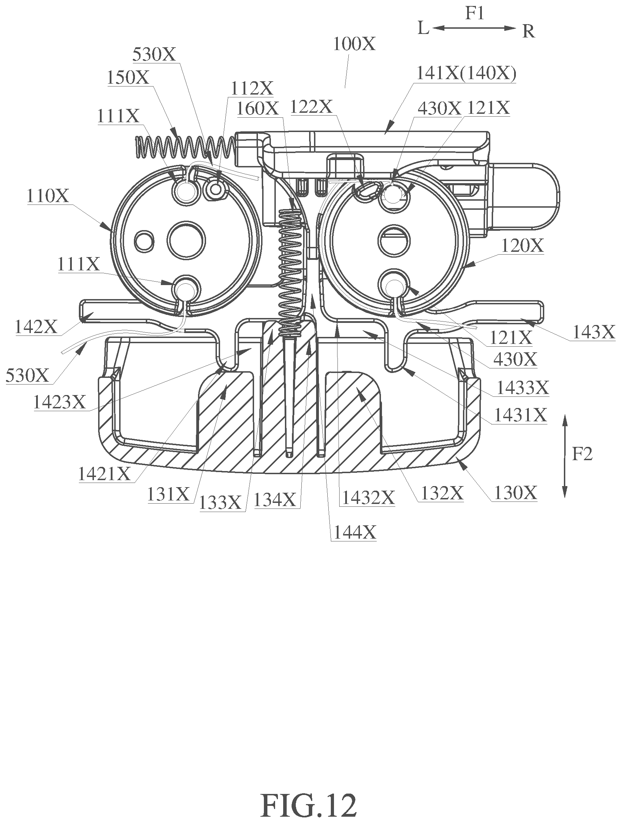

In an embodiment, the height adjustment locking mechanism 400X further includes a second traction member 430X (see FIG. 12), the second traction member 430X being configured to be connected to the moving member 411X. Thus, the user can drive the moving member 411X to move by pulling the second traction member 430X, and then indirectly drive the second locking member 412X to withdraw from the locking hole 420X.

In this embodiment, in order to improve stability of the height adjustment locking mechanism 400X during locking, two height adjustment locking mechanisms 400X are arranged on the stroller frame 1000X, and one height adjustment locking mechanism 400X is arranged between the first support tube 211X and the second support tube 221X on the same side.

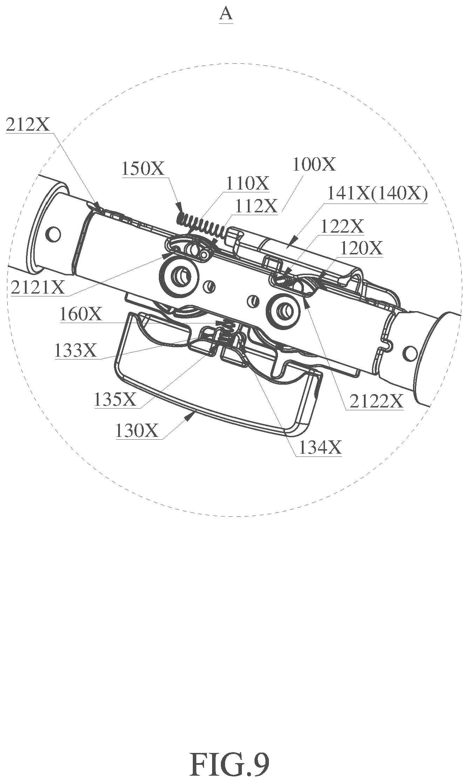

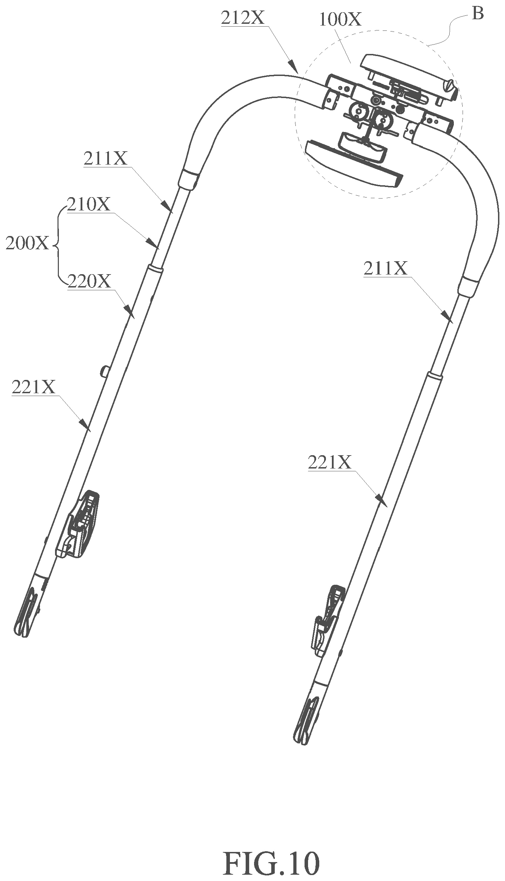

In order to improve convenience of unlocking of the fold locking mechanism 500X and the height adjustment locking mechanism 400X by the user, in some embodiments of the present invention, the unlocking mechanism 100X can unlock the fold locking mechanism 500X and the height adjustment locking mechanism 400X. Specifically, as shown in FIG. 9 and FIG. 10, the unlocking mechanism 100X includes a first unlocking member 110X, a second unlocking member 120X, and an operating member 130X. The first unlocking member 110X is rotatably arranged on the stroller frame 1000X, and for example, may be arranged on the handlebar frame 200X or the wheel frame 300X. The first unlocking member 110X is drivingly connected to the fold locking mechanism 500X to allow the lower handlebar frame 220X to pivot relative to the wheel frame 300X. Specifically, the first unlocking member 110X is drivingly connected to the first locking member 510X in the fold locking mechanism 500X. The second unlocking member 120X is rotatably arranged on the stroller frame 1000X, and for example, may be arranged on the handlebar frame 200X or the wheel frame 300X. The second unlocking member 120X is drivingly connected to the height adjustment locking mechanism 400X to allow the upper handlebar frame 210X to move relative to the lower handlebar frame 220X. Specifically, the second unlocking member 120X is drivingly connected to the moving member 411X in the height adjustment locking mechanism 400X. The operating member 130X is movably arranged on the stroller frame 1000X and adapted to drive either of the first unlocking member 110X and the second unlocking member 120X to rotate.

The first unlocking member 110X is rotatably arranged on the stroller frame 1000X and drivingly connected to the first locking member 510X, the second unlocking member 120X is rotatably arranged on the stroller frame 1000X and drivingly connected to the moving member 411X, and the operating member 130X is movable and configured to drive either of the first unlocking member 110X and the second unlocking member 120X to rotate. Therefore, the user can control the first unlocking member 110X to rotate by driving the operating member 130X to move, so as to indirectly control the first locking member 510X in the fold locking mechanism 500X, when the first locking member 510X is inserted into the locking concave portion 521X, the stroller frame 1000X can be maintained in the unfolded state, and when the first locking member 510X withdraws from the locking concave portion 521X, the stroller frame 1000X can switch from the unfolded state to the locked state. Meanwhile, the user can also control the second unlocking member 120X to rotate by driving the operating member 130X to move, so as to indirectly control the moving member 411X and the second locking member 412X in the height adjustment locking mechanism 400X, when the second locking member 412X is inserted into the locking hole 420X, the upper handlebar frame 210X and the lower handlebar frame 220X cannot slide relatively, and when the second locking member 412X withdraws from the locking hole 420X, the upper handlebar frame 210X and the lower handlebar frame 220X can slide relatively, and thus, the height of the handlebar frame 200X can be adjusted. Since the user can control different locking mechanisms only by operating the above unlocking mechanism 100X, convenience of an operation of the user is improved.

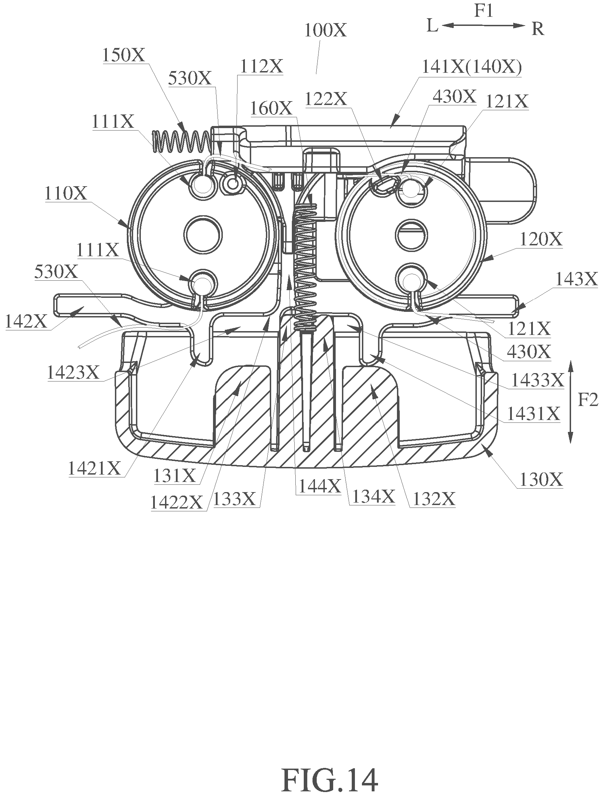

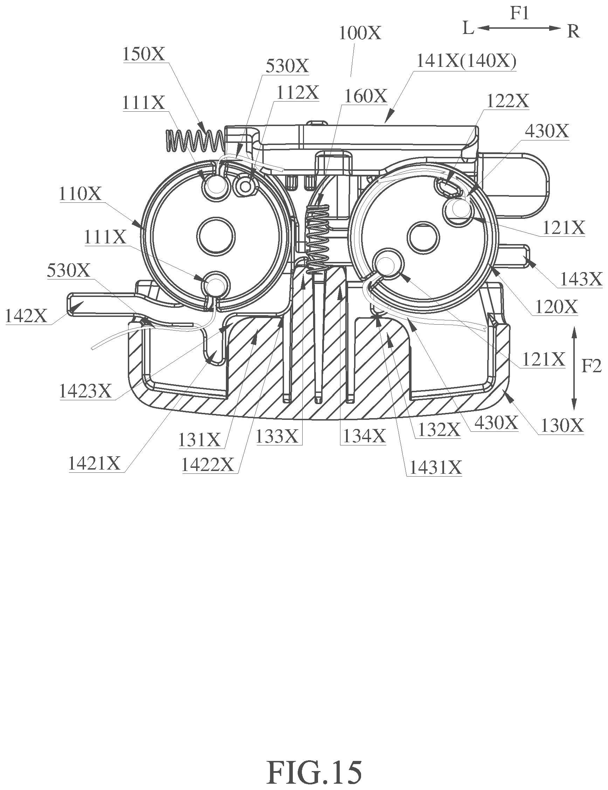

In order to facilitate the user to operate the unlocking mechanism 100X, as shown in FIG. 9 to FIG. 11, the unlocking mechanism 100X is arranged on the pushing handle tube 212X of the upper handlebar frame 210X. Specifically, the first unlocking member 110X and the second unlocking member 120X are both disc-shaped and rotatably mounted on the pushing handle tube 212X through shaft pins or other connecting members. More specifically, the first unlocking member 110X is provided with a first connecting portion 111X, and the first connecting portion 111X and a rotation center of the first unlocking member 110X are misaligned, for example, may be arranged in a straight line or may be arranged in a non-straight line, but the present invention is not limited thereto. The first connecting portion 111X is configured to be connected to the fold locking mechanism 500X. Specifically, referring to FIG. 3, FIG. 12, and FIG. 13, the first connecting portion 111X is connected to the first locking member 510X in the fold locking mechanism 500X through the first traction member 530X. When the first unlocking member 110X rotates around the rotation center thereof, the first connecting portion 111X rotates around the rotation center of the first unlocking member 110X synchronously, and then drives the first traction member 530X to move so as to pull the first unlocking member 110X to move and withdraw from the locking concave portion 521X. Similarly, the second unlocking member 120X is provided with a second connecting portion 121X, and the second connecting portion 121X and a rotation center of the second unlocking member 120X are misaligned, for example, may be arranged in a straight line or may be arranged in a non-straight line, but the present invention is not limited thereto. The second connecting portion 121X is configured to be connected to the height adjustment locking mechanism 400X. Specifically, referring to FIG. 14 and FIG. 15, the second connecting portion 121X is connected to the moving member 411X in the height adjustment locking mechanism 400X through the second traction member 430X. When the second unlocking member 120X rotates around the rotation center thereof, the second connecting portion 121X rotates around the rotation center of the second unlocking member 120X synchronously, and then drives the second traction member 430X to move to pull the moving member 411X to move, and under the action of the guide groove 4111X, the first locking member 510X is driven to move to withdraw from the locking hole 420X.

Specifically, in this embodiment, the first traction member 530X and the second traction member 430X may be both traction ropes, for example. More specifically, the first unlocking member 110X is provided with two first connecting portions 111X, and the second unlocking member 120X is provided with two second connecting portions 121X. The two first connecting portions 111X are connected to two first traction members 530X respectively, and the two second connecting portions 121X are connected to two second traction members 430X respectively. Thus, when the first unlocking member 110X rotates, the two first locking members 510X can be simultaneously controlled to move to withdraw from the corresponding locking concave portions 521X. When the second unlocking member 120X rotates, the two moving members 411X can be simultaneously controlled to move, so as to control the two second locking members 412X to withdraw from the corresponding locking holes 420X.

Referring to FIG. 9 and FIG. 12 to FIG. 15, the unlocking mechanism 100X further includes a safety lock 140X (in other embodiments, the safety lock 140X can also be called as frame folding safety lock 140X). The safety lock 140X is movably arranged on the stroller frame 1000X and is switchable between a first position and a second position. When the safety lock 140X is pushed to be located at the first position, the operating member 130X is drivingly connected to the first unlocking member 110X through the safety lock 140X. When the safety lock 140X is pushed to be located at the second position, the operating member 130X is drivingly connected to the second unlocking member 120X through the safety lock 140X. Specifically, when the user needs to unlock the fold locking mechanism 500X to switch the stroller frame 1000X from the unfolded state to the folded state, the safety lock 140X can be moved to the first position, so that the first unlocking member 110X can be rotated by operating the operating member 130X. When the user needs to unlock the height adjustment locking mechanism 400X to adjust the height of the handlebar frame 200X, the safety lock 140X can be moved to the second position, so that the second unlocking member 120X can be rotated by operating the operating member 130X.

Referring to FIG. 12 to FIG. 15, in an embodiment, the safety lock 140X includes a toggle member 141X, a first linkage member 142X, and a second linkage member 143X. The toggle member 141X is movably arranged on the stroller frame 1000X (e.g., the pushing handle tube 212X) in the first direction F1 and is switchable between the first position and the second position. The first linkage member 142X is movably connected to the toggle member 141X along a second direction F2 and drivingly connected to the first unlocking member 110X. The second linkage member 143X is movably connected to the toggle member 141X along the second direction F2 and drivingly connected to the second unlocking member 120X. The first direction F1 intersects with the second direction F2, and the operating member 130X is movable relative to the stroller frame 1000X along the second direction F2. Specifically, when the toggle member 141X is located at the first position, the operating member 130X can be operated to push against the first linkage member 142X to move along the second direction F2, such that the first unlocking member 110X is rotated. When the toggle member 141X is located at the second position, the operating member 130X can be operated to push against the second linkage member 143X to move along the second direction F2, such that the second unlocking member 120X is rotated.

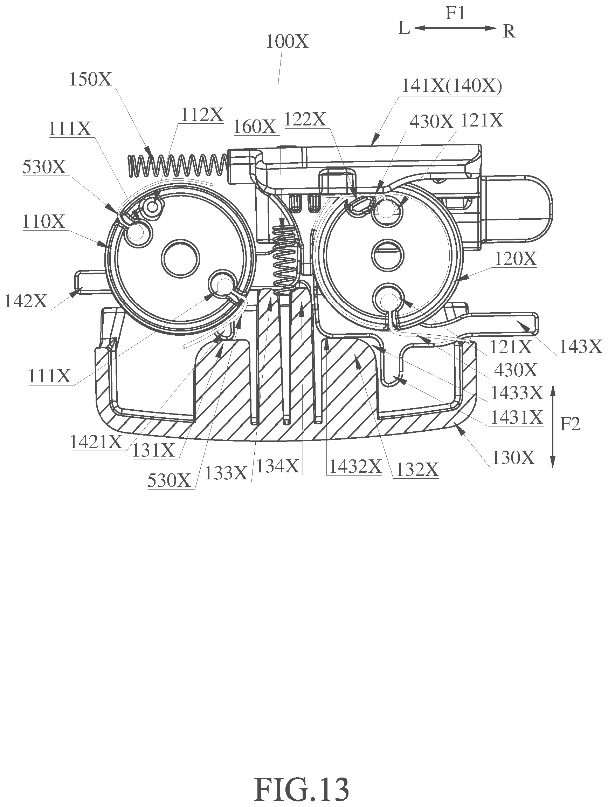

With continued reference to FIG. 12 to FIG. 15, in an embodiment, the first linkage member 142X has a first abutting portion 1421X, and the second linkage member 143X has a second abutting portion 1431X. The operating member 130X has a first driving portion 131X and a second driving portion 132X spaced apart. As shown in FIG. 12 and FIG. 13, when the toggle member 141X is located at the first position, the first abutting portion 1421X is aligned with the first driving portion 131X, and the second abutting portion 1431X is misaligned with the second driving portion 132X. Thus, when the operating member 130X moves upwards along the second direction F2, the first driving portion 131X can abut against the first abutting portion 1421X, so as to push the first linkage member 142X to move along the second direction F2, and then drive the first unlocking member 110X to rotate, thereby finally unlocking the fold locking mechanism 500X. Meanwhile, since the second abutting portion 1431X is misaligned with the second driving portion 132X, when the operating member 130X moves upwards along the second direction F2, the second driving portion 132X does not contact the second abutting portion 1431X, and thus, the second linkage member 143X and the second unlocking member 120X can be kept still. That is, when the operating member 130X is operated, the height adjustment locking mechanism 400X is not affected. As shown in FIG. 14 and FIG. 15, when the toggle member 141X is located at the second position, the second abutting portion 1431X is aligned with the second driving portion 132X, and the first abutting portion 1421X is misaligned with the first driving portion 131X. Thus, when the operating member 130X moves upwards along the second direction F2, the second driving portion 132X can abut against the second abutting portion 1431X, so as to push the second linkage member 143X to move along the second direction F2, and then drive the second unlocking member 120X to rotate, thereby finally unlocking the height adjustment locking mechanism 400X. Meanwhile, since the first abutting portion 1421X is misaligned with the first driving portion 131X, when the operating member 130X moves upwards along the second direction F2, the first driving portion 131X does not contact the first abutting portion 1421X, and thus, the first linkage member 142X and the first unlocking member 110X can be kept still. That is, when the operating member 130X is operated, the fold locking mechanism 500X is not affected.

Referring to FIG. 12 to FIG. 15 again, in an embodiment, the operating member 130X further has a third driving portion 133X and a fourth driving portion 134X. The third driving portion 133X and the fourth driving portion 134X are spaced apart and located between the first driving portion 131X and the second driving portion 132X. The first linkage member 142X and the second linkage member 143X are spaced apart, and a third avoidance portion 144X is formed therebetween. Specifically, the first linkage member 142X further has a third abutting portion 1422X, and the second linkage member 143X further has a fourth abutting portion 1432X. As shown in FIG. 12 and FIG. 13, when the toggle member 141X is located at the first position, the third abutting portion 1422X is aligned with the third driving portion 133X, the first abutting portion 1421X is aligned with the first driving portion 131X, and the fourth driving portion 134X is aligned with the third avoidance portion 144X. Therefore, when the operating member 130X moves upwards along the second direction F2, the first driving portion 131X can abut against the first abutting portion 1421X, and the third abutting portion 1422X can abut against the third driving portion 133X, so that the first linkage member 142X is pushed to move along the second direction F2 at the same time. Meanwhile, in the process that the operating member 130X moves upwards along the second direction F2, the fourth driving portion 134X is gradually inserted into the third avoidance portion 144X, thus preventing the second linkage member 143X from being driven to move when the toggle member 141X is located at the first position. As shown in FIG. 14 and FIG. 15, when the toggle member 141X is located at the second position, the fourth abutting portion 1432X is aligned with the fourth driving portion 134X, the second abutting portion 1431X is aligned with the second driving portion 132X, and the third driving portion 133X is aligned with the third avoidance portion 144X. Therefore, when the operating member 130X moves upwards along the second direction F2, the second driving portion 132X can abut against the second abutting portion 1431X, and the fourth abutting portion 1432X can abut against the fourth driving portion 134X, so that the second linkage member 143X is pushed to move along the second direction F2 at the same time. Meanwhile, in the process that the operating member 130X moves upwards along the second direction F2, the third driving portion 133X is gradually inserted into the third avoidance portion 144X, thus preventing the first linkage member 142X from being driven to move when the toggle member 141X is located at the second position.

Referring to FIG. 12 and FIG. 14, in an embodiment, the unlocking mechanism 100X further includes a first elastic member 150X. The first elastic member 150X abuts between the stroller frame 1000X (e.g., the pushing handle tube 212X) and the toggle member 141X and is configured to provide an elastic restoring force for the toggle member 141X to keep the toggle member 141X at the first position or the second position. For example, when the first elastic member 150X is configured to constantly keep the toggle member 141X at the first position, if the fold locking mechanism 500X is required to be unlocked, the operating member 130X is directly operated (e.g., pressed or pushed upwards). If the height adjustment locking mechanism 400X is required to be unlocked, the toggle member 141X is required to be moved to the second position first, and then, the operating member 130X is operated. After the height adjustment locking mechanism 400X is unlocked completely, the toggle member 141X is released, and the toggle member 141X is automatically reset to the first position under the reset action of the first elastic member 150X.

In an embodiment, as shown in FIG. 12 and FIG. 14, a first avoidance portion 1423X is formed between the first abutting portion 1421X and the third abutting portion 1422X. A second avoidance portion 1433X is formed between the second abutting portion 1431X and the fourth abutting portion 1432X. Specifically, when the toggle member 141X is located at the first position and the operating member 130X is operated, the second avoidance portion 1433X is configured to avoid the second driving portion 132X. When the toggle member 141X is located at the second position and the operating member 130X is operated, the first avoidance portion 1423X is configured to avoid the first driving portion 131X.

In an embodiment, one of the first linkage member 142X and the first unlocking member 110X has a first guide concave portion (not shown in the drawings), and the other has a first engaging convex portion (not shown in the drawings). The first engaging convex portion is slidably arranged within the first guide concave portion, and the first guide concave portion extends along the first direction F1. Similarly, one of the second linkage member 143X and the second unlocking member 120X has a second guide concave portion (not shown in the drawings), and the other has a second engaging convex portion (not shown in the drawings). The second engaging convex portion is slidably arranged in the second guide concave portion, and the second guide concave portion extends along the first direction F1. Thus, when switching between the first position and the second position along the first direction F1, the toggle member 141X can drive the first linkage member 142X and the second linkage member 143X to move left and right along the first direction F1 at the same time, so that the first unlocking member 110X and the second unlocking member 120X are kept still. Meanwhile, when the first linkage member 142X moves up and down along the second direction F2, the first linkage member 142X can also drive the first unlocking member 110X to rotate; when the second linkage member 143X moves up and down along the second direction F2, the second linkage member 143X can also drive the second unlocking member 120X to rotate.

In an embodiment, the operating member 130X has an initial position (see FIG. 12 and FIG. 14) and an unlock position (see FIG. 13 and FIG. 15) when moving in the second direction F2. When located at the initial position, the operating member 130X can be operated to move to push against the first linkage member 142X or the second linkage member 143X to move. In other words, when the operating member 130X is at the initial position, the first driving portion 131X on the operating member 130X and the first abutting portion 1421X as well as the third driving portion 133X on the operating member 130X and the third abutting portion 1422X (or the second driving portion 132X on the operating member 130X and the second abutting portion 1431X as well as the fourth driving portion 134X on the operating member 130X and the fourth abutting portion 1432X) may have gaps or are just in contact, so that the first linkage member 142X (or the second linkage member 143X) may be pushed to move upwards by pushing or pressing the operating member 130X upwards. When the operating member 130X is located at the unlock position, the operating member 130X pushes against the first linkage member 142X or the second linkage member 143X.

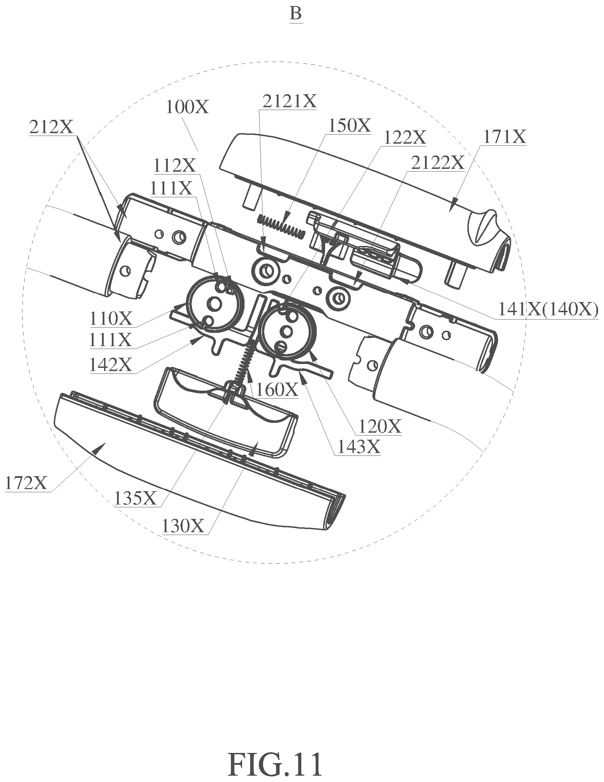

Referring to FIG. 11 to FIG. 13, in an embodiment, the unlocking mechanism 100X further includes a second elastic member 160X, and the second elastic member 160X abuts between the stroller frame 1000X and the operating member 130X and is configured to provide an elastic restoring force for the operating member 130X, so as to maintain the operating member 130X at the initial position. For example, the second elastic member 160X may also be an elastic member having elasticity such as a spring or an elastic sheet. Specifically, in this embodiment, as shown in FIG. 9 and FIG. 11, the second elastic member 160X is a spring, the operating member 130X is provided with a limiting column 135X, the spring sleeves the limiting column 135X, and two ends of the spring abut against the operating member 130X and the pushing handle tube 212X respectively.

Referring to FIG. 9 and FIG. 11, in an embodiment, one of the first unlocking member 110X and the stroller frame 1000X is provided with a first stop concave portion 2121X, the other is provided with a first stop convex portion 112X, the first stop convex portion 112X abuts against one side wall of the first stop concave portion 2121X when the operating member 130X switches to the initial position, and the first stop convex portion 112X abuts against the other corresponding side wall of the first stop concave portion 2121X when the operating member 130X switches to the unlock position. Thus, a rotation direction of the first unlocking member 110X can be controlled to avoid the problem that the first unlocking member 110X cannot pull the first locking member 510X to withdraw from the locking concave portion 521X through the first traction member 530X during rotation due to the fact that the first unlocking member 110X is not rotated in a preset turning direction. In addition, a distance between the two opposite side walls of the first stop concave portion 2121X defines a range of rotation of the first stop convex portion 112X around the rotation center of the first unlocking member 110X. Specifically, the pushing handle tube 212X is provided with the first stop concave portion 2121X, and the first unlocking member 110X is provided with the first stop convex portion 112X. Similarly, one of the second unlocking member 120X and the stroller frame 1000X is provided with a second stop concave portion 2122X, the other is provided with a second stop convex portion 122X, the second stop convex portion 122X abuts against one side wall of the second stop concave portion 2122X when the operating member 130X switches to the initial position, and the second stop convex portion 122X abuts against the other corresponding side wall of the second stop concave portion 2122X when the operating member 130X switches to the unlock position. Thus, a rotation direction of the second unlocking member 120X can be controlled to avoid that the second unlocking member 120X cannot pull the moving member 411X to move through the second traction member 430X during rotation due to the fact that the second unlocking member 120X is not rotated in a preset turning direction. In addition, a distance between the two opposite side walls of the second stop concave portion 2122X defines a range of rotation of the second stop convex portion 122X around the rotation center of the second unlocking member 120X. Specifically, the pushing handle tube 212X is provided with the second stop concave portion 2122X, and the second unlocking member 120X is provided with the second stop convex portion 122X.

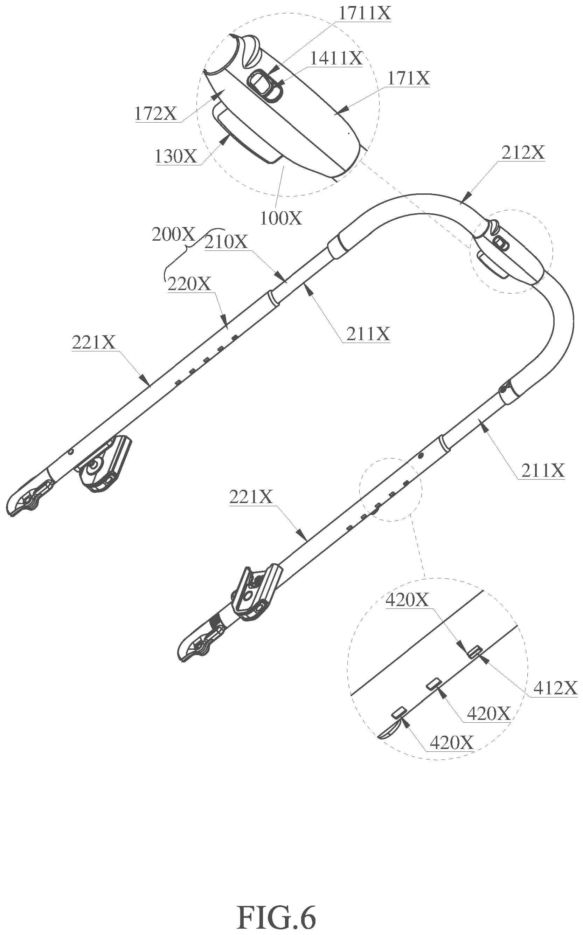

Referring to FIG. 6 and FIG. 11, in an embodiment, the unlocking mechanism 100X further includes a first fixing cover 171X and a second fixing cover 172X. The first fixing cover 171X covers a top portion of the pushing handle tube 212X, the second fixing cover 172X covers the bottom of the pushing handle tube 212X, and the second fixing cover 172X is provided with a perforation for the operating member 130X to pass through. The first fixing cover 171X and the second fixing cover 172X are connected, fit and are fixed to the pushing handle tube 212X. Thus, the operating member 130X and other components can be limited to prevent the operating member 130X, or the like, from being separated from the pushing handle tube 212X. In addition, the first fixing cover 171X and the second fixing cover 172X cover the first unlocking member 110X, the second unlocking member 120X, and the safety lock 140X, which can also simplify and beautify the unlocking mechanism 100X and the stroller frame 1000X. Specifically, as shown in FIG. 6, the first fixing cover 171X is provided with an operating hole 1711X, the toggle member 141X is provided with a pushing portion 1411X, the pushing portion 1411X can pass through the operating hole 1711X for the user to grip, and the user can change the position of the toggle member 141X by pushing the pushing portion 1411X.

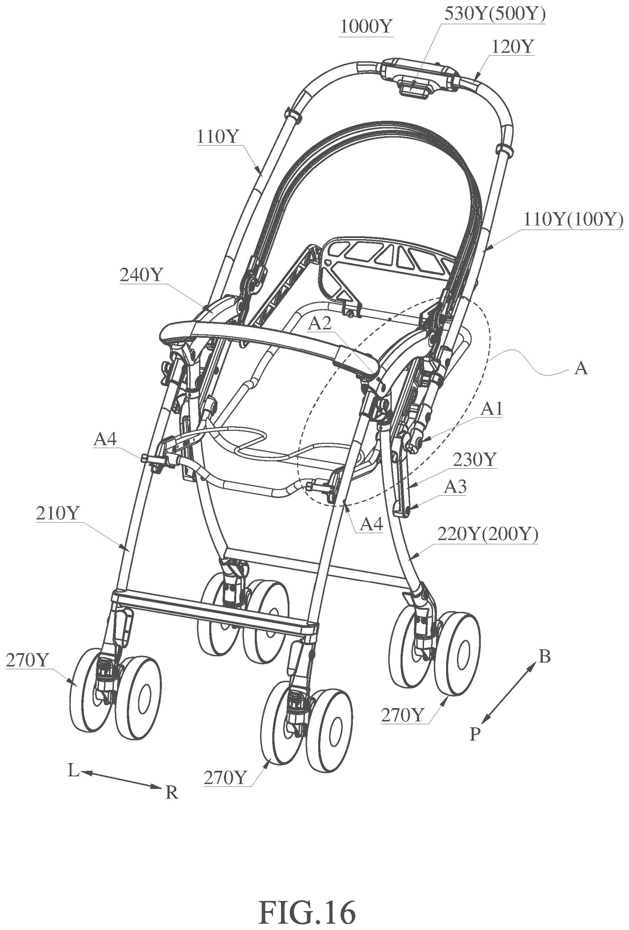

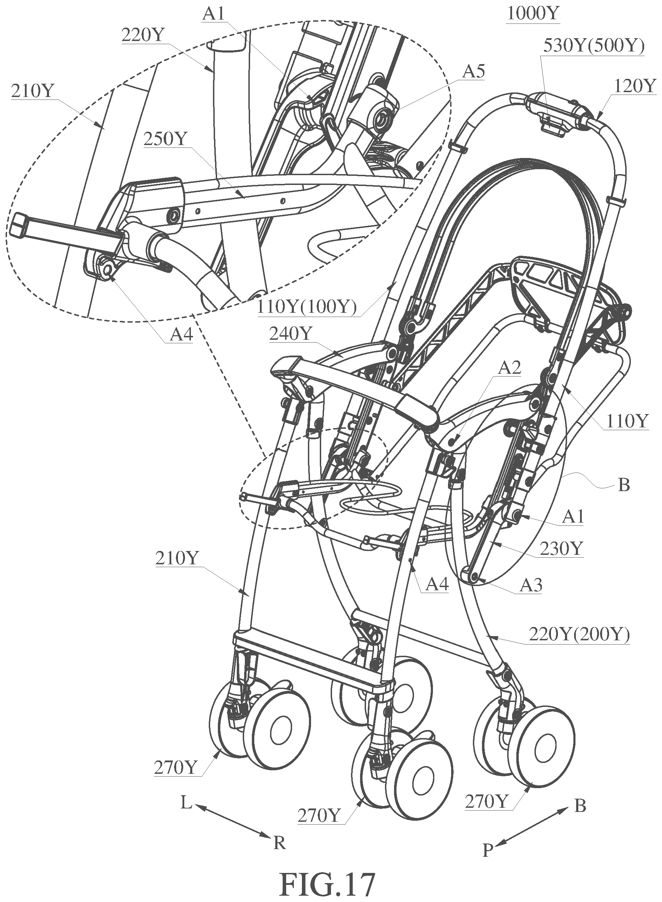

FIG. 16 and FIG. 17 show a stroller frame 1000Y according to some embodiments of the present invention, an overall structure of the stroller frame 1000Y is substantially bilaterally symmetric, and the stroller frame can be used as a frame for a child stroller, a pet stroller, or a cargo stroller. For example, in this embodiment, the stroller frame 1000Y is used as the frame of the child stroller to describe the structure and working principle thereof.

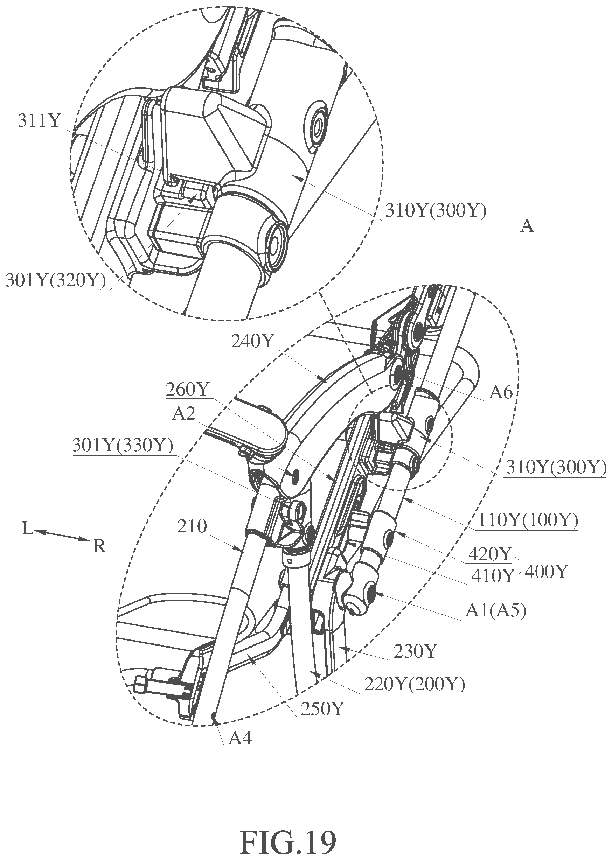

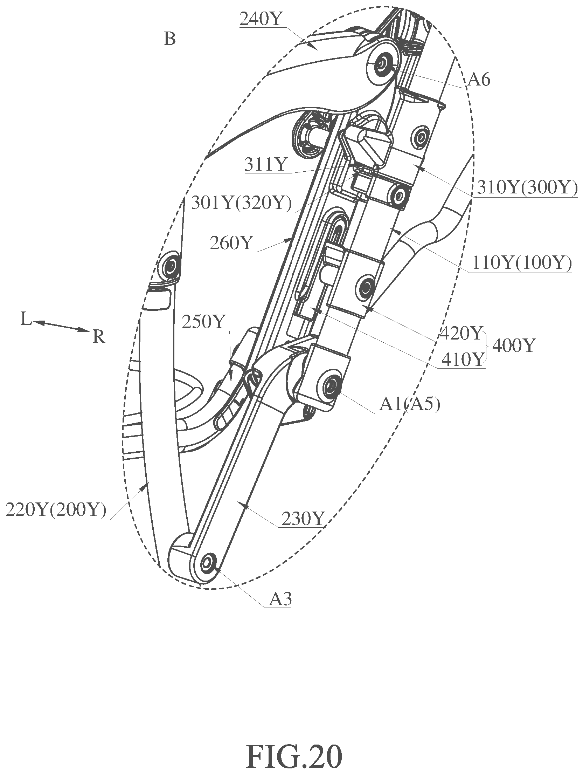

Referring to FIG. 16 to FIG. 18, in an embodiment, the stroller frame 1000Y may include, for example, a handlebar frame 100Y, a wheel frame 200Y, a direction-change locking mechanism 300Y (see FIG. 19 and FIG. 20), a fold locking mechanism 400Y (see FIG. 19 and FIG. 20), and an unlocking mechanism 500Y according to some embodiments of the present invention. Since the stroller frame 1000Y has a symmetric structure, mainly with one side as an example, the handlebar frame 100Y, the wheel frame 200Y, the direction-change locking mechanism 300Y, the fold locking mechanism 400Y, and the unlocking mechanism 500Y will be described together below while the stroller frame 1000Y is described.

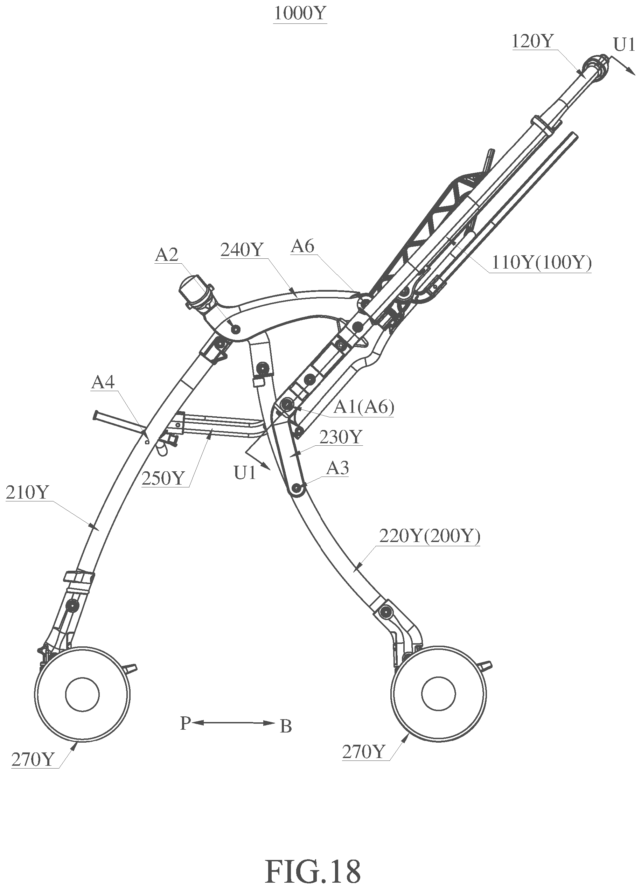

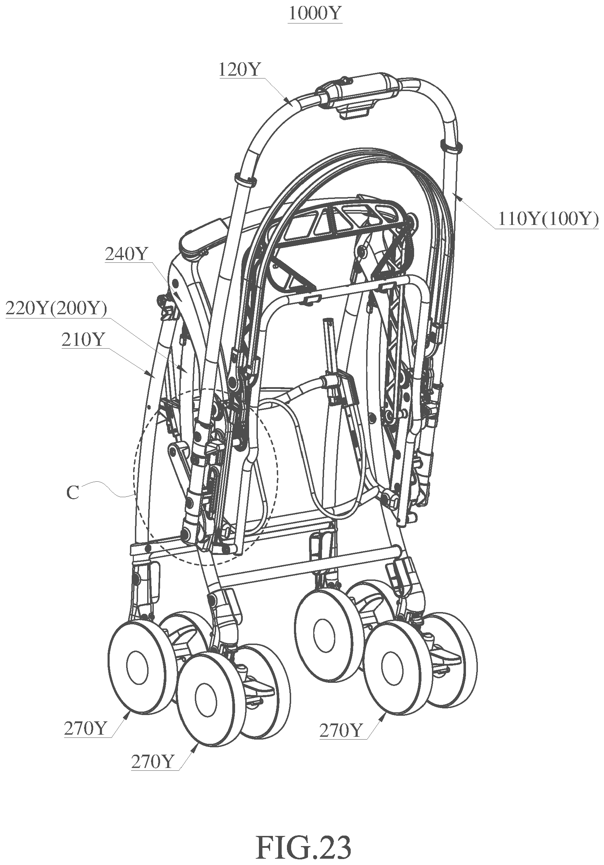

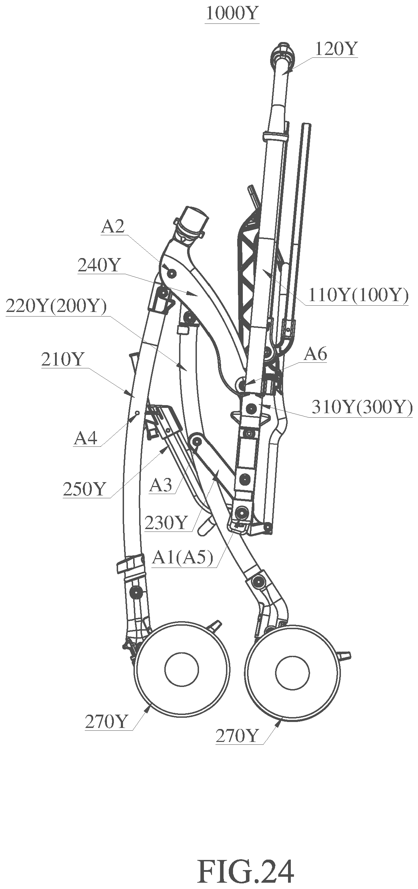

With continued reference to FIG. 16 to FIG. 18, in an embodiment, the handlebar frame 100Y is rotatably arranged on the wheel frame 200Y, so that the handlebar frame 100Y can rotate relative to the wheel frame 200Y for direction changing; alternatively, the handlebar frame 100Y can rotate relative to the wheel frame 200Y for folding, so that the stroller frame 1000Y is switchable between an unfolded state (see FIG. 16 and FIG. 18) and a folded state (in other embodiments, the folded state can also be called the collapsed state or the closed state)(see FIG. 23 and FIG. 24). In an embodiment, as shown in FIG. 16 to FIG. 18, the handlebar frame 100Y and the wheel frame 200Y are pivotally connected at a first pivot point A1, so that the handlebar frame 100Y has a first use position (see FIG. 16) and a second use position (not shown in the drawings) relative to the wheel frame 200Y. Specifically, the handlebar frame 100Y is pivotable relative to the first pivot point A1 to enable the handlebar frame 100Y to switch between the first use position and the second use position. In conjunction with an orientation of the stroller frame 1000Y, in this embodiment, when the handlebar frame 100Y is at the first use position, a top portion of the handlebar frame 100Y is located on a first side of the wheel frame 200Y. When the handlebar frame 100Y is at the second use position, the top portion of the handlebar frame 100Y is located on a second side of the wheel frame 200Y. The first side and the second side are arranged opposite to each other relative to a traveling direction (i.e., a front-rear direction) of the stroller frame 1000Y.

It should be noted that, unless otherwise explicitly stated and limited, the orientation terms "left", "right", "front", "rear", or the like, of the stroller frame 1000Y in the embodiments of the present invention are based on the orientations "left", "right", "front", and "rear" of the normally traveling stroller frame 1000Y at the first use position, and in the drawings, "left" and "right" are schematically shown by arrows L and R, and "front" and "rear" are schematically shown by arrows P and B. These orientation terms are used only to make the description of the embodiments of the present invention clearer, and are not used to unduly define the protection scope of the present invention.

Referring to FIG. 16 and FIG. 17, in an embodiment, the handlebar frame 100Y has a U-shaped structure, for example, which includes support tubes 110Y on left and right sides and a pushing handle tube 120Y connected between the two support tubes 110Y. The support tubes 110Y have straight tube structures, and the pushing handle tube 120Y has a U-shaped structure and is connected between the two support tubes 110Y and configured to be gripped by the user to push the stroller frame 1000Y. Specifically, the pushing handle tube 120Y is connected to a top end of the support tube 110Y, and a bottom end of the support tube 110Y and the wheel frame 200Y are pivotally connected at the first pivot point A1. Certainly, in other embodiments, the support tube 110Y may alternatively have a non-straight tube structure, or the pushing handle tube 120Y may alternatively have a straight tube structure, which is not limited herein.

Referring to FIG. 16 to FIG. 18, in an embodiment, the wheel frame 200Y may include a front wheel frame 210Y, a rear wheel frame 220Y, and a first transmission member 230Y, for example. The front wheel frame 210Y is pivotally connected to the rear wheel frame 220Y to form a second pivot point A2, the front wheel frame 210Y is located in front of the rear wheel frame 220Y along the front-rear direction of the stroller frame 1000Y, and wheels 270Y are connected to the bottom of the front wheel frame 210Y and the bottom of the rear wheel frame 220Y. The first transmission member 230Y is pivotally connected between the rear wheel frame 220Y and the handlebar frame 100Y, and specifically, a first end of the first transmission member 230Y is pivotally connected to the handlebar frame 100Y to form the first pivot point A1, and a second end of the first transmission member 230Y is pivotally connected to the rear wheel frame 220Y to form a third pivot point A3. Therefore, in conjunction with the wheel frame 200Y, the "first side" can be regarded as a side of the rear wheel frame 220Y away from the front wheel frame 210Y, and the "second side" can be regarded as a side of the front wheel frame 210Y away from the rear wheel frame 220Y.

In an embodiment, the stroller frame 1000Y further includes a seat assembly (not shown in the drawings), the seat assembly being arranged on the wheel frame 200Y for a child to sit on. When the handlebar frame 100Y is at the first use position (see FIG. 16 and FIG. 18), if the user wants to push the stroller frame 1000Y to move through the handlebar frame 100Y, the user needs to stand behind the stroller frame 1000Y to grip the handlebar frame 100Y, and in this case, the user stands away from the face of the child. When the handlebar frame 100Y is at the second use position, if the user wants to push the stroller frame 1000Y to move through the handlebar frame 100Y, the user needs to stand in front of the stroller frame 1000Y to grip the handlebar frame 100Y, and in this case, the user stands facing the face of the child.

In order to prevent the handlebar frame 100Y from rotating freely relative to the wheel frame 200Y for direction changing, in other words, in order to enable the handlebar frame 100Y to be stably kept at the first use position or the second use position, in an embodiment, the handlebar frame 100Y can be restricted from rotating relative to the wheel frame 200Y for a direction change operation or allowed to rotate relative to the wheel frame 200Y for the direction change operation through the direction-change locking mechanism 300Y. Specifically, in this embodiment, in order to improve stability of the direction-change locking mechanism 300Y during locking, two direction-change locking mechanisms 300Y are arranged on the stroller frame 1000Y and located on left and right sides of the stroller frame 1000Y respectively.

Referring to FIG. 16, FIG. 19, and FIG. 20, in an embodiment, the direction-change locking mechanism 300Y is arranged between the handlebar frame 100Y and the wheel frame 200Y, and the direction-change locking mechanism 300Y may include a first locking member 310Y, a first engaging member 320Y, and a second engaging member 330Y. The first engaging member 320Y and the second engaging member 330Y are spaced apart on the wheel frame 200Y along a circumferential direction of the first pivot point A1. The first locking member 310Y is arranged on the handlebar frame 100Y and adapted to be engaged with the first engaging member 320Y or the second engaging member 330Y. When the first locking member 310Y is engaged with the first engaging member 320Y, the handlebar frame 100Y is at the first use position. When the first locking member 310Y is engaged with the second engaging member 330Y, the handlebar frame 100Y is at the second use position.

Referring to FIG. 19 to FIG. 22, in an embodiment, the first locking member 310Y has a locking portion 311Y, and each of the first engaging member 320Y and the second engaging member 330Y is provided with an engaged locking portion 301Y adapted to be engaged with the locking portion 311Y. One of the locking portion 311Y and the engaged locking portion 301Y may be a projection, the other may be a groove, and the projection and the groove may be locked and engaged in a concave-convex engagement mode. Specifically, the first locking member 310Y is movably arranged on the handlebar frame 100Y and has a first lock position and a first unlock position. When the first locking member 310Y is at the first lock position, the locking portion 311Y is engaged with the engaged locking portion 301Y to restrict the handlebar frame 100Y from switching between the first use position and the second use position. When the first locking member 310Y is at the first unlock position, the locking portion 311Y is disengaged from the engaged locking portion 301Y to allow the handlebar frame 100Y to switch between the first use position and the second use position. More specifically, the first locking member 310Y has a sliding sleeve structure, sleeves the support tube 110Y of the handlebar frame 100Y and can slide along a length direction of the support tube 110Y, so that the first locking member can move between the first lock position and the first unlock position.

Referring to FIG. 16, FIG. 21, and FIG. 22, in an embodiment, the direction-change locking mechanism 300Y may further include a first driving member 340Y and a first traction member 350Y. The first driving member 340Y is movably arranged on the handlebar frame 100Y and connected to the first locking member 310Y, and the first traction member 350Y is connected to the first driving member 340Y. Thus, the first driving member 340Y can be driven to move by the first traction member 350Y, so as to drive the first locking member 310Y to move. Specifically, in this embodiment, the first driving member 340Y and the first traction member 350Y are movably arranged in an inner cavity of the handlebar frame 100Y, and the first driving member 340Y passes through the handlebar frame 100Y through a first connecting member 360Y (such as a shaft or a pin) and is fixedly connected to the first locking member 310Y. It should be noted that, since both the support tube 110Y and the pushing handle tube 120Y have hollow tubular structures, the "inner cavity of the handlebar frame 100Y" may refer to a tubular inner cavity of the support tube 110Y and/or the pushing handle tube 120Y. The first driving member 340Y and the first traction member 350Y are arranged in the inner cavity of the handlebar frame 100Y, so that a space utilization rate is improved, and meanwhile, appearance of the handlebar frame 100Y is neater and more attractive.

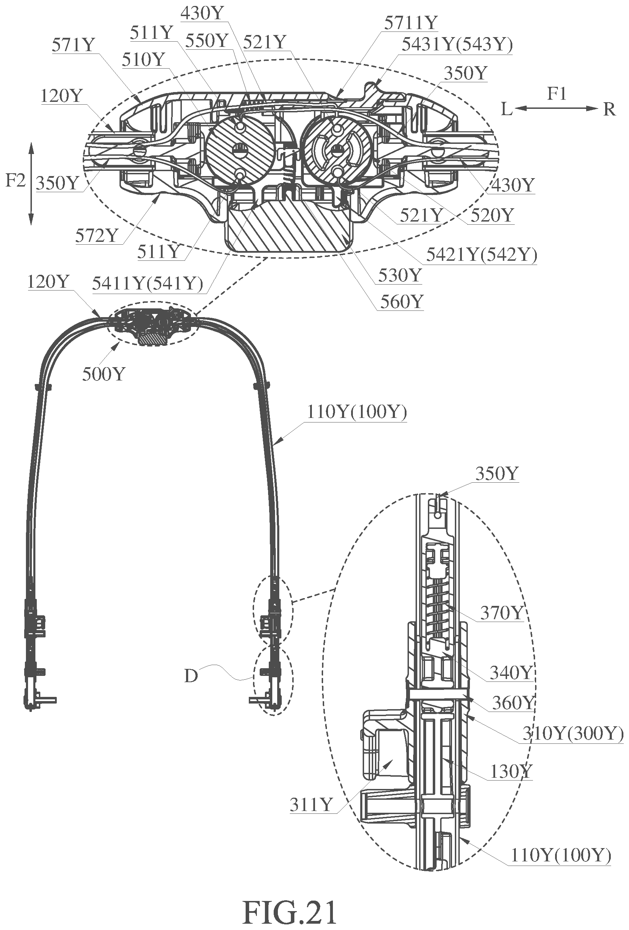

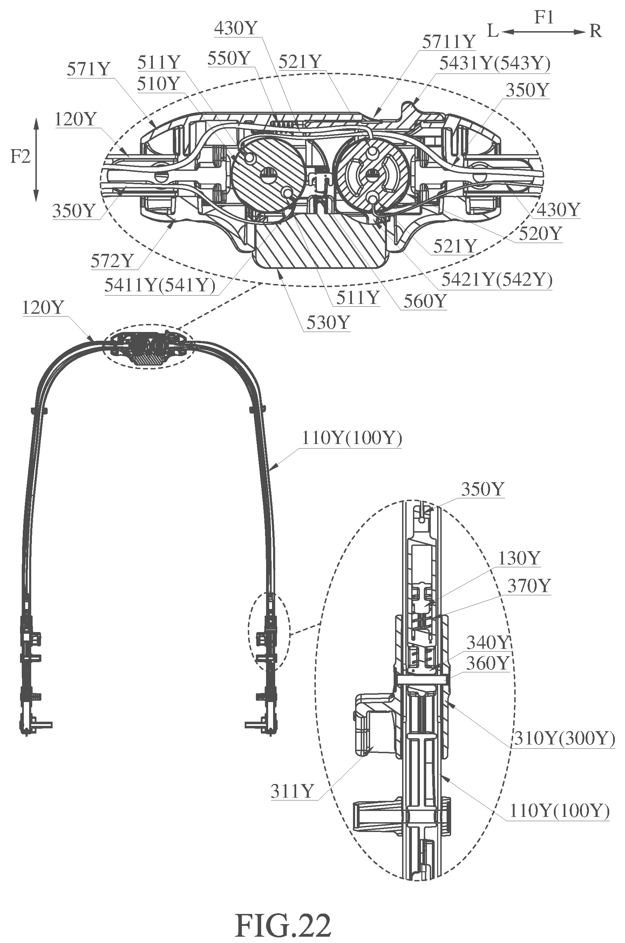

In an embodiment, as shown in FIG. 21 and FIG. 22, a fixing support base 130Y is arranged in the inner cavity of the handlebar frame 100Y. Specifically, the fixing support base 130Y is arranged in the support tube 110Y and configured to support the first driving member 340Y. In an embodiment, the direction-change locking mechanism 300Y further includes a first reset member 370Y, which may be, for example, a reset member with elasticity such as a spring or an elastic sheet. The first reset member 370Y abuts between the first driving member 340Y and the fixing support base 130Y, and is configured to drive the first driving member 340Y to be reset, so that the first driving member 340Y constantly has a tendency of driving the first locking member 310Y to be at the first lock position. Thus, when a pulling force acting on the first traction member 350Y is not present, the first driving member 340Y can be automatically reset and drive the first locking member 310Y to move to the first lock position under a reset force of the first reset member 370Y.

In an embodiment, the handlebar frame 100Y further has a third use position relative to the wheel frame 200Y when the handlebar frame 100Y is pivotally connected around the first pivot point A1. Specifically, as shown in FIG. 16 and FIG. 18, when the handlebar frame 100Y is at the first use position, the handlebar frame 100Y and the wheel frame 200Y get away from each other about the first pivot point A1 to cause the stroller frame 1000Y to be in the unfolded state. As shown in FIG. 23 and FIG. 24, when the handlebar frame 100Y is at the third use position, the handlebar frame 100Y and the wheel frame 200Y get close to each other about the first pivot point A1 to cause the stroller frame 1000Y to be in the folded state.

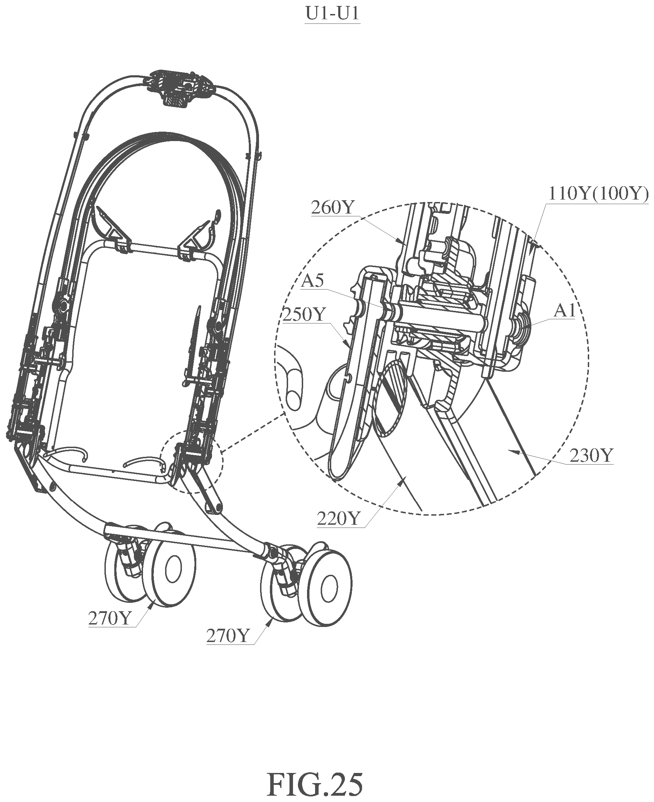

Referring to FIG. 16, FIG. 19, FIG. 20, and FIG. 25, in an embodiment, the wheel frame 200Y further includes an armrest member 240Y, a second transmission member 250Y, and a third transmission member 260Y. A top portion of the front wheel frame 210Y and the top portion of the rear wheel frame 220Y are both pivotally connected to the armrest member 240Y and form the above second pivot point A2 on the armrest member 240Y, a first end of the second transmission member 250Y is pivotally connected to the front wheel frame 210Y to form a fourth pivot point A4, a second end of the second transmission member 250Y extends towards the rear wheel frame 220Y and is pivotally connected to a first end of the third transmission member 260Y to form a fifth pivot point A5, and a second end of the third transmission member 260Y is pivotally connected to the armrest member 240Y to form a sixth pivot point A6. The second transmission member 250Y can be configured to support the seat assembly, and when the child sits on the seat assembly, the arm of the child can be placed on the armrest member 240Y, so that sitting comfort can be improved, and the armrest member 240Y can limit a sitting space of the child to prevent the child from falling off the seat assembly.

Specifically, referring to FIG. 19, FIG. 20, and FIG. 25, in this embodiment, the third transmission member 260Y and the handlebar frame 100Y are arranged in parallel along the left-right direction and located on left and right sides of the first transmission member 230Y respectively, and the first end of the third transmission member 260Y passes through the first transmission member 230Y through a fixing member (not shown in the drawings) and is fixedly connected to the handlebar frame 100Y. It should be noted that, in this embodiment, a connection point of the third transmission member 260Y and the handlebar frame 100Y is arranged coaxially with the first pivot point A1, and in addition, the pivot point (i.e., the fifth pivot point A5) between the second transmission member 250Y and the third transmission member 260Y is arranged coaxially with the first pivot point A1.

Referring to FIG. 16, FIG. 17, FIG. 19, and FIG. 20, in this embodiment, when the handlebar frame 100Y is fixed relative to the first transmission member 230Y, the third transmission member 260Y and the first transmission member 230Y are also kept fixed relatively. That is, the third transmission member 260Y cannot rotate around the first pivot point A1, so that the armrest member 240Y, the rear wheel frame 220Y, the first transmission member 230Y, and the third transmission member 260Y are kept fixed relatively. Meanwhile, the third transmission member 260Y and the second transmission member 250Y are also kept fixed relatively, and the second transmission member 250Y can be stably supported between the front wheel frame 210Y and the rear wheel frame 220Y, so that the stroller frame 1000Y can be stably maintained in the unfolded state. When the handlebar frame 100Y rotates around the first pivot point A1 relative to the first transmission member 230Y, the handlebar frame 100Y can drive the third transmission member 260Y to rotate around the fifth pivot point A5 and the sixth pivot point A6 simultaneously through the fixing member. In this process, the handlebar frame 100Y may also push the first transmission member 230Y to pivot about the third pivot point A3; synchronously, the third transmission member 260Y can also drive the armrest member 240Y to rotate around the second pivot point A2, and meanwhile push the second transmission member 250Y to pivot around the fourth pivot point A4, so that the front wheel frame 210Y and the rear wheel frame 220Y rotate relative to the second pivot point A2, and finally, the stroller frame 1000Y is folded. Specifically, for the folding process of the stroller frame 1000Y, reference can be made to subsequent descriptions.

In order to prevent the handlebar frame 100Y from rotating freely relative to the wheel frame 200Y for folding, in other words, in order to enable the handlebar frame 100Y to be stably kept at the first use position or the third use position, in an embodiment, the handlebar frame 100Y can be restricted from rotating relative to the wheel frame 200Y for a folding operation or allowed to rotate relative to the wheel frame 200Y for the folding operation through the fold locking mechanism 400Y. Specifically, in this embodiment, in order to improve stability of the fold locking mechanism 400Y during locking, two fold locking mechanisms 400Y are arranged on the stroller frame 1000Y and located on the left and right sides of the stroller frame 1000Y respectively.

Referring to FIG. 19 and FIG. 20, in an embodiment, the fold locking mechanism 400Y is arranged between the handlebar frame 100Y and the wheel frame 200Y, the fold locking mechanism 400Y includes a second locking member 410Y, and the second locking member 410Y is movable relative to the handlebar frame 100Y and has a second lock position and a second unlock position. Specifically, the second locking member 410Y is movably arranged on the third transmission member 260Y. Certainly, in other embodiments, the second locking member 410Y may alternatively be movably arranged on the handlebar frame 100Y, which is not limited herein. Specifically, when the second locking member 410Y moves to the second lock position, the second locking member 410Y is engaged with the first transmission member 230Y (see FIG. 19), so that the third transmission member 260Y can be restricted from pivoting relative to the first transmission member 230Y, the handlebar frame 100Y is also restricted from pivoting relative to the first transmission member 230Y, and the handlebar frame 100Y is finally restricted from switching between the first use position and the third use position. When the second locking member 410Y moves to the second unlock position, the second locking member 410Y is disengaged from the first transmission member 230Y (see FIG. 20), so that the third transmission member 260Y can be allowed to pivot relative to the first transmission member 230Y, the handlebar frame 100Y is also allowed to pivot relative to the first transmission member 230Y, and the handlebar frame 100Y is finally allowed to switch between the first use position and the third use position.

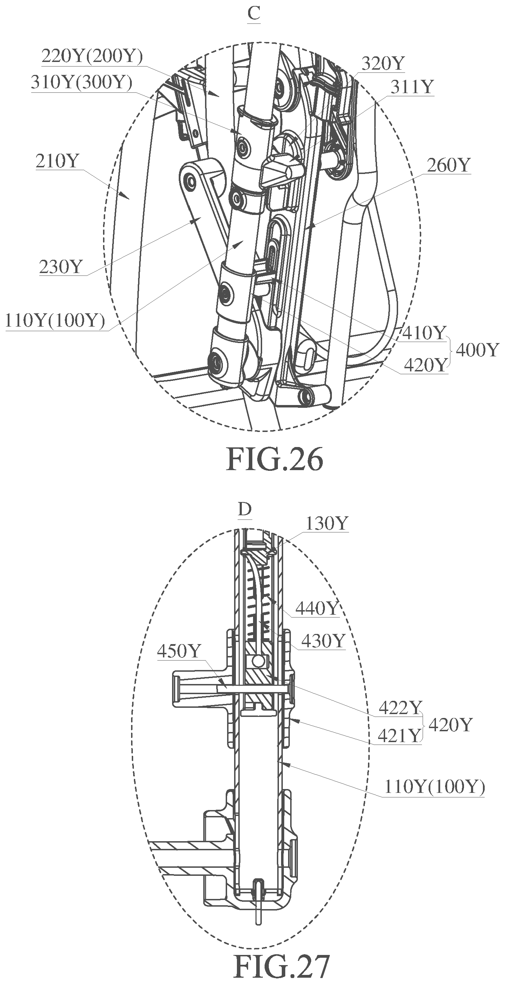

In an embodiment, the first transmission member 230Y has a first concave portion (not shown in the drawings) and a second concave portion (not shown in the drawings). Specifically, the first concave portion and the second concave portion are both located at an end of the first transmission member 230Y near the first pivot point A1, and arranged opposite to each other substantially along the circumferential direction of the first pivot point A1. When the stroller frame 1000Y is in the unfolded state, the second locking member 410Y is engaged with the first concave portion (see FIG. 19) to keep the stroller frame 1000Y in the unfolded state. When the stroller frame 1000Y is in the folded state, the second locking member 410Y is engaged with the second concave portion (see FIG. 26) to keep the stroller frame 1000Y in the folded state, so as to prevent the stroller frame 1000Y from being accidentally unfolded during transferring or accommodation.

Referring to FIG. 19, FIG. 20, FIG. 27, and FIG. 28, in an embodiment, the fold locking mechanism 400Y further includes a second driving assembly 420Y and a second traction member 430Y. The second driving assembly 420Y is movably arranged on the handlebar frame 100Y and drivingly fits the second locking member 410Y, and the second traction member 430Y is connected to the second driving assembly 420Y. Thus, the second driving assembly 420Y can be driven to move by the second traction member 430Y, so as to drive the second locking member 410Y to move. Specifically, the second driving assembly 420Y includes a second sliding sleeve 421Y and a second driving member 422Y. The second sliding sleeve 421Y sleeves the support tube 110Y of the handlebar frame 100Y and can slide along the length direction of the support tube 110Y, and the second sliding sleeve 421Y can abut against or be connected to the second locking member 410Y. The second driving member 422Y is movably arranged on the fixing support base 130Y in the inner cavity of the handlebar frame 100Y, and passes through the handlebar frame 100Y through a second connecting member 450Y (such as a shaft or a pin) to be connected to the second sliding sleeve 421Y. The second traction member 430Y is movably arranged in the inner cavity of the handlebar frame 100Y and connected to the second driving member 422Y. When the second traction member 430Y moves, the second driving member 422Y can be driven to drive the second sliding sleeve 421Y to move, so as to drive the second locking member 410Y to move from the second lock position to the second unlock position.

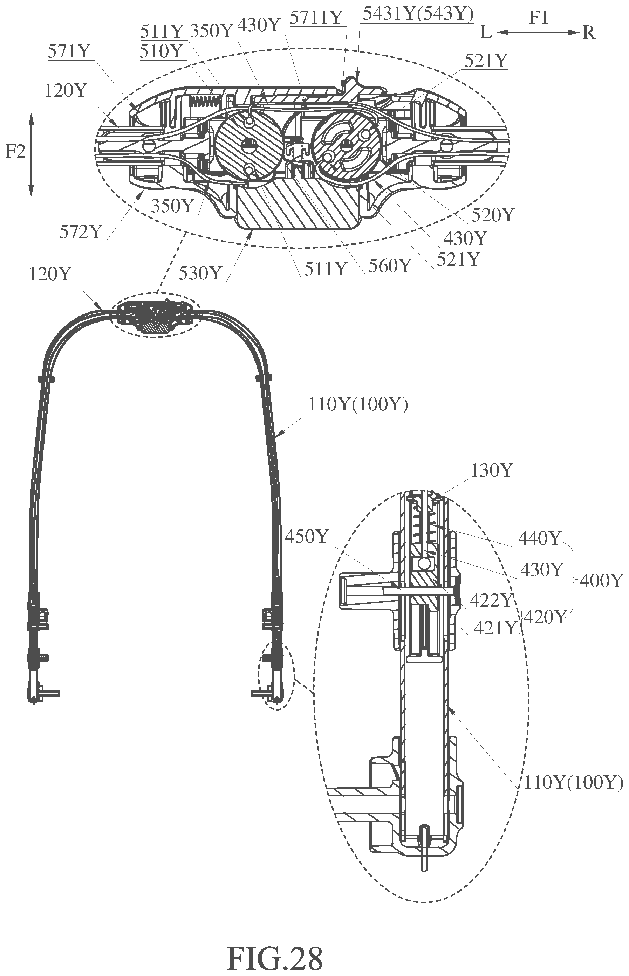

Referring to FIG. 19, FIG. 20, FIG. 27, and FIG. 28, in an embodiment, the fold locking mechanism 400Y further includes a second reset member 440Y and a fifth reset member (not shown in the drawings), and the second reset member 440Y and the fifth reset member may be reset members with elasticity such as springs or elastic sheets. As shown in FIG. 27 and FIG. 28, the second reset member 440Y abuts between the second driving member 422Y and the fixing support base 130Y and is configured to drive the second driving member 422Y to be reset. The fifth reset member provides the second locking member 410Y with an elastic restoring force for biasing the second locking member towards the second lock position. Specifically, in this embodiment, the second sliding sleeve 421Y drives the second locking member 410Y to move from the second lock position to the second unlock position in a pushing mode. Therefore, when the second driving member 422Y is reset to drive the second sliding sleeve 421Y to be reset, the second sliding sleeve 421Y is separated from the second locking member 410Y, and the second locking member 410Y can automatically move from the second unlock position to the second lock position under the elastic restoring force of the fifth reset member. Thus, when a pulling force acting on the second traction member 430Y is not present, the second driving member 422Y can be automatically reset and drive the second sliding sleeve 421Y to be reset to be separated from the second locking member 410Y under a reset force of the second reset member 440Y, and the second locking member 410Y can be automatically moved to the second lock position under a reset force of the fifth reset member.

The folding process of the stroller frame 1000Y will be briefly explained below with reference to related drawings.

Referring to FIG. 16, FIG. 17, FIG. 19, and FIG. 20, in this embodiment, when the stroller frame 1000Y is in the unfolded state, the second locking member 410Y is at the second lock position and extends into the first concave portion of the third transmission member 260Y to restrict the third transmission member 260Y and the handlebar frame 100Y from rotating around the first pivot point A1 relative to the first transmission member 230Y, and meanwhile restrict the third transmission member 260Y from rotating relative to the first transmission member 230Y, so that the first transmission member 230Y, the third transmission member 260Y, the armrest member 240Y, and the rear wheel frame 220Y can form a fixed four-connecting rod structure, and the second transmission member 250Y can also be stably supported between the front wheel frame 210Y and the rear stroller wheel frame 220Y to keep the stroller frame 1000Y in the unfolded state. Specifically, rod members between the sixth pivot point A6, the second pivot point A2, the third pivot point A3, and the first pivot point A1 (or the fifth pivot point A5) form the four-connecting rod structure, and two adjacent and connected connecting rods are relatively fixed.

When the stroller frame 1000Y is required to switch from the unfolded state to the folded state, the second locking member 410Y is driven to move to the second unlock position, so that the second locking member 410Y withdraws from the first concave portion of the third transmission member 260Y. Thus, both the handlebar frame 100Y and the third transmission member 260Y can rotate counterclockwise about the first pivot point A1 relative to the first transmission member 230Y. When the handlebar frame 100Y and the third transmission member 260Y are both rotatable relative to the first transmission member 230Y, the armrest member 240Y, the rear wheel frame 220Y, the first transmission member 230Y, and the third transmission member 260Y (or the handlebar frame 100Y) can form a movable four-connecting rod structure, and two adjacent and connected connecting rods are relatively pivotable. Thus, folding of the handlebar frame 100Y relative to the wheel frame 200Y and folding of the wheel frame 200Y itself (i.e., relative folding of the front wheel frame 210Y, the rear wheel frame 220Y, the armrest member 240Y, and other components) can be realized by the movable four-connecting rod structure.

Specifically, referring to FIG. 19 and FIG. 20, in the folding process, when both the handlebar frame 100Y and the third transmission member 260Y can rotate counterclockwise around the first pivot point A1 relative to the first transmission member 230Y, the handlebar frame 100Y drives the second end of the first transmission member 230Y to rotate clockwise around the third pivot point A3, and meanwhile, the third transmission member 260Y rotates counterclockwise around the sixth pivot point A6 to drive the armrest member 240Y to rotate clockwise around the second pivot point A2 to approach the rear wheel frame 220Y for folding. In addition, when the third transmission member 260Y rotates around the first pivot point A1 (or the fifth pivot point A5), the third transmission member 260Y also drives the first end of the second transmission member 250Y to rotate clockwise around the fourth pivot point A4, so as to pull the front wheel frame 210Y to gradually approach the rear wheel frame 220Y for folding. It should be noted that, in this embodiment, as shown in FIG. 23, FIG. 26, and FIG. 27, when the stroller frame 1000Y is in the folded state, the second concave portion of the second transmission member 250Y is opposite to the second locking member 410Y. The second driving member 422Y can cause the second sliding sleeve 421Y to be reset and separated from the second locking member 410Y under the action of the second reset member 440Y, so that the second locking member 410Y can move to the second lock position under the elastic restoring force of the fifth reset member to extend into the second concave portion for locking, so as to limit the unfolding of the stroller frame 1000Y.

In order to improve convenience of unlocking of the direction-change locking mechanism 300Y and the fold locking mechanism 400Y by the user, in some embodiments of the present invention, the unlocking mechanism 500Y can unlock the direction-change locking mechanism 300Y and the fold locking mechanism 400Y. Specifically, the unlocking mechanism 500Y can be drivingly connected to the direction-change locking mechanism 300Y and the fold locking mechanism 400Y, so as to allow the handlebar frame 100Y to rotate relative to the wheel frame 200Y for the direction change operation or folding operation. Specifically, as shown in FIG. 16 and FIG. 17, the unlocking mechanism 500Y is arranged on the handlebar frame 100Y. More specifically, the unlocking mechanism 500Y is arranged on the pushing handle tube 120Y of the handlebar frame 100Y, so that operations of the user are facilitated. Certainly, in other embodiments, the unlocking mechanism 500Y may alternatively be arranged on a support rod or the wheel frame 200Y, which is not limited herein.

Referring to FIG. 16, FIG. 21, and FIG. 28, in an embodiment, the unlocking mechanism 500Y includes a first unlocking member 510Y, a second unlocking member 520Y, and an operating member 530Y. The first unlocking member 510Y is rotatably arranged on the handlebar frame 100Y and drivingly connected to the direction-change locking mechanism 300Y to allow the handlebar frame 100Y to rotate relative to the wheel frame 200Y for direction changing. Specifically, the first unlocking member 510Y is drivingly connected to the first driving member 340Y of the direction-change locking mechanism 300Y. The second unlocking member 520Y is drivingly connected to the second driving member 422Y of the fold locking mechanism 400Y to allow the handlebar frame 100Y to rotate relative to the wheel frame 200Y for folding. Specifically, the second unlocking member 520Y is rotatably arranged on the handlebar frame 100Y and drivingly connected to the fold locking mechanism 400Y. The operating member 530Y is movably arranged on the handlebar frame 100Y and selectively drives the first unlocking member 510Y or the second unlocking member 520Y to rotate. It should be noted that, in other embodiments, the first unlocking member 510Y may alternatively be drivingly connected to the fold locking mechanism 400Y, and the second unlocking member 520Y may be drivingly connected to the direction-change locking mechanism 300Y, which is not limited herein.

The first unlocking member 510Y is rotatably arranged on the handlebar frame 100Y and drivingly connected to the first driving member 340Y, the second unlocking member 520Y is rotatably arranged on the handlebar frame 100Y and drivingly connected to the second driving member 422Y, and the operating member 530Y is movable and configured to drive either of the first unlocking member 510Y and the second unlocking member 520Y to rotate. Therefore, the user can control the first unlocking member 510Y to rotate by driving the operating member 530Y to move, and then indirectly control the first driving member 340Y and the first locking member 310Y in the fold locking mechanism 400Y. When the first locking member 310Y is at the first lock position, the locking portion 311Y of the first locking member 310Y is engaged and locked with the engaged locking portion 301Y of the first engaging member 320Y or the second engaging member 330Y, and the handlebar frame 100Y can be maintained at the first use position or the second use position. When the first locking member 310Y is at the first unlock position, the locking portion 311Y of the first locking member 310Y is disengaged from the engaged locking portion 301Y of the first engaging member 320Y or the second engaging member 330Y for unlocking, and the handlebar frame 100Y can freely switch between the first use position and the second use position. Meanwhile, the user can also control the second unlocking member 520Y to rotate by driving the operating member 530Y to move, and then indirectly control the second driving assembly 420Y and the second locking member 410Y in the fold locking mechanism 400Y. When the second locking member 410Y is at the second lock position, the stroller frame 1000Y is restricted from switching between the unfolded state and the folded state. That is, the stroller frame 1000Y can be maintained in the unfolded state or the folded state. When the second locking member 410Y is at the second unlock position, the stroller frame 1000Y can be allowed to switch between the unfolded state and the folded state. Since the user can control different locking mechanisms only by operating the above unlocking mechanism 500Y, convenience of the operation of the user is improved.

Referring to FIG. 21 and FIG. 28 to FIG. 32, in an embodiment, the first unlocking member 510Y and the second unlocking member 520Y may be both disc-shaped and rotatably mounted on the pushing handle tube 120Y of the handlebar frame 100Y by shafts, pins, or the like. Specifically, the pushing handle tube 120Y is provided therein with a mounting base 140Y, and the first unlocking member 510Y and the second unlocking member 520Y are rotatably mounted on the mounting base 140Y. The first unlocking member 510Y is provided with a first connecting portion 511Y, and the first connecting portion 511Y and a rotation center of the first unlocking member 510Y are misaligned, for example, may be arranged in a straight line or may be arranged in a non-straight line, but the present invention is not limited thereto. The first connecting portion 511Y is configured to be connected to the direction-change locking mechanism 300Y. Specifically, the first connecting portion 511Y is connected to the first driving member 340Y through the first traction member 350Y. When the operating member 530Y drives the first unlocking member 510Y to rotate around the rotation center thereof, the first connecting portion 511Y rotates around the rotation center of the first unlocking member 510Y synchronously, so as to drive the first traction member 350Y to move to pull the first driving member 340Y to move, and finally drive the first locking member 310Y to move from the first lock position to the first unlock position. Similarly, the second unlocking member 520Y is provided with a second connecting portion 521Y, and the second connecting portion 521Y and a rotation center of the second unlocking member 520Y are misaligned, for example, may be arranged in a straight line or may be arranged in a non-straight line, but the present invention is not limited thereto. The second connecting portion 521Y is configured to be connected to the fold locking mechanism 400Y. Specifically, the second connecting portion 521Y is connected to the second driving assembly 420Y (specifically, the second driving member 422Y) through the second traction member 430Y. Therefore, when the operating member 530Y drives the second unlocking member 520Y to rotate around the rotation center thereof, the second connecting portion 521Y rotates around the rotation center of the second unlocking member 520Y synchronously, so as to drive the second traction member 430Y to move to pull the second driving assembly 420Y to move, and finally push or drive the second locking member 410Y to move from the second lock position to the second unlock position.

Specifically, in this embodiment, as shown in FIG. 21 and FIG. 28, the first traction member 350Y and the second traction member 430Y may be both traction ropes, for example. More specifically, the first unlocking member 510Y is provided with two first connecting portions 511Y, and the second unlocking member 520Y is provided with two second connecting portions 521Y. The two first connecting portions 511Y are connected to two first traction members 350Y respectively, and the two second connecting portions 521Y are connected to two second traction members 430Y respectively. Thus, when the first unlocking member 510Y rotates, the two direction-change locking mechanisms 300Y can be simultaneously controlled to be unlocked. When the second unlocking member 520Y rotates, the two fold locking mechanisms 400Y can be simultaneously controlled to be unlocked.

With continued reference to FIG. 21 and FIG. 28 to FIG. 32, in an embodiment, the unlocking mechanism 500Y further includes a safety lock 540Y. The safety lock 540Y is movably arranged on the handlebar frame 100Y and is switchable between a first position and a second position. When the safety lock 540Y is at the first position (see FIG. 22), the operating member 530Y is drivingly connected to the first unlocking member 510Y through the safety lock 540Y. When the safety lock 540Y is at the second position (see FIG. 28), the operating member 530Y is drivingly connected to the second unlocking member 520Y through the safety lock 540Y. Specifically, when the user needs to unlock the direction-change locking mechanism 300Y to change a use direction of the handlebar frame 100Y, the safety lock 540Y can be moved to the first position, so that the first unlocking member 510Y can be rotated by operating the operating member 530Y. When the user needs to unlock the fold locking mechanism 400Y to switch the stroller frame 1000Y between the unfolded state and the folded state, the safety lock 540Y can be moved to the second position, so that the second unlocking member 520Y can be rotated by operating the operating member 530Y.

With continued reference to FIG. 21 and FIG. 28 to FIG. 32, in an embodiment, the safety lock 540Y includes a first linkage member 541Y, a second linkage member 542Y, and a toggle member 543Y. The first linkage member 541Y is drivingly connected to the first unlocking member 510Y; the second linkage member 542Y is drivingly connected to the second unlocking member 520Y, the toggle member 543Y is connected to the first linkage member 541Y and the second linkage member 542Y, and the toggle member 543Y is movably arranged on the handlebar frame 100Y and switchable between the first position and the second position, so as to drive the first linkage member 541Y and the second linkage member 542Y to move along a first direction F1. Specifically, when the toggle member 543Y is located at the first position, the operating member 530Y is operated to push against the first linkage member 541Y to move along a second direction F2,such that the first unlocking member 510Y is rotated; when the toggle member 543Y is located at the second position, the operating member 530Y is operated to push against the second linkage member 542Y to move along the second direction F2, such that the second unlocking member 520Y is rotated. The first direction F1 intersects with the second direction F2.

Referring to FIG. 21 and FIG. 28 to FIG. 32 again, in an embodiment, the first linkage member 541Y has a first abutting portion 5411Y, and the second linkage member 542Y has a second abutting portion 5421Y. The operating member 530Y has a first driving portion 531Y and a second driving portion 532Y spaced apart. When the toggle member 543Y is located at the first position, the first abutting portion 5411Y is aligned with the first driving portion 531Y, and the second abutting portion 5421Y is misaligned with the second driving portion 532Y. Thus, when the operating member 530Y moves upwards along the second direction F2, the first driving portion 531Y can abut against the first abutting portion 5411Y, so as to push the first linkage member 541Y to move along the second direction F2, and then drive the first unlocking member 510Y to rotate, thereby finally unlocking the direction-change locking mechanism 300Y. Meanwhile, since the second abutting portion 5421Y is misaligned with the second driving portion 532Y, when the operating member 530Y moves upwards along the second direction F2, the second driving portion 532Y does not contact the second abutting portion 5421Y, and thus, the second linkage member 542Y and the second unlocking member 520Y can be kept still. That is, when the operating member 530Y is operated, the fold locking mechanism 400Y is not affected. Similarly, when the toggle member 543Y is located at the second position, the second abutting portion 5421Y is aligned with the second driving portion 532Y, and the first abutting portion 5411Y is misaligned with the first driving portion 531Y. Thus, when the operating member 530Y moves upwards along the second direction F2, the second driving portion 532Y can abut against the second abutting portion 5421Y, so as to push the second linkage member 542Y to move along the second direction F2, and then drive the second unlocking member 520Y to rotate, thereby finally unlocking the fold locking mechanism 400Y. Meanwhile, since the first abutting portion 5411Y is misaligned with the first driving portion 531Y, when the operating member 530Y moves upwards along the second direction F2, the first driving portion 531Y does not contact the first abutting portion 5411Y, and thus, the first linkage member 541Y and the first unlocking member 510Y can be kept still. That is, when the operating member 530Y is operated, the fold locking mechanism 400Y is not affected.

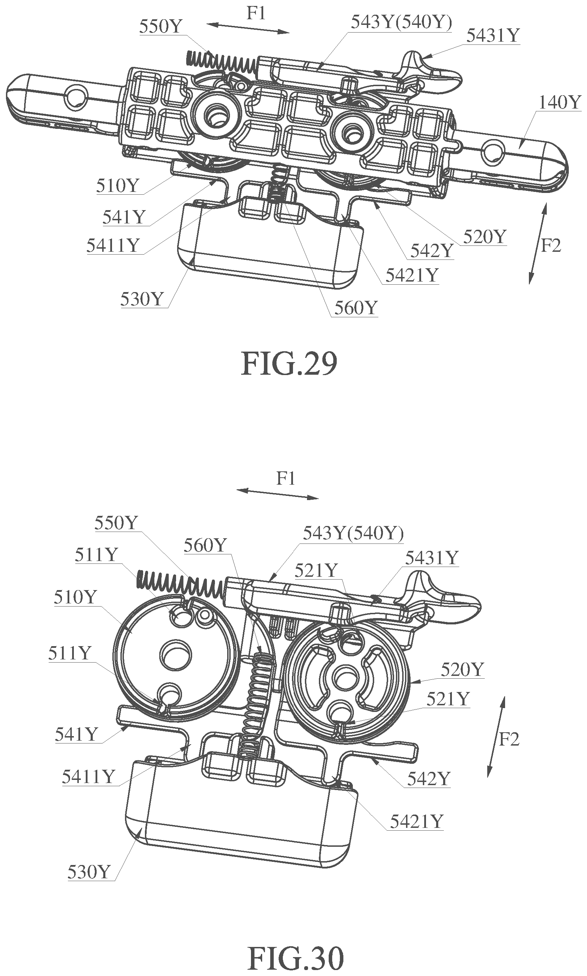

Referring to FIG. 29 to FIG. 32, in an embodiment, the operating member 530Y further has a third driving portion 533Y and a fourth driving portion 534Y. The third driving portion 533Y and the fourth driving portion 534Y are spaced apart and located between the first driving portion 531Y and the second driving portion 532Y. The first linkage member 541Y and the second linkage member 542Y are spaced apart, and a third avoidance portion 544Y is formed therebetween. Specifically, the first linkage member 541Y further has a third abutting portion 5412Y, and the second linkage member 542Y further has a fourth abutting portion 5422Y. When the toggle member 543Y is located at the first position, the third abutting portion 5412Y is aligned with the third driving portion 533Y, the first abutting portion 5411Y is aligned with the first driving portion 531Y, and the fourth driving portion 534Y is aligned with the third avoidance portion 544Y. Therefore, when the operating member 530Y moves upwards in the second direction F2, the first driving portion 531Y can abut against the first abutting portion 5411Y, and the third abutting portion 5412Y can abut against the third driving portion 533Y, so that the first linkage member 541Y is pushed to move along the second direction F2 at the same time. Meanwhile, in the process that the operating member 530Y moves upwards along the second direction F2, the fourth driving portion 534Y is gradually inserted into the third avoidance portion 544Y, thus preventing the second linkage member 542Y from being driven to move when the toggle member 543Y is located at the first position. Similarly, when the toggle member 543Y is located at the second position, the fourth abutting portion 5422Y is aligned with the fourth driving portion 534Y, the second abutting portion 5421Y is aligned with the second driving portion 532Y, and the third driving portion 533Y is aligned with the third avoidance portion 544Y. Therefore, when the operating member 530Y moves upwards along the second direction F2, the second driving portion 532Y can abut against the second abutting portion 5421Y, and the fourth abutting portion 5422Y can abut against the fourth driving portion 534Y, so that the second linkage member 542Y is pushed to move along the second direction F2 at the same time. Meanwhile, in the process that the operating member 530Y moves upwards along the second direction F2, the third driving portion 533Y is gradually inserted into the third avoidance portion 544Y, thus preventing the first linkage member 541Y from being driven to move when the toggle member 543Y is located at the second position.

In an embodiment, a first avoidance portion is formed between the first abutting portion 5411Y and the third abutting portion 5412Y. A second avoidance portion is formed between the second abutting portion 5421Y and the fourth abutting portion 5422Y. Specifically, when the toggle member 543Y is located at the first position and the operating member 530Y is operated, the second avoidance portion is configured to avoid the second driving portion 532Y. When the toggle member 543Y is located at the second position and the operating member 530Y is operated, the first avoidance portion is configured to avoid the first driving portion 531Y.

Referring to FIG. 21, FIG. 28, and FIG. 29, in an embodiment, the unlocking mechanism 500Y further includes a third reset member 550Y, which may be an elastic member such as a spring or an elastic sheet. The third reset member 550Y abuts between the handlebar frame 100Y (e.g., the pushing handle tube 120Y) and the toggle member 543Y and is configured to provide an elastic restoring force for the toggle member 543Y to keep the toggle member 543Y at the first position or the second position. For example, in this embodiment, the third reset member 550Y is configured to constantly keep the toggle member 543Y at the first position. If the direction-change locking mechanism 300Y is required to be unlocked, the operating member 530Y is directly operated (e.g., pressed or pushed upwards). If the fold locking mechanism 400Y is required to be unlocked, the toggle member 543Y is required to be moved to the second position first, and then, the operating member 530Y is operated. After the fold locking mechanism 400Y is unlocked completely, the toggle member 543Y is released, and the toggle member 543Y is automatically reset to the first position under the reset action of the third reset member 550Y.

In an embodiment, one of the first linkage member 541Y and the first unlocking member 510Y has a first guide concave portion (not shown in the drawings), and the other has a first engaging convex portion (not shown in the drawings). The first engaging convex portion is slidably arranged within the first guide concave portion, and the first guide concave portion extends along the first direction F1. Similarly, one of the second linkage member 542Y and the second unlocking member 520Y has a second guide concave portion (not shown in the drawings), and the other has a second engaging convex portion (not shown in the drawings). The second engaging convex portion is slidably arranged in the second guide concave portion, and the second guide concave portion extends along the first direction F1. Thus, when switching between the first position and the second position along the first direction F1, the toggle member 543Y can drive the first linkage member 541Y and the second linkage member 542Y to move left and right along the first direction F1 at the same time, so that the first unlocking member 510Y and the second unlocking member 520Y are kept still. Meanwhile, when the first linkage member 541Y moves up and down along the second direction F2, the first linkage member 541Y can also drive the first unlocking member 510Y to rotate; when the second linkage member 542Y moves up and down along the second direction F2, the second linkage member 542Y can also drive the second unlocking member 520Y to rotate.

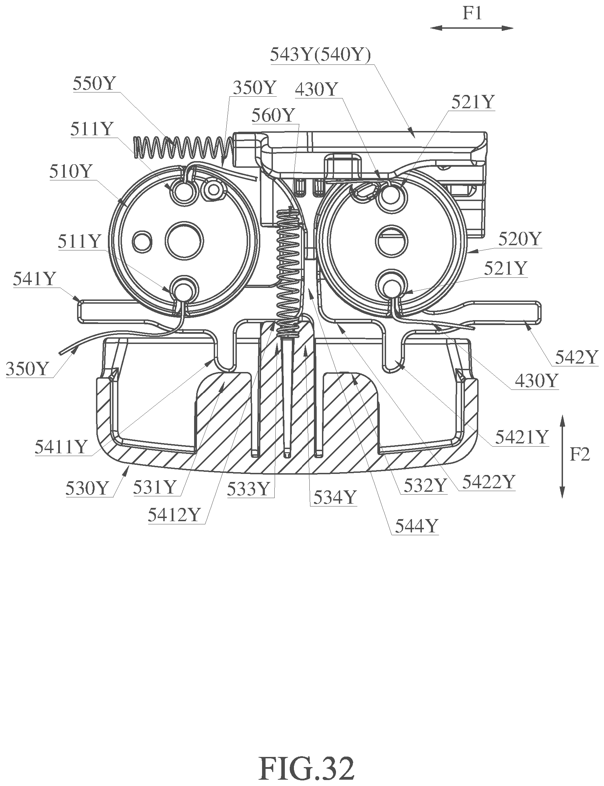

Referring to FIG. 21, FIG. 22, FIG. 28, and FIG. 32, in an embodiment, the operating member 530Y has an initial position (see FIG. 21 and FIG. 32) and an unlock position (see FIG. 22 and FIG. 28) when moving along the second direction F2. When located at the initial position, the operating member 530Y can be operated to move to push against the first linkage member 541Y or the second linkage member 542Y to move. In other words, when the operating member 530Y is at the initial position, the first driving portion 531Y on the operating member 530Y and the first abutting portion 5411Y as well as the third driving portion 533Y on the operating member 530Y and the third abutting portion 5412Y (or the second driving portion 532Y on the operating member 530Y and the second abutting portion 5421Y as well as the fourth driving portion 534Y on the operating member 530Y and the fourth abutting portion 5422Y) may have gaps or are just in contact, so that the first linkage member 541Y (or the second linkage member 542Y) may be pushed to move upwards by pushing or pressing the operating member 530Y upwards. When the operating member 530Y is located at the unlock position, the operating member 530Y pushes against the first linkage member 541Y or the second linkage member 542Y.

Specifically, as shown in FIG. 21, FIG. 22, FIG. 28, and FIG. 32, when the toggle member 543Y is in the first position and the operating member 530Y is at the initial position, the first driving portion 531Y and the first abutting portion 5411Y as well as the third driving portion 533Y and the third abutting portion 5412Y may have gaps or are just in contact. In this case, the operating member 530Y may be pushed or pressed upwards to move to the unlock position and pushes against the first linkage member 541Y during the process, so that the first linkage member 541Y drives the first unlocking member 510Y to rotate. When the toggle member 543Y is at the second position and the operating member 530Y is at the initial position, the second driving portion 532Y and the second abutting portion 5421Y as well as the fourth driving portion 534Y and the fourth abutting portion 5422Y may have gaps or are just in contact. In this case, the operating member 530Y may be pushed or pressed upwards to move to the unlock position and pushes against the second linkage member 542Y during the process, so that the second linkage member 542Y drives the second unlocking member 520Y to rotate.

Referring to FIG. 21 and FIG. 29, in an embodiment, the unlocking mechanism 500Y further includes a fourth reset member 560Y, which may be an elastic member such as a spring or an elastic sheet. The fourth reset member 560Y abuts between the mounting base 140Y of the handlebar frame 100Y and the operating member 530Y and is configured to provide an elastic restoring force for the operating member 530Y to maintain the operating member 530Y at the initial position.

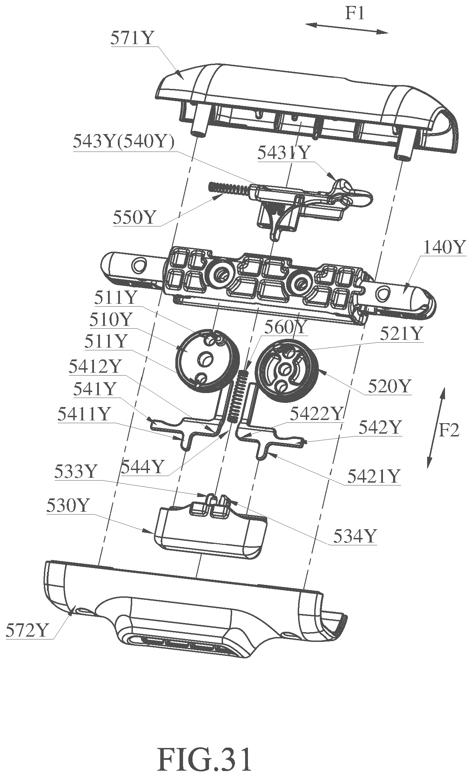

Referring to FIG. 21 and FIG. 31, in an embodiment, the unlocking mechanism 500Y further includes a first fixing cover 571Y and a second fixing cover 572Y. The first fixing cover 571Y covers a top portion of the pushing handle tube 120Y, the second fixing cover 572Y covers the bottom of the pushing handle tube 120Y, and the second fixing cover 572Y is provided with a perforation for the operating member 530Y to pass through. The first fixing cover 571Y and the second fixing cover 572Y are connected, fit and are fixed to the pushing handle tube 120Y. Thus, the operating member 530Y and other components can be limited to prevent the operating member 530Y, or the like, from being separated from the pushing handle tube 120Y. In addition, the first fixing cover 571Y and the second fixing cover 572Y cover the first unlocking member 510Y, the second unlocking member 520Y, and the safety lock 540Y, which can also simplify and beautify the unlocking mechanism 500Y and the stroller frame 1000Y. Specifically, as shown in FIG. 21, the first fixing cover 571Y is provided with an operating hole 5711Y, the toggle member 543Y is provided with a pushing portion 5431Y, the pushing portion 5431Y can pass through the operating hole 5711Y for the user to grip, and the user can change the position of the toggle member 543Y by pushing the pushing portion 5431Y.

The stroller frame 1000Y and the unlocking mechanism 500Y thereof have the following technical effects.

The stroller frame 1000Y includes the unlocking mechanism 500Y. In the above unlocking mechanism 500Y, the first unlocking member 510Y is rotatably arranged on the stroller frame 1000Y and drivingly connected to the direction-change locking mechanism 300Y, the second unlocking member 520Y is rotatably arranged on the stroller frame 1000Y and drivingly connected to the fold locking mechanism 400Y, the operating member 530Y is movable and configured to drive either of the first unlocking member 510Y and the second unlocking member 520Y to rotate, the direction-change locking mechanism 300Y can allow the handlebar frame 100Y to rotate relative to the wheel frame 200Y for direction changing, and the fold locking mechanism 400Y can allow the handlebar frame 100Y to rotate relative to the wheel frame 200Y for folding. Therefore, the user controls the first unlocking member 510Y to rotate by driving the operating member 530Y to move, and then indirectly controls the direction-change locking mechanism 300Y, so that the direction of the handlebar frame 100Y of the stroller frame 1000Y can be changed. Meanwhile, the user can also control the second unlocking member 520Y to rotate by driving the operating member 530Y to move, and then indirectly control the fold locking mechanism 400Y, so that the stroller frame 1000Y is switchable between the unfolded state and the folded state. Since the user can control different locking mechanisms only by operating the above unlocking mechanism 500Y, convenience of the operation of the user is improved.

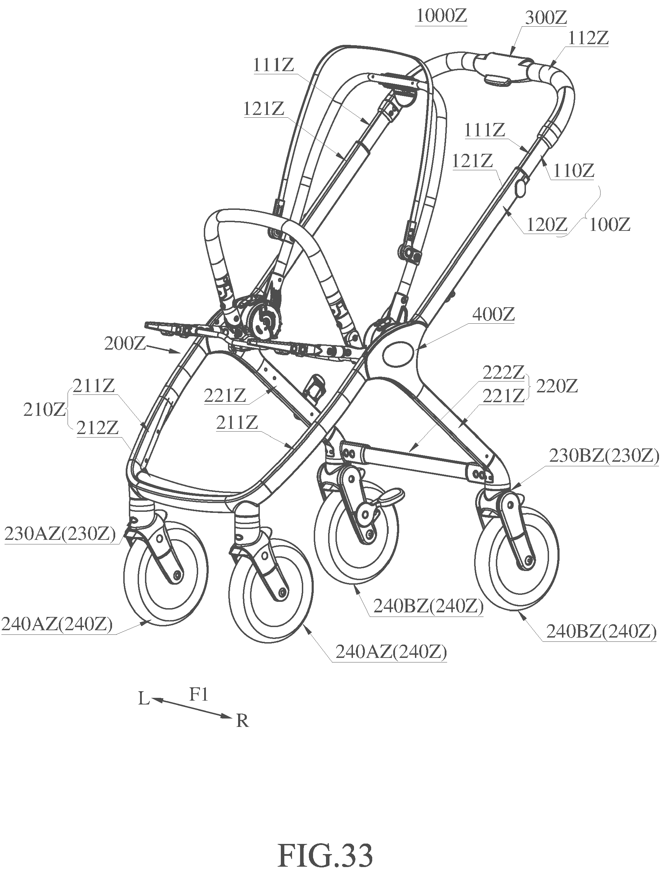

FIG. 33 shows a stroller frame 1000Z according to an embodiment of the present invention. An overall structure of the stroller frame 1000Z is substantially bilaterally symmetric, and the stroller frame can be used as a frame for a child stroller, a pet stroller, or a cargo stroller. For example, in this embodiment, the stroller frame 1000Z is used as the frame of the child stroller to describe the structure and working principle thereof.

Referring to FIG. 33, in an embodiment, the stroller frame 1000Z may include, for example, a handlebar frame 100Z, a wheel frame 200Z, a wheel base 230Z, and an unlocking mechanism 300Z according to an embodiment of the present invention. Since the stroller frame 1000Z has a symmetric structure, mainly with one side as an example, the handlebar frame 100Z, the wheel frame 200Z, the wheel base 230Z, and the unlocking mechanism 300Z will be described together below while the stroller frame 1000Z is described.

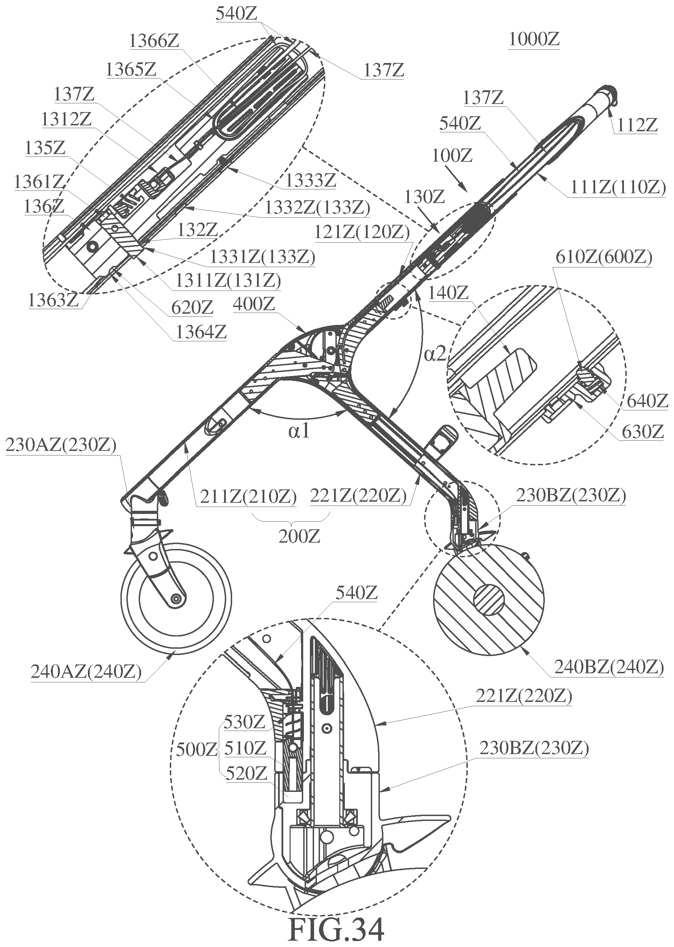

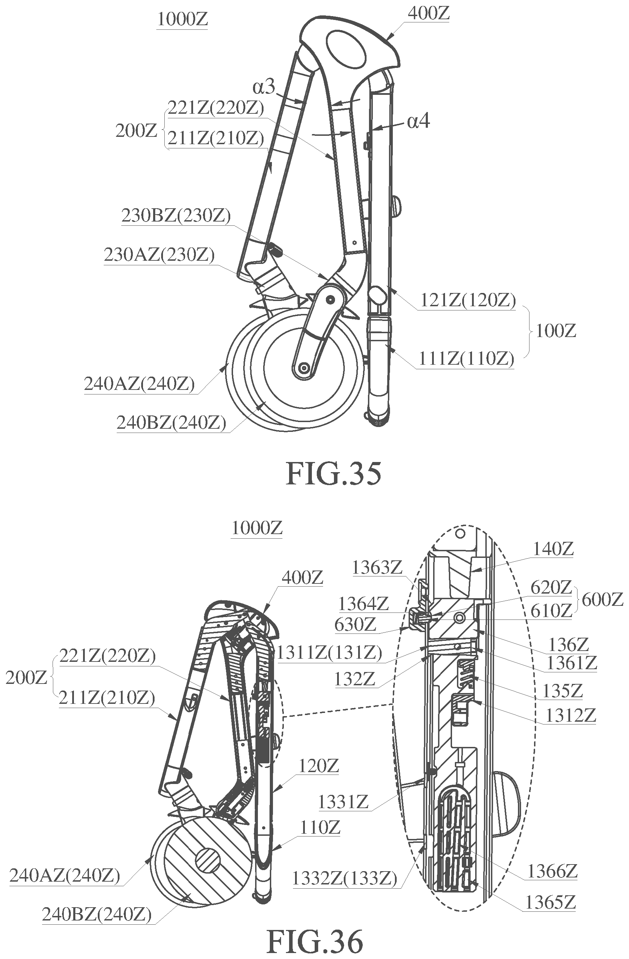

Referring to FIG. 33 to FIG. 36, in an embodiment, the wheel frame 200Z and the handlebar frame 100Z are pivotally connected to each other to cause the whole stroller frame 1000Z to have a folded state (in other embodiments, the folded state can also be called the collapsed state or the closed state) (see FIG. 35) and an unfolded state (see FIG. 33). Specifically, the handlebar frame 100Z includes an upper handlebar frame 110Z and a lower handlebar frame 120Z which are movable relative to each other, and an end portion of the lower handlebar frame 120Z away from the upper handlebar frame 110Z is pivotally connected to the wheel frame 200Z. The wheel frame 200Z includes a front wheel frame 210Z and a rear wheel frame 220Z that are pivotally connected, and the lower handlebar frame 120Z, the front wheel frame 210Z, and the rear wheel frame 220Z can be pivotally connected through a first pivot base 400Z. When the stroller frame 1000Z switches from the unfolded state to the folded state, the front wheel frame 210Z pivots about the first pivot base 400Z to approach the rear wheel frame 220Z, and the lower handlebar frame 120Z pivots about the first pivot base 400Z to approach the rear wheel frame 220Z. When the stroller frame 1000Z switches from the folded state to the unfolded state, the front wheel frame 210Z pivots about the first pivot base 400Z to get away from the rear wheel frame 220Z, and the lower handlebar frame 120Z pivots about the first pivot base 400Z to get away from the rear wheel frame 220Z. Specifically, when the stroller frame 1000Z is in the unfolded state, a first included angle α1 is formed between the front wheel frame 210Z and the rear wheel frame 220Z, and a second included angle α2 is formed between the lower handlebar frame 120Z and the rear wheel frame 220Z. When the stroller frame 1000Z is in the folded state, a third included angle α3 is formed between the front wheel frame 210Z and the rear wheel frame 220Z, and a fourth included angle α4 is formed between the lower handlebar frame 120Z and the rear wheel frame 220Z. α1>α3, and α2>α 4 (see FIG. 34 and FIG. 35). Certainly, in other embodiments, the lower handlebar frame 120Z may alternatively be directly pivotally connected to the front wheel frame 210Z or the rear wheel frame 220Z. Specific structures of the wheel frame 200Z (including the front wheel frame 210Z and the rear wheel frame 220Z) and the handlebar frame 100Z (including the upper handlebar frame 110Z and the lower handlebar frame 120Z) will be further described one by one below.

Referring to FIG. 33, in an embodiment, the front wheel frame 210Z has a U-shaped structure, for example, which includes front rod members 211Z on left and right sides and a front cross rod 212Z connected between the two front rod members 211Z. The front cross rod 212Z extends roughly along a first direction F1, and the first direction F1 is equivalent to the left-right direction. The front cross rod 212Z may also be used as a foot pedal when the stroller frame 1000Z is used as the frame of the child stroller.

In an embodiment, at least one wheel base 230Z (which may be referred to herein as a front wheel base 230ZA) is mounted at the bottom of the front wheel frame 210Z. Specifically, in this embodiment, as shown in FIG. 33, two front wheel bases 230ZA are mounted at the bottom of the front wheel frame 210Z, and the two front wheel bases 230ZA are spaced apart in the left-right direction (i.e., the first direction F1). More specifically, the two front wheel bases 230ZA are fixedly mounted at left and right ends of the front cross rod 212Z, and each front wheel base 230ZA is configured to mount a wheel 240Z (which may be referred to herein as a front wheel 240ZA). Certainly, in another alternative embodiment, the front wheel frame 210Z may alternatively have other implementations. For example, the front wheel frame 210Z only includes two front rod members 211Z, one ends of the two front rod members 211Z are connected to form a V-shaped structure, and one front wheel base 230ZA may be centrally mounted at the bottom of the front wheel frame 210Z. Alternatively, for example, the front wheel frame 210Z includes only two front rod members 211Z substantially parallel in the left-right direction, and two front wheel bases 230ZA are connected to the two front rod members 211Z respectively.

It should be noted that, unless otherwise explicitly stated and limited, the orientation terms "left", "right", or the like, of the stroller frame 1000Z in the embodiments of the present invention are based on the orientations "left" and "right" of the normally traveling stroller frame 1000Z, and "left" and "right" are schematically shown by arrows L and R in the drawings. These orientation terms are used only to make the description of the embodiments of the present invention clearer, and are not used to unduly define the protection scope of the present invention.

With continued reference to FIG. 33, in an embodiment, the rear wheel frame 220Z may also have a U-shaped structure, for example, which includes two rear rod members 221Z on left and right sides and a rear cross rod 222Z connected between the two rear rod members 221Z, and the rear cross rod 222Z extends along the first direction F1. At least one wheel base 230Z (which may be referred to herein as a rear wheel base 230BZ) is also mounted at the bottom of the rear wheel frame 220Z. In this embodiment, two rear wheel bases 230BZ are mounted at the bottom of the rear wheel frame 220Z, and the two rear wheel bases 230BZ are spaced apart in the left-right direction (i.e., the first direction F1). More specifically, the two rear wheel bases 230BZ are connected to the rear rod members 221Z on the same sides respectively, and each rear wheel base 230BZ is configured to mount a wheel 240Z (which may be referred to herein as a rear wheel 240BZ). Specifically, the rear wheel base 230BZ is connected to the rear wheel 240BZ, and the rear wheel base 230BZ is rotatably connected to the rear wheel frame 220Z (specifically, the rear rod member 221Z on the same side) through a connecting shaft. Certainly, in another alternative embodiment, the rear wheel frame 220Z may have other implementations. For example, the rear wheel frame 220Z only includes two rear rod members 221Z, one ends of the two rear rod members 221Z are connected to form a V-shaped structure, and one rear wheel base 230BZ may be centrally mounted at the bottom of the rear wheel frame 220Z. Alternatively, for example, the rear wheel frame 220Z includes only two rear rod members 221Z parallel in the left-right direction, and two rear wheel bases 230BZ are connected to the two rear rod members 221Z respectively.

Referring to FIG. 33 and FIG. 34, in an embodiment, the stroller frame 1000Z further includes a wheel locking mechanism 500Z, the wheel locking mechanism 500Z is arranged between the wheel frame 200Z and the wheel base 230Z, and the wheel locking mechanism 500Z is configured to restrict the wheel base 230Z from rotating relative to the wheel frame 200Z or allow the wheel base 230Z to rotate relative to the wheel frame 200Z. Specifically, in this embodiment, as shown in FIG. 34, the wheel locking mechanism 500Z is provided between the rear wheel frame 220Z and the rear wheel base 230BZ, and is configured to restrict the rear wheel base 230BZ from rotating relative to the rear wheel frame 220Z or allow the rear wheel base 230BZ to rotate relative to the rear wheel frame 220Z. When the rear wheel base 230BZ is fixed relative to the rear wheel frame 220Z, the rear wheel 240BZ is fixed relative to the rear wheel frame 220Z, steering of the stroller frame 1000Z is locked, and the stroller frame 1000Z can linearly move forwards or backwards. When the rear wheel base 230BZ is rotatable relative to the rear wheel frame 220Z, the rear wheel 240BZ is rotatable relative to the rear wheel frame 220Z, so that the stroller frame 1000Z can perform a steering drifting operation, thus improving moving flexibility of the stroller frame 1000Z.

Referring to FIG. 34, in an embodiment, the wheel locking mechanism 500Z includes a first locking member 510Z and a first locking concave portion 520Z. The wheel base 230Z (specifically, the rear wheel base 230BZ) is provided with the first locking concave portion 520Z. That is, the first locking concave portion 520Z is arranged on the wheel base 230Z. The first locking member 510Z is movably arranged on the wheel frame 200Z (specifically, the rear wheel frame 220Z) and adapted to be locked and engaged with the first locking concave portion 520Z. Specifically, when the first locking member 510Z extends into the first locking concave portion 520Z to be locked and engaged with the first locking concave portion 520Z, the wheel base 230Z (specifically, the rear wheel base 230BZ) is restricted from rotating relative to the wheel frame 200Z (specifically, the rear wheel frame 220Z), thereby restricting the stroller frame 1000Z from performing steering drifting. When the first locking member 510Z withdraws from the first locking concave portion 520Z to be unlocked and disengaged from the first locking concave portion 520Z, the wheel base 230Z (specifically, the rear wheel base 230BZ) is allowed to rotate relative to the wheel frame 200Z (specifically, the rear wheel frame 220Z), thereby allowing the stroller frame 1000Z to perform steering drifting.

With continued reference to FIG. 34, in an embodiment, the wheel locking mechanism 500Z further includes a second reset member 530Z, the second reset member 530Z abutting between the rear wheel frame 220Z and the first locking member 510Z and being configured to provide an elastic restoring force for the first locking member 510Z, so that the first locking member 510Z constantly has a tendency of extending into the first locking concave portion 520Z. For example, the second reset member 530Z may be an elastic component such as a spring or an elastic sheet.

It should be noted that, in this embodiment, in order to further improve the steering flexibility of the stroller frame 1000Z, the stroller frame 1000Z is provided with two wheel locking mechanisms 500Z, and one wheel locking mechanism 500Z is arranged between the rear rod member 221Z and the rear wheel base 230BZ on the same side.

Referring to FIG. 33 and FIG. 34, in an embodiment, the upper handlebar frame 110Z is movable relative to the lower handlebar frame 120Z. For example, the upper handlebar frame 110Z can be in slidably sleeved connection with the lower handlebar frame 120Z, so that a height of the entire handlebar frame 100Z relative to the ground when the stroller frame 1000Z is in the unfolded state can be adjusted to facilitate grip by users with different heights, thereby improving applicability of the stroller frame 1000Z. In an embodiment, the upper handlebar frame 110Z has, for example, a U-shaped structure including two first support tubes 111Z and a pushing handle tube 112Z connected between the two first support tubes 111Z. The first support tubes 111Z are straight tubes, and the pushing handle tube 112Z has a U-shaped structure and is connected between the two first support tubes 111Z and configured to be gripped by the user to push the stroller frame 1000Z. More specifically, the lower handlebar frame 120Z includes, for example, two second support tubes 121Z, upper ends of the two second support tubes 121Z are in slidably sleeved connection with, for example, lower ends of the first support tubes 111Z on the same sides respectively, and lower ends of the two second support tubes 121Z are pivotally connected to, for example, the first pivot bases 400Z on the same sides respectively. It should be noted that the two second support tubes 121Z are in slidably sleeved connection with the first support tubes 111Z on the same sides respectively, which includes the following two implementations: the second support tube 121Z sleeves the first support tube 111Z, and the first support tube 111Z sleeves the second support tube 121Z. Specifically, in this embodiment, a cooperation principle of the second support tube 121Z and the first support tube 111Z is specifically described by taking the example that the second support tube sleeves the first support tube. In addition, it should be further noted that the above "height of the entire handlebar frame 100Z relative to the ground" may be regarded as a height of the pushing handle tube 112Z from the ground substantially in a vertical direction.

In order to stably maintain the handlebar frame 100Z at a desired height, i.e., to prevent the upper handlebar frame 110Z from sliding freely relative to the lower handlebar frame 120Z, in an embodiment, as shown in FIG. 34, the handlebar frame 100Z further includes a height adjustment locking mechanism 130Z, the height adjustment locking mechanism 130Z is arranged between the upper handlebar frame 110Z and the lower handlebar frame 120Z, and the upper handlebar frame 110Z and the lower handlebar frame 120Z can be restricted from moving relatively or allowed to move relatively through the height adjustment locking mechanism 130Z. Specifically, the height adjustment locking mechanism 130Z has a locked state and an unlocked state. When the height adjustment locking mechanism 130Z is in the locked state, the upper handlebar frame 110Z is fixed relative to the lower handlebar frame 120Z, and the upper handlebar frame and the lower handlebar frame cannot slide relatively. When the height adjustment locking mechanism 130Z is in the unlocked state, the upper handlebar frame 110Z can slide relative to the lower handlebar frame 120Z.

Referring to FIG. 34, in an embodiment, the height adjustment locking mechanism 130Z includes a second locking assembly 131Z and a second engaged locking portion 133Z. The second engaged locking portion 133Z is arranged on the lower handlebar frame 120Z, and the second locking assembly 131Z is movably arranged on the upper handlebar frame 110Z and adapted to be locked and engaged with the second engaged locking portion 133Z. Specifically, when the second locking assembly 131Z extends into the second engaged locking portion 133Z to be locked and engaged, the upper handlebar frame 110Z is restricted from sliding relative to the lower handlebar frame 120Z. When the second locking assembly 131Z withdraws from the second engaged locking portion 133Z to be disengaged, the upper handlebar frame 110Z is allowed to slide relative to the lower handlebar frame 120Z.

In this embodiment, the second locking assembly 131Z includes a second locking member 1311Z. Specifically, the second locking member 1311Z is arranged in the upper handlebar frame 110Z and movable relative to the upper handlebar frame 110Z and the lower handlebar frame 120Z to have a lock position and an unlock position. More specifically, the height adjustment locking mechanism 130Z further includes a first engaged locking portion 132Z, the first engaged locking portion 132Z being arranged on the upper handlebar frame 110Z. When the second locking member 1311Z is at the lock position, the second locking member 1311Z is locked and engaged with the first engaged locking portion 132Z and the second engaged locking portion 133Z to restrict the upper handlebar frame 110Z from sliding relative to the lower handlebar frame 120Z, and in this case, the height adjustment locking mechanism 130Z is in the locked state, so that the height of the entire handlebar frame 100Z relative to the ground is fixed. When the second locking member 1311Z is at the unlock position, the second locking member 1311Z unlocks the first engaged locking portion 132Z and the second engaged locking portion 133Z to allow the upper handlebar frame 110Z to slide relative to the lower handlebar frame 120Z, and in this case, the height adjustment locking mechanism 130Z is in the unlocked state, so that the height of the entire handlebar frame 100Z can be adjusted to adapt to gripping by the users with different heights . It should be noted that, in this embodiment, the first engaged locking portion 132Z has a slotted hole structure arranged on the first support tube 111Z in the upper handlebar frame 110Z, the second engaged locking portion 133Z has a slotted hole structure arranged on the second support tube 121Z in the lower handlebar frame 120Z, and when the second locking member 1311Z is at the lock position, the second locking member 1311Z passes through the first engaged locking portion 132Z and the second engaged locking portion 133Z to be locked and engaged with the first engaged locking portion 132Z and the second engaged locking portion 133Z. When the second locking member 1311Z is at the unlock position, the second locking member 1311Z withdraws from the second engaged locking portion 133Z to unlock the second engaged locking portion 133Z.

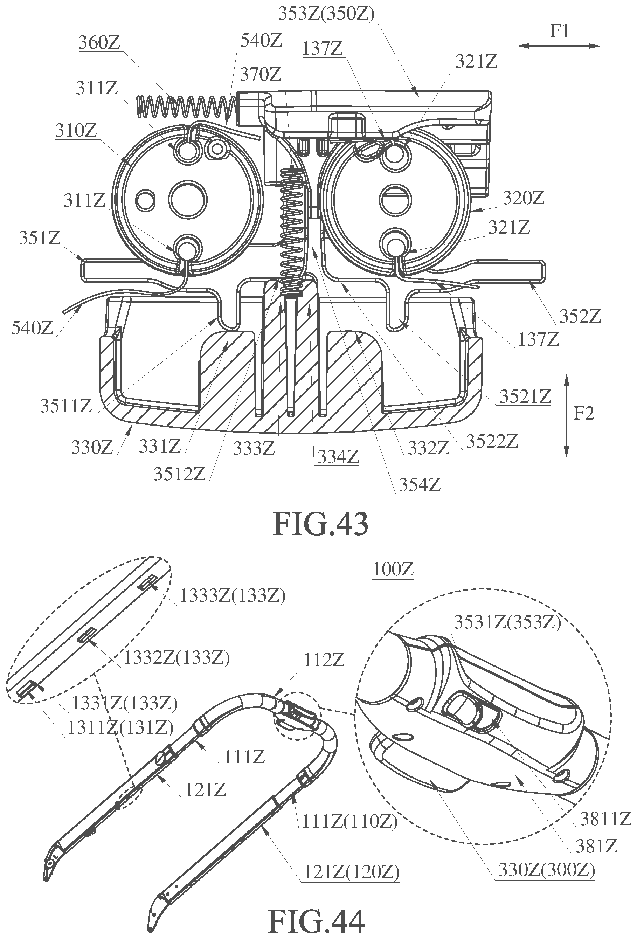

In an embodiment, a plurality of (e.g., two, three or more) second engaged locking portions 133Z are provided, and the plural second engaged locking portions 133Z are arranged at intervals along a direction of sliding of the upper handlebar frame 110Z relative to the lower handlebar frame 120Z. Specifically, the plurality of second engaged locking portions 133Z may be considered to be arranged at intervals along a length direction of the second support tube 121Z. When the second locking member 1311Z passes through the first engaged locking portion 132Z to be inserted and engaged with different second engaged locking portions 133Z, an entire length of the handlebar frame 100Z is correspondingly different, and correspondingly, the height of the handlebar frame 100Z relative to the ground is different to adapt to gripping by the users with different heights. Specifically, referring to FIG. 34 and FIG. 44, in this embodiment, three second engaged locking portions 133Z are provided, and the three second engaged locking portions 133Z may be referred to as a bottom second engaged locking portion 1331Z, a middle second engaged locking portion 1332Z, and a top second engaged locking portion 1333Z respectively. The middle second engaged locking portion 1332Z is located between the bottom second engaged locking portion 1331Z and the top second engaged locking portion 1333Z, and the bottom second engaged locking portion 1331Z is closer to a bottom end of the second support tube 121Z than the top second engaged locking portion 1333Z. When the second locking member 1311Z is inserted through the first engaged locking portion 132Z and the bottom second engaged locking portion 1331Z, the length of the handlebar frame 100Z is L1, and the height of the pushing handle tube 112Z from the ground is H1; when the second locking member 1311Z is inserted through the first engaged locking portion 132Z and the middle second engaged locking portion 1332Z, the length of the handlebar frame 100Z is L2, and the height of the pushing handle tube 112Z from the ground is H2; when the second locking member 1311Z is inserted through the first engaged locking portion 132Z and the top second engaged locking portion 1333Z, the length of the handlebar frame 100Z is L3, and the height of the pushing handle tube 112Z from the ground is H3; L1<L2<L3, and H1<H2<H3.

With continued reference to FIG. 34, in an embodiment, the second locking assembly 131Z further includes a driving member 1312Z, the driving member 1312Z being movable relative to the upper handlebar frame 110Z and operably connected to the second locking member 1311Z. Specifically, the driving member 1312Z has a lock position and an unlock position on a moving path thereof. When the driving member 1312Z is at the lock position, the driving member 1312Z drives the second locking member 1311Z to be at the lock position. When the driving member 1312Z is at the unlock position, the driving member 1312Z drives the second locking member 1311Z to be at the unlock position. Thus, the user can indirectly control the position of the second locking member 1311Z and thus the state of the height adjustment locking mechanism 130Z by directly controlling the position of the driving member 1312Z. In this embodiment, a moving direction of the driving member 1312Z is substantially the same as the length direction of the first support tube 111Z.

Referring to FIG. 34 again, in an embodiment, the height adjustment locking mechanism 130Z further includes a support base 136Z and a guide member (not shown in the drawings). Specifically, the support base 136Z is arranged on the upper handlebar frame 110Z and has a first guide portion 1361Z, the first guide portion 1361Z extends in a direction perpendicular to the moving direction of the driving member 1312Z, the second locking member 1311Z is movably arranged on the support base 136Z, and the guide member passes through the second locking member 1311Z and extends into the first guide portion 1361Z. More specifically, the driving member 1312Z is provided with a second guide portion (not shown in the drawings), the second guide portion extends obliquely relative to the moving direction of the driving member 1312Z, and the guide member can extend into and be slidably engaged with the second guide portion. When the driving member 1312Z switches between the lock position and the unlock position, the second locking member 1311Z can switch between the lock position and the unlock position by cooperation of the guide member with the first guide portion 1361Z and the second guide portion. It should be noted that, in this embodiment, the guide member may be, for example, a component such as an inserted pin. Certainly, in other embodiments, the second locking member 1311Z and the guide member may alternatively have an integrally formed structure, and the guide member may be regarded as a component of the second locking member 1311Z. For example, the guide member is a post integrally formed on the second locking member 1311Z, and is mainly configured to pass through the first guide portion 1361Z and the second guide portion to guide the second locking member 1311Z to switch between the lock position and the unlock position. It should be further noted that, in this embodiment, the first guide portion 1361Z and the second guide portion are both in a through hole structure.

In an embodiment, the height adjustment locking mechanism 130Z further includes a third reset member 135Z (see FIG. 34), and the third reset member 135Z may be an elastic member such as a spring or an elastic sheet. Specifically, the third reset member 135Z is a compression spring which abuts between the support base 136Z and the driving member 1312Z and is configured to provide an elastic restoring force for the driving member 1312Z, so that the driving member 1312Z can be kept at the lock position, and thus, the second locking member 1311Z can be kept at the lock position.

It should be noted that, in this embodiment, in order to improve stability when the upper handlebar frame 110Z is fixed relative to the lower handlebar frame 120Z, the handlebar frame 100Z includes two height adjustment locking mechanisms 130Z. Specifically, one height adjustment locking mechanism 130Z is arranged between the first support tube 111Z and the second support tube 121Z on the same side.

Referring to FIG. 33 to FIG. 36, in an embodiment, the upper handlebar frame 110Z slides relative to the lower handlebar frame 120Z to cause the entire handlebar frame 100Z to have an extended state (see FIG. 33) and a collapsed state (in other embodiments, the collapsed state can also be called the folded state or the closed state) (see FIG. 35). Specifically, the length of the handlebar frame 100Z in the extended state is larger than the length of the handlebar frame 100Z in the collapsed state. In the process that the stroller frame 1000Z switches to the collapsed state, the handlebar frame 100Z may be first in the collapsed state, thus further reducing a volume of the stroller frame 1000Z in the collapsed state. In this embodiment, when the second locking member 1311Z passes through the first engaged locking portion 132Z and is locked and engaged with the bottom second engaged locking portion 1331Z, the handlebar frame can be considered to be in the extended state, and the length of the handlebar frame 100Z in this case is shortest and is L1. When the second locking member 1311Z withdraws from the second engaged locking portion 133Z to unlock the second engaged locking portion 133Z, the upper handlebar frame 110Z is slidable relative to the lower handlebar frame 120Z to allow the handlebar frame 100Z to be switched to the collapsed state. When the handlebar frame 100Z is in the collapsed state, the length of the handlebar frame 100Z is L0, and L0<L1.

Referring to FIG. 34 and FIG. 36, in an embodiment, the stroller frame 1000Z further includes a handlebar fold locking mechanism 600Z, the handlebar fold locking mechanism 600Z being arranged on the handlebar frame 100Z and adapted to lock the handlebar frame 100Z in the collapsed state. Specifically, the handlebar fold locking mechanism 600Z includes an engaging member 610Z and a second locking concave portion 620Z, one of the upper handlebar frame 110Z and the lower handlebar frame 120Z being provided with the second locking concave portion 620Z, and the other being provided with the movable engaging member 610Z. In other words, the second locking concave portion 620Z is arranged in one of the upper handlebar frame 110Z and the lower handlebar frame 120Z, and the engaging member 610Z is movably arranged on the other of the upper handlebar frame 110Z and the lower handlebar frame 120Z. Thus, the engaging member 610Z can be engaged with or disengaged from the second locking concave portion 620Z to restrict the handlebar frame 100Z from switching between the collapsed state and the extended state or allow the handlebar frame 100Z to switch between the collapsed state and the extended state. Specifically, when the engaging member 610Z is engaged with the second locking concave portion 620Z, the handlebar frame 100Z is locked in the collapsed state, so that the upper handlebar frame 110Z is prevented from accidentally sliding relative to the lower handlebar frame 120Z during the transferring or accommodation of the stroller frame 1000Z, thereby preventing the overall volume of the stroller frame 1000Z from being increased, which would otherwise make the stroller frame inconvenient to transport or store. When the engaging member 610Z is disengaged from the second locking concave portion 620Z, the handlebar frame 100Z is allowed to switch to the extended state.

With continued reference to FIG. 34 and FIG. 36, in this embodiment, the support base 136Z is provided with the second locking concave portion 620Z. The lower handlebar frame 120Z is provided with a perforation (not shown in the drawings), and the engaging member 610Z is movably arranged through the perforation to enable the engaging member 610Z to be engaged with the second locking concave portion 620Z. Specifically, the handlebar fold locking mechanism 600Z further includes a fixing base 630Z and a first reset member 640, wherein the fixing base 630Z is arranged on the lower handlebar frame 120Z, and the first reset member 640 is arranged between the fixing base 630Z and the engaging member 610Z and is configured to provide an elastic restoring force for the engaging member 610Z, so that the engaging member 610Z constantly has a tendency of extending into the second locking concave portion 620Z for engagement. The first reset member 640 may be an elastic component such as a spring or an elastic sheet. Specifically, in this embodiment, the first reset member 640 is a compression spring, and two ends of the compression spring abut between the engaging member 610Z and the fixing base 630Z.

Referring to FIG. 34 and FIG. 36, in an embodiment, the support base 136Z is provided with a first pushing inclined surface 1363Z and a second pushing inclined surface 1364Z. When the handlebar frame 100Z switches from the extended state to the folded state, the first pushing inclined surface 1363Z pushes against the engaging member 610Z to guide the engaging member 610Z to be inserted into the second locking concave portion 620Z for engagement. The second pushing inclined surface 1364Z is formed on a side wall of the second locking concave portion 620Z, and when the handlebar frame 100Z switches from the collapsed state to the extended state, the second pushing inclined surface 1364Z pushes against the engaging member 610Z to guide the engaging member 610Z to withdraw from the second locking concave portion 620Z.

The height adjustment process of the handlebar frame 100Z and the process of switching of the handlebar frame 100Z between the extended state and the collapsed state will be briefly described below with reference to FIG. 34 and FIG. 36.

Referring to FIG. 34, in this embodiment, when the handlebar frame 100Z is in the extended state and the height of the handlebar frame 100Z relative to the ground is required to be adjusted, the user can first drive the second locking member 1311Z to withdraw from the second engaged locking portion 133Z by the driving member 1312Z, so that the upper handlebar frame 110Z can slide freely relative to the lower handlebar frame 120Z for height adjustment. After the height of the handlebar frame 100Z is adjusted to a desired height, the third reset member 135Z drives the driving member 1312Z to be reset to the lock position, so as to drive the second locking member 1311Z to pass through the first engaged locking portion 132Z and extend into the second engaged locking portion 133Z again, so that the upper handlebar frame 110Z is restricted from sliding relative to the lower handlebar frame 120Z to maintain the desired height of the handlebar frame 100Z.

Referring to FIG. 34 and FIG. 36, when the user needs to switch the handlebar frame 100Z from the extended state to the collapsed state (from FIG. 34 to FIG. 36), the user can similarly first drive the second locking member 1311Z to withdraw from the second engaged locking portion 133Z by the driving member 1312Z; subsequently, the user may push the upper handlebar frame 110Z to move towards a direction close to the bottom of the lower handlebar frame 120Z (i.e., the bottom end of the second support tube 121Z), so that the overall length of the handlebar frame 100Z may be reduced for switching to the collapsed state. During the movement, the first pushing inclined surface 1363Z of the support base 136Z abuts against the engaging member 610Z, and pushes against the engaging member 610Z to gradually withdraw from the perforation with the movement of the upper handlebar frame 110Z, and in this case, the first reset member 640 is compressed. When the engaging member 610Z passes over the first pushing inclined surface 1363Z and directly faces the second locking concave portion 620Z, the first reset member 640 is reset and pushes the engaging member 610Z to pass through the perforation to extend into the second locking concave portion 620Z, so that the engaging member 610Z can be engaged with the second locking concave portion 620Z to restrict the upper handlebar frame 110Z from sliding relative to the lower handlebar frame 120Z.

With continued reference to FIG. 34 and FIG. 36, when the user needs to switch the handlebar frame 100Z from the collapsed state to the extended state (from FIG. 36 to FIG. 34), the user can directly pull the upper handlebar frame 110Z to move towards a direction away from the bottom of the lower handlebar frame 120Z, so that the overall length of the handlebar frame 100Z can be increased for switching to the extended state. In the process of applying a pulling force to the upper handlebar frame 110Z, the second pushing inclined surface 1364Z pushes against the engaging member 610Z to gradually withdraw from the second locking concave portion 620Z, and in this process, the first reset member 640 is gradually compressed. When the engaging member 610Z is disengaged from the second locking concave portion 620Z, the upper handlebar frame 110Z may be allowed to slide relative to the lower handlebar frame 120Z for switching to the extended state.

Referring to FIG. 34 and FIG. 36, in an embodiment, an abutting member 140Z is arranged in the lower handlebar frame 120Z, and the abutting member 140Z is located substantially near the bottom end of the second support tube 121Z and configured to abut against the support base 136Z to limit a sliding stroke of the upper handlebar frame 110Z. When the handlebar frame 100Z is in the collapsed state, the support base 136Z abuts against the abutting member 140Z.

In order to improve convenience of unlocking of the wheel locking mechanism 500Z and the height adjustment locking mechanism 130Z by the user, in an embodiment of the present invention, the unlocking mechanism 300Z can unlock the wheel locking mechanism 500Z and the height adjustment locking mechanism 130Z. Specifically, the unlocking mechanism 300Z can be drivingly connected to the wheel locking mechanism 500Z and the height adjustment locking mechanism 130Z, so as to allow the wheel base 230Z to rotate relative to the wheel frame 200Z to provide the stroller frame 1000Z with a drifting steering function, and meanwhile allow the upper handlebar frame 110Z to move relative to the lower handlebar frame 120Z to change the height of the handlebar frame 100Z relative to the ground. Specifically, as shown in FIG. 33, the unlocking mechanism 300Z is arranged on the handlebar frame 100Z. More specifically, the unlocking mechanism 300Z is arranged on the pushing handle tube 112Z of the upper handlebar frame 110Z, so that operations of the user are facilitated. Certainly, in other embodiments, the unlocking mechanism 300Z may alternatively be arranged on the first support tube 111Z or the lower handlebar frame 120Z or the wheel frame 200Z, which is not limited herein.

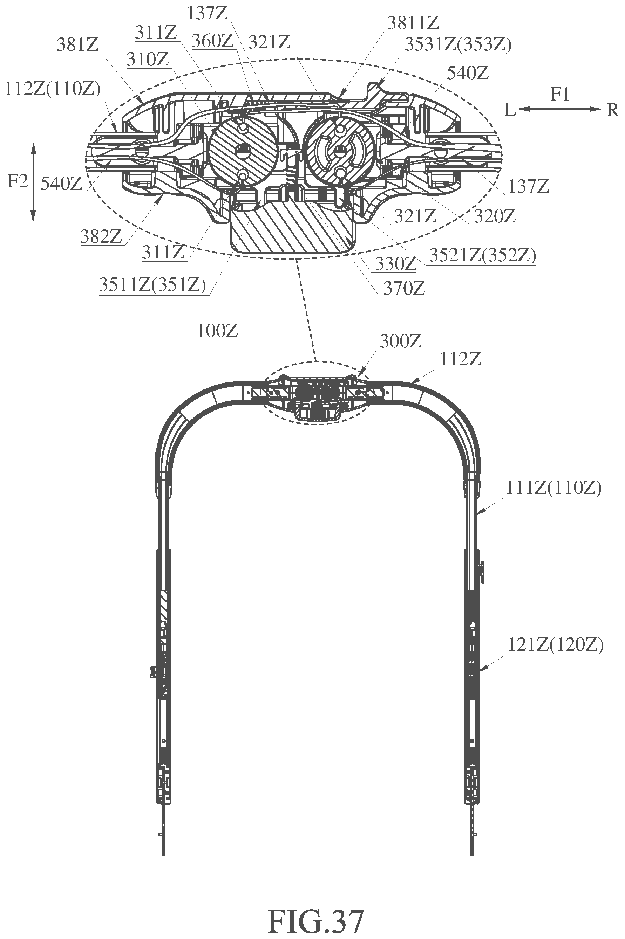

Referring to FIG. 34 and FIG. 37, in an embodiment, the unlocking mechanism 300Z includes a first unlocking member 310Z, a second unlocking member 320Z, and an operating member 330Z. The first unlocking member 310Z is rotatably arranged on the handlebar frame 100Z and drivingly connected to the wheel locking mechanism 500Z to allow the wheel base 230Z to rotate relative to the wheel frame 200Z for drifting steering. Specifically, the first unlocking member 310Z is drivingly connected to the first locking member 510Z in the wheel locking mechanism 500Z. The second unlocking member 320Z is rotatably arranged on the handlebar frame 100Z and drivingly connected to the height adjustment locking mechanism 130Z to allow the upper handlebar frame 110Z to move relative to the lower handlebar frame 120Z. Specifically, the second unlocking member 320Z is drivingly connected to the driving member 1312Z in the height adjustment locking mechanism 130Z. The operating member 330Z is movably arranged on the handlebar frame 100Z and selectively drives the first unlocking member 310Z or the second unlocking member 320Z to rotate. It should be noted that, in other embodiments, the first unlocking member 310Z may alternatively be drivingly connected to the height adjustment locking mechanism 130Z, and the second unlocking member 320Z may be drivingly connected to the wheel locking mechanism 500Z, which is not limited herein.

The first unlocking member 310Z is rotatably arranged on the handlebar frame 100Z and drivingly connected to the first locking member 510Z, the second unlocking member 320Z is rotatably arranged on the handlebar frame 100Z and drivingly connected to the driving member 1312Z, and the operating member 330Z is movable and configured to drive either of the first unlocking member 310Z and the second unlocking member 320Z to rotate. Therefore, the user can control the first unlocking member 310Z to rotate by driving the operating member 330Z to move, and then indirectly control the first locking member 510Z in the wheel locking mechanism 500Z. When the first locking member 510Z extends into the first locking concave portion 520Z to be locked and engaged, the wheel base 230Z is restricted from rotating relative to the wheel frame 200Z, and the stroller frame 1000Z can travel in a straight line. When the first locking member 510Z withdraws from the first locking concave portion 520Z to be disengaged, the wheel base 230Z is allowed to rotate relative to the wheel frame 200Z, and the stroller frame 1000Z can perform drifting steering. Meanwhile, the user can also control the second unlocking member 320Z to rotate by driving the operating member 330Z to move, and then indirectly control the second locking assembly 131Z (i.e., the driving member 1312Z and the second locking member 1311Z) in the height adjustment locking mechanism 130Z. Specifically, when the driving member 1312Z is at the lock position, the second locking member 1311Z is correspondingly at the lock position, and the second locking member 1311Z is locked and engaged with the first engaged locking portion 132Z and the second engaged locking portion 133Z, so that the upper handlebar frame 110Z is restricted from moving relative to the lower handlebar frame 120Z. When the driving member 1312Z is at the unlock position, the second locking member 1311Z is correspondingly at the unlock position, and the second locking member 1311Z is unlocked with the first engaged locking portion 132Z and the second engaged locking portion 133Z, so that the upper handlebar frame 110Z is movable relative to the lower handlebar frame 120Z. Since the user can control different locking mechanisms only by operating the above unlocking mechanism 300Z, convenience of the operation of the user is improved.

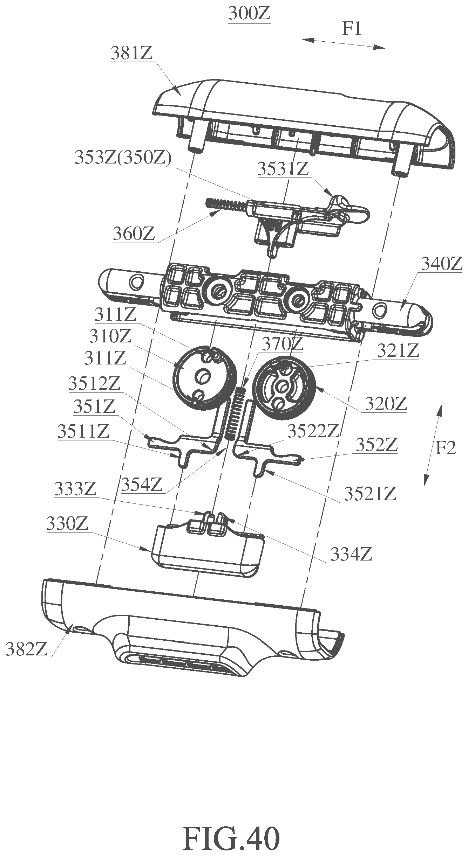

Referring to FIG. 37 to FIG. 40, in an embodiment, the first unlocking member 310Z and the second unlocking member 320Z may be both disc-shaped and rotatably mounted on the pushing handle tube 112Z of the handlebar frame 100Z by shafts, pins, or the like. Specifically, the pushing handle tube 112Z is provided therein with a mounting base 340Z, and the first unlocking member 310Z and the second unlocking member 320Z are rotatably mounted on the mounting base 340Z.

Referring to FIG. 34 and FIG. 37, in an embodiment, the first unlocking member 310Z is provided with a first connecting portion 311Z, and the first connecting portion 311Z and a rotation center of the first unlocking member 310Z are misaligned, for example, may be arranged in a straight line or may be arranged in a non-straight line, but the present invention is not limited thereto. The first connecting portion 311Z is configured to be connected to the wheel locking mechanism 500Z. In this embodiment, the wheel locking mechanism 500Z further includes a first traction member 540Z, the first traction member 540Z being configured in the wheel frame 200Z and the handlebar frame 100Z and passing through the first pivot base 400Z and the height adjustment locking mechanism 130Z to be connected between the first unlocking member 310Z and the first locking member 510Z. Specifically, one end of the first traction member 540Z is connected to the first unlocking member 310Z (specifically, the first connecting portion 311Z), and the other end of the first traction member 540Z (i.e., the end away from the first unlocking member 310Z) passes through the height adjustment locking mechanism 130Z and the first pivot base 400Z in sequence and then is connected to the first locking member 510Z arranged in the rear wheel frame 220Z, so that the first unlocking member 310Z can drive the first locking member 510Z to withdraw from the first locking concave portion 520Z through the first traction member 540Z. Specifically, referring to FIG. 34, FIG. 37, and FIG. 41, when the operating member 330Z drives the first unlocking member 310Z to rotate around the rotation center thereof, the first connecting portion 311Z rotates around the rotation center of the first unlocking member 310Z synchronously, and then drives the first traction member 540Z to move to pull the first locking member 510Z to move to withdraw from the first locking concave portion 520Z.

As shown in FIG. 34 and FIG. 37, similarly, the second unlocking member 320Z is provided with a second connecting portion 321Z, and the second connecting portion 321Z and a rotation center of the second unlocking member 320Z are misaligned, for example, may be arranged in a straight line or may be arranged in a non-straight line, but the present invention is not limited thereto. The second connecting portion 321Z is configured to be connected to the height adjustment locking mechanism 130Z. Specifically, in this embodiment, the height adjustment locking mechanism 130Z further includes a second traction member 137Z, the second traction member 137Z being arranged within the upper handlebar frame 110Z and connected between the second unlocking member 320Z and the second locking assembly 131Z (specifically, the driving member 1312Z). Specifically, referring to FIG. 34, FIG. 37, and FIG. 42, when the operating member 330Z drives the second unlocking member 320Z to rotate around the rotation center thereof, the second connecting portion 321Z rotates around the rotation center of the second unlocking member 320Z synchronously, so as to drive the second traction member 137Z to move to pull the driving member 1312Z to move, and finally drive the second locking member 1311Z to move from the lock position to the unlock position.

Specifically, in this embodiment, as shown in FIG. 34 and FIG. 37, the first traction member 540Z and the second traction member 137Z may be both traction ropes, for example. More specifically, the first unlocking member 310Z is provided with two first connecting portions 311Z, and the second unlocking member 320Z is provided with two second connecting portions 321Z. The two first connecting portions 311Z are connected to two first traction members 540Z respectively, and the two second connecting portions 321Z are connected to two second traction members 137Z respectively. Thus, when the first unlocking member 310Z rotates, the two wheel locking mechanisms 500Z can be simultaneously controlled to be unlocked. When the second unlocking member 320Z rotates, the two height adjustment locking mechanisms 130Z can be simultaneously controlled to be unlocked.

Referring to FIG. 34, FIG. 36, and FIG. 37, in this embodiment, a first penetrating channel 1365Z and a second penetrating channel 1366Z are arranged in the support base 136Z. The first penetrating channel 1365Z is configured to receive the first traction member 540Z, and the second penetrating channel 1366Z is configured to receive the second traction member 137Z, thus preventing the first traction member 540Z from being entangled with other components when passing through the height adjustment locking mechanism 130Z. Specifically, the first penetrating channel 1365Z is substantially a U-shaped channel, and the other end of the first traction member 540Z (i.e., the end away from the first unlocking member 310Z) extends into the support base 136Z from one opening of the U-shaped channel, then extends out from the other opening of the U-shaped channel, and extends into the first pivot base 400Z around the support base 136Z. The first traction member 540Z is wound in the support base 136Z, thus avoiding the problem that the first traction member 540Z knots in the height adjustment locking mechanism 130Z after the height of the handlebar frame 100Z is reduced. Specifically, the second penetrating channel 1366Z may be substantially a linear channel, and when one end of the second traction member 137Z rotates with the second unlocking member 320Z, the other end of the second traction member 137Z may be quickly operated through the linear channel to drive the driving member 1312Z to move.

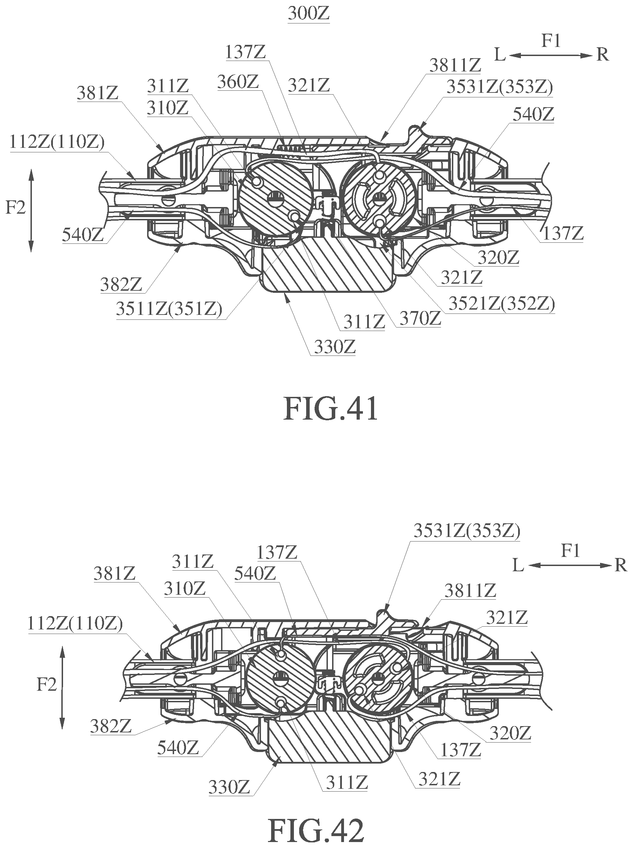

Referring to FIG. 37 to FIG. 40, in an embodiment, the unlocking mechanism 300Z further includes a safety lock 350Z. The safety lock 350Z is movably arranged on the handlebar frame 100Z and is switchable between a first position and a second position. When the safety lock 350Z is at the first position (see FIG. 41), the operating member 330Z is drivingly connected to the first unlocking member 310Z through the safety lock 350Z. When the safety lock 350Z is at the second position (see FIG. 42), the operating member 330Z is drivingly connected to the second unlocking member 320Z through the safety lock 350Z. Specifically, as shown in FIG. 34 and FIG. 41, when the user needs to unlock the wheel locking mechanism 500Z to provide the stroller frame 1000Z with the drifting steering function, the safety lock 350Z can be moved to the first position, so that the first unlocking member 310Z can be rotated by operating the operating member 330Z. As shown in FIG. 34 and FIG. 42, when the user needs to unlock the height adjustment locking mechanism 130Z to adjust the height of the handlebar frame 100Z or switch the handlebar frame 100Z to the collapsed state, the safety lock 350Z can be moved to the second position, so that the second unlocking member 320Z can be rotated by operating the operating member 330Z.

With continued reference to FIG. 37 to FIG. 40, in an embodiment, the safety lock 350Z includes a first linkage member 351Z, a second linkage member 352Z, and a toggle member 353Z. The first linkage member 351Z is drivingly connected to the first unlocking member 310Z; the second linkage member 352Z is drivingly connected to the second unlocking member 320Z, the toggle member 353Z is connected to the first linkage member 351Z and the second linkage member 352Z, and the toggle member 353Z is movably arranged on the handlebar frame 100Z and switchable between the first position and the second position, so as to drive the first linkage member 351Z and the second linkage member 352Z to move along a first direction F1. Specifically, when the toggle member 353Z is located at the first position, the operating member 330Z is operated to push against the first linkage member 351Z to move along a second direction F2, such that the first unlocking member 310Z is rotated; when the toggle member 353Z is located at the second position, the operating member 330Z is operated to push against the second linkage member 352Z to move along the second direction F2, such that the second unlocking member 320Z is rotated. The first direction F1 intersects with the second direction F2.

Referring to FIG. 34 and FIG. 41 to FIG. 43, in an embodiment, the first linkage member 351Z has a first abutting portion 3511Z, and the second linkage member 352Z has a second abutting portion 3521Z. The operating member 330Z has a first driving portion 331Z and a second driving portion 332Z spaced apart. When the toggle member 353Z is located at the first position, the first abutting portion 3511Z is aligned with the first driving portion 331Z, and the second abutting portion 3521Z is misaligned with the second driving portion 332Z. Thus, when the operating member 330Z moves upwards along the second direction F2, the first driving portion 331Z can abut against the first abutting portion 3511Z, so as to push the first linkage member 351Z to move along the second direction F2, and then drive the first unlocking member 310Z to rotate, thereby finally unlocking the wheel locking mechanism 500Z. Meanwhile, since the second abutting portion 3521Z is misaligned with the second driving portion 332Z, when the operating member 330Z moves upwards along the second direction F2, the second driving portion 332Z does not contact the second abutting portion 3521Z, and thus, the second linkage member 352Z and the second unlocking member 320Z can be kept still. That is, when the operating member 330Z is operated, the height adjustment locking mechanism 130Z is not affected. Similarly, when the toggle member 353Z is located at the second position, the second abutting portion 3521Z is aligned with the second driving portion 332Z, and the first abutting portion 3511Z is misaligned with the first driving portion 331Z. Thus, when the operating member 330Z moves upwards along the second direction F2, the second driving portion 332Z can abut against the second abutting portion 3521Z, so as to push the second linkage member 352Z to move along the second direction F2, and then drive the second unlocking member 320Z to rotate, thereby finally unlocking the height adjustment locking mechanism 130Z. Meanwhile, since the first abutting portion 3511Z is misaligned with the first driving portion 331Z, when the operating member 330Z moves upwards along the second direction F2, the first driving portion 331Z does not contact the first abutting portion 3511Z, and thus, the first linkage member 351Z and the first unlocking member 310Z can be kept still. That is, when the operating member 330Z is operated, the wheel locking mechanism 500Z is not affected.

Referring to FIG. 43, in an embodiment, the operating member 330Z further has a third driving portion 333Z and a fourth driving portion 334Z. The third driving portion 333Z and the fourth driving portion 334Z are spaced apart and located between the first driving portion 331Z and the second driving portion 332Z. The first linkage member 351Z and the second linkage member 352Z are spaced apart, and a third avoidance portion 354Z is formed therebetween. Specifically, the first linkage member 351Z further has a third abutting portion 3512Z, and the second linkage member 352Z further has a fourth abutting portion 3522Z. When the toggle member 353Z is located at the first position, the third abutting portion 3512Z is aligned with the third driving portion 333Z, the first abutting portion 3511Z is aligned with the first driving portion 331Z, and the fourth driving portion 334Z is aligned with the third avoidance portion 354Z. Therefore, when the operating member 330Z moves upwards in the second direction F2, the first driving portion 331Z can abut against the first abutting portion 3511Z, and the third abutting portion 3512Z can abut against the third driving portion 333Z, so that the first linkage member 351Z is pushed to move along the second direction F2 at the same time. Meanwhile, in the process that the operating member 330Z moves upwards along the second direction F2, the fourth driving portion 334Z is gradually inserted into the third avoidance portion 354Z, thus preventing the second linkage member 352Z from being driven to move when the toggle member 353Z is located at the first position. Similarly, when the toggle member 353Z is located at the second position, the fourth abutting portion 3522Z is aligned with the fourth driving portion 334Z, the second abutting portion 3521Z is aligned with the second driving portion 332Z, and the third driving portion 333Z is aligned with the third avoidance portion 354Z. Therefore, when the operating member 330Z moves upwards along the second direction F2, the second driving portion 332Z can abut against the second abutting portion 3521Z, and the fourth abutting portion 3522Z can abut against the fourth driving portion 334Z, so that the second linkage member 352Z is pushed to move along the second direction F2 at the same time. Meanwhile, in the process that the operating member 330Z moves upwards along the second direction F2, the third driving portion 333Z is gradually inserted into the third avoidance portion 354Z, thus preventing the first linkage member 351Z from being driven to move when the toggle member 353Z is located at the second position.

In an embodiment, as shown in FIG. 43, a first avoidance portion is formed between the first abutting portion 3511Z and the third abutting portion 3512Z. A second avoidance portion is formed between the second abutting portion 3521Z and the fourth abutting portion 3522Z. Specifically, when the toggle member 353Z is located at the first position and the operating member 330Z is operated, the second avoidance portion is configured to avoid the second driving portion 332Z. When the toggle member 353Z is located at the second position and the operating member 330Z is operated, the first avoidance portion is configured to avoid the first driving portion 331Z.

Referring to FIG. 34, FIG. 37, and FIG. 38, in an embodiment, the unlocking mechanism 300Z further includes a fourth reset member 360Z, which may be an elastic member such as a spring or an elastic sheet. The fourth reset member 360Z abuts between the handlebar frame 100Z (e.g., the pushing handle tube 112Z) and the toggle member 353Z and is configured to provide an elastic restoring force for the toggle member 353Z to keep the toggle member 353Z at the first position or the second position. For example, in this embodiment, the fourth reset member 360Z is configured to constantly keep the toggle member 353Z at the first position. If the wheel locking mechanism 500Z is required to be unlocked, the operating member 330Z is directly operated (e.g., pressed or pushed upwards). If the height adjustment locking mechanism 130Z is required to be unlocked, the toggle member 353Z is required to be moved to the second position first, and then, the operating member 330Z is operated. After the height adjustment locking mechanism 130Z is unlocked completely, the toggle member 353Z is released, and the toggle member 353Z is automatically reset to the second position under the reset action of the fourth reset member 360Z.

In an embodiment, one of the first linkage member 351Z and the first unlocking member 310Z has a first guide concave portion (not shown in the drawings), and the other has a first engaging convex portion (not shown in the drawings). The first engaging convex portion is slidably arranged within the first guide concave portion, and the first guide concave portion extends along the first direction F1. Similarly, one of the second linkage member 352Z and the second unlocking member 320Z has a second guide concave portion (not shown in the drawings), and the other has a second engaging convex portion (not shown in the drawings). The second engaging convex portion is slidably arranged in the second guide concave portion, and the second guide concave portion extends along the first direction F1. Thus, when switching between the first position and the second position along the first direction F1, the toggle member 353Z can drive the first linkage member 351Z and the second linkage member 352Z to move left and right along the first direction F1 at the same time, so that the first unlocking member 310Z and the second unlocking member 320Z are kept still. Meanwhile, when the first linkage member 351Z moves up and down along the second direction F2, the first linkage member 351Z can also drive the first unlocking member 310Z to rotate; when the second linkage member 352Z moves up and down along the second direction F2, the second linkage member 352Z can also drive the second unlocking member 320Z to rotate.

In an embodiment, the operating member 330Z has an initial position (see FIG. 37) and an unlock position (see FIG. 41 and FIG. 42) when moving along the second direction F2. When located at the initial position, the operating member 330Z can be operated to move to push against the first linkage member 351Z or the second linkage member 352Z to move. In other words, when the operating member 330Z is at the initial position, the first driving portion 331Z on the operating member 330Z and the first abutting portion 3511Z as well as the third driving portion 333Z on the operating member 330Z and the third abutting portion 3512Z (or the second driving portion 332Z on the operating member 330Z and the second abutting portion 3521Z as well as the fourth driving portion 334Z on the operating member 330Z and the fourth abutting portion 3522Z) may have gaps or are just in contact, so that the first linkage member 351Z (or the second linkage member 352Z) may be pushed to move upwards by pushing or pressing the operating member 330Z upwards. When the operating member 330Z is located at the unlock position, the operating member 330Z pushes against the first linkage member 351Z or the second linkage member 352Z.

Specifically, as shown in FIG. 37, FIG. 41 to FIG. 43, when the toggle member 353Z is in the first position and the operating member 330Z is at the initial position, the first driving portion 331Z and the first abutting portion 3511Z as well as the third driving portion 333Z and the third abutting portion 3512Z may have gaps or are just in contact. In this case, the operating member 330Z may be pushed or pressed upwards to move to the unlock position and pushes against the first linkage member 351Z during the process, so that the first linkage member 351Z drives the first unlocking member 310Z to rotate. When the toggle member 353Z is at the second position and the operating member 330Z is at the initial position, the second driving portion 332Z and the second abutting portion 3521Z as well as the fourth driving portion 334Z and the fourth abutting portion 3522Z may have gaps or are just in contact. In this case, the operating member 330Z may be pushed or pressed upwards to move to the unlock position and pushes against the second linkage member 352Z during the process, so that the second linkage member 352Z drives the second unlocking member 320Z to rotate.

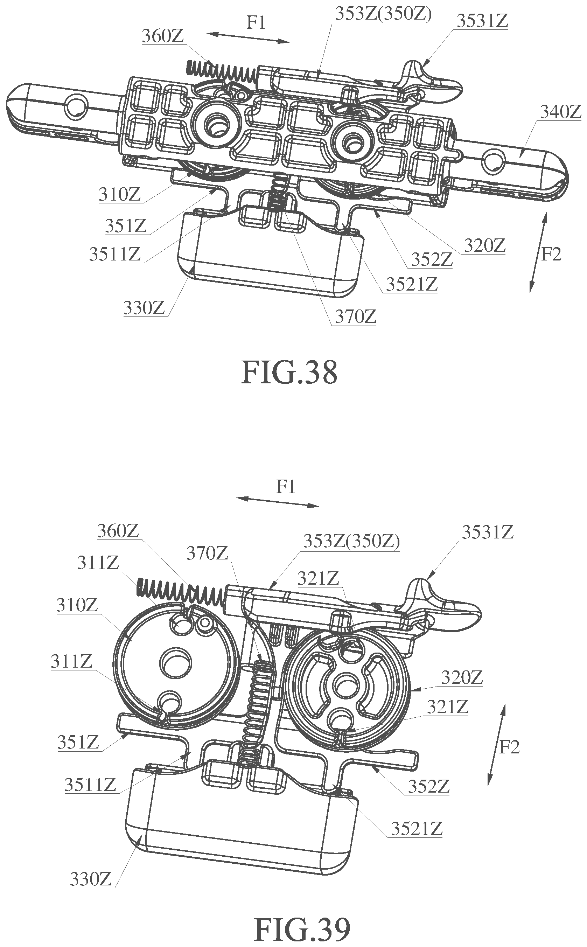

In an embodiment, as shown in FIG. 37 and FIG. 39, the unlocking mechanism 300Z further includes a fifth reset member 370Z, which may be an elastic member such as a spring or an elastic sheet. The fifth reset member 370Z abuts between the mounting base 340Z of the handlebar frame 100Z and the operating member 330Z and is configured to provide an elastic restoring force for the operating member 330Z to maintain the operating member 330Z at the initial position.

Referring to FIG. 33 and FIG. 40 to FIG. 42, in an embodiment, the unlocking mechanism 300Z further includes a first fixing cover 381Z and a second fixing cover 382Z. The first fixing cover 381Z and the second fixing cover 382Z cover upper and lower sides of the pushing handle tube 112Z respectively, the first fixing cover 381Z is located on a top portion of the pushing handle tube 112Z, the second fixing cover 382Z is located at the bottom of the pushing handle tube 112Z, and the second fixing cover 382Z is provided with a through hole for the operating member 330Z to pass through. The first fixing cover 381Z and the second fixing cover 382Z are connected, fit and are fixed to the pushing handle tube 112Z. Thus, the operating member 330Z and other components can be limited to prevent the operating member 330Z, or the like, from being separated from the pushing handle tube 112Z. In addition, the first fixing cover 381Z and the second fixing cover 382Z cover the first unlocking member 310Z, the second unlocking member 320Z, and the safety lock 350Z, which can also simplify and beautify the unlocking mechanism 300Z and the stroller frame 1000Z. Specifically, as shown in FIG. 41 and FIG. 42, the first fixing cover 381Z is provided with an operating hole 3811Z, the toggle member 353Z is provided with a pushing portion 3531Z, the pushing portion 3531Z can pass through the operating hole 3811Z for the user to grip, and the user can change the position of the toggle member 353Z by pushing the pushing portion 3531Z. Certainly, in other embodiments, as shown in FIG. 44, the first fixing cover 381Z and the second fixing cover 382Z cover front and rear sides of the pushing handle tube 112Z, the first fixing cover 381Z is located on the rear side of the pushing handle tube 112Z, the second fixing cover 382Z is located on the front side of the pushing handle tube 112Z, the first fixing cover 381Z and the second fixing cover 382Z define and together form a through hole for the operating member 330Z to pass through, and the first fixing cover 381Z is provided with an operating hole 3811Z.

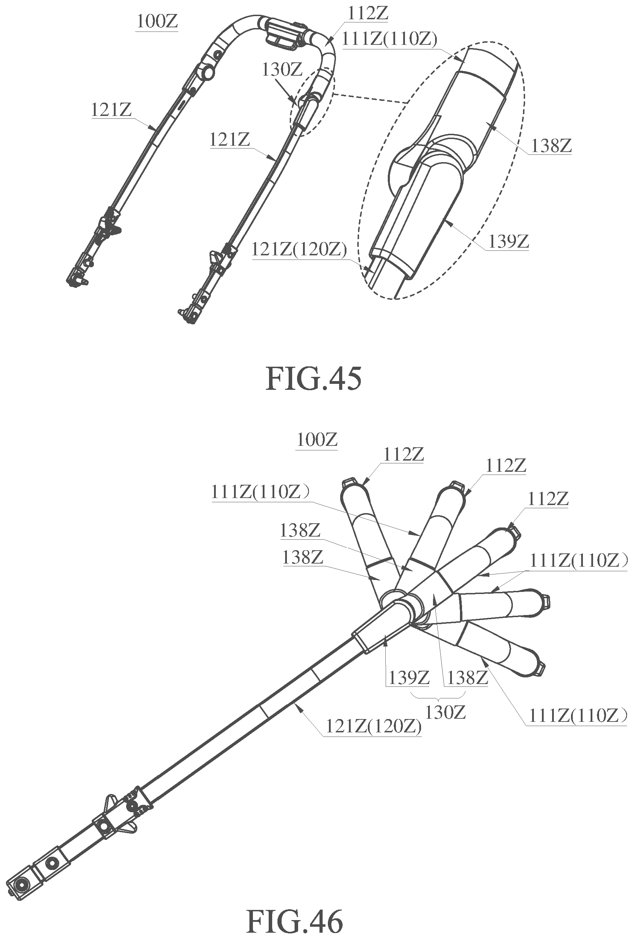

FIG. 45 shows a perspective view of a partial structure of a stroller frame 1000Z according to an embodiment of the present invention. Similar to the embodiment described above, the stroller frame 1000Z includes a handlebar frame 100Z, a wheel frame 200Z, a wheel base 230Z, an unlocking mechanism 300Z, and other components. The stroller frame 1000Z according to the present embodiment is a variation of the stroller frame 1000Z according to the embodiment described above. Without conflict, for the structures of the components and the connection relationship between the components in the present embodiment, reference may be made to the description in the above embodiment, and the differences between the present embodiment and the above embodiment will be mainly described below.

In this embodiment, "the upper handlebar frame 110Z moves relative to the lower handlebar frame 120Z" means that the upper handlebar frame 110Z can rotate relative to the lower handlebar frame 120Z. The upper handlebar frame 110Z and the lower handlebar frame 120Z are restricted from rotating relatively or allowed to rotate relatively through the height adjustment locking mechanism 130Z. Specifically, in an embodiment, as shown in FIG. 45 to FIG. 47, the height adjustment locking mechanism 130Z includes a first connecting base 138Z, a second connecting base 139Z, and a second locking member 1311Z. The first connecting base 138Z is connected to the upper handlebar frame 110Z, the second connecting base 139Z is connected to the lower handlebar frame 120Z and pivotally connected to the first connecting base 138Z, and the second locking member 1311Z is movably arranged between the first connecting base 138Z and the second connecting base 139Z axially to restrict the first connecting base 138Z and the second connecting base 139Z from pivoting relatively or allow the first connecting base 138Z and the second connecting base 139Z to pivot relatively, so as to restrict the upper handlebar frame 110Z from rotating relative to the lower handlebar frame or allow the upper handlebar frame 110Z to rotate relative to the lower handlebar frame. When the upper handlebar frame 110Z rotates around the height adjustment locking mechanism 130Z relative to the lower handlebar frame 120Z, the height of the upper handlebar frame 110Z (specifically, the pushing handle tube 112Z) relative to the ground (see FIG. 46) can be changed to adapt to gripping by the users with different heights the pushing handle tube 112Z. It should be noted that, in this embodiment, in order to clearly understand the position of the upper handlebar frame 110Z after rotation relative to the lower handlebar frame 120Z, different positions of the upper handlebar frame 110Z after rotation relative to the lower handlebar frame 120Z are marked by dotted lines in FIG. 46.

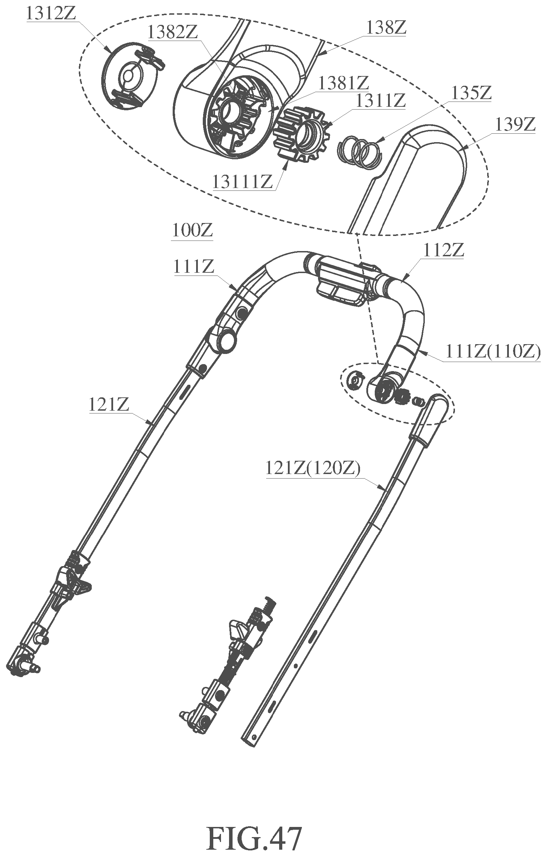

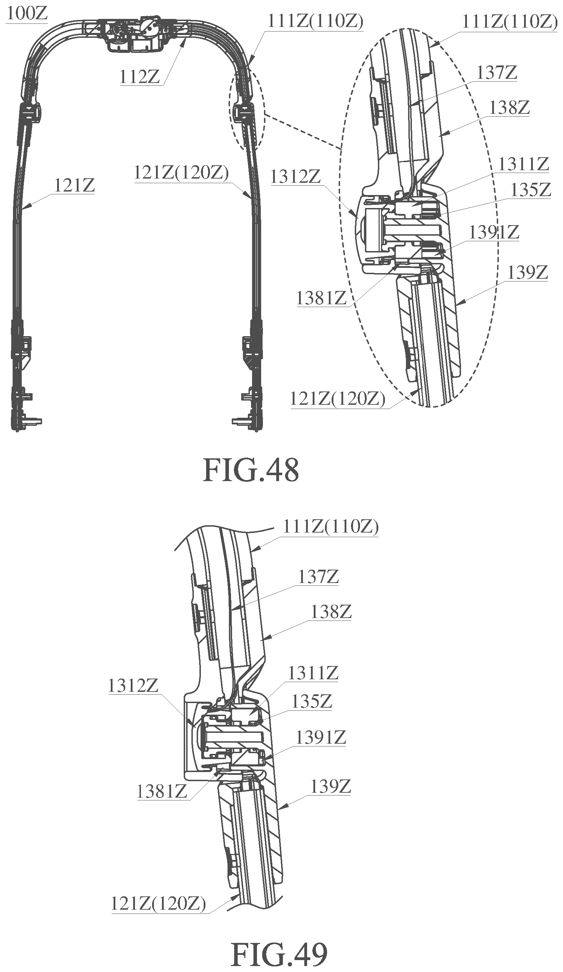

Referring to FIG. 47 to FIG. 49, in this embodiment, a first chamber 1381Z is arranged in a side of the first connecting base 138Z facing the second connecting base 139Z, and a first locking groove 1382Z is arranged in a side wall of the first chamber 1381Z. A second chamber 1391Z is arranged in a side of the second connecting base 139Z facing the first connecting base 138Z, and a second locking groove (not shown in the drawings) is arranged in a side wall of the second chamber 1391Z. The second locking member 1311Z is provided with a locking tooth 13111Z and has a lock position and an unlock position. Specifically, when the second locking member 1311Z is at the lock position, the locking tooth 13111Z is simultaneously engaged with the first locking groove 1382Z and the second locking groove, which can restrict the first connecting base 138Z from pivoting relative to the second connecting base 139Z. When the second locking member 1311Z is at the unlock position, the locking tooth 13111Z withdraws from the first locking groove 1382Z or the second locking groove, which may allow the first connecting base 138Z to pivot relative to the second connecting base 139Z.

With continued reference to FIG. 47 to FIG. 49, in this embodiment, the height adjustment locking mechanism 130Z further includes a driving member 1312Z, the driving member 1312Z is movably arranged on a side of the first connecting base 138Z opposite to the second connecting base 139Z, and the driving member 1312Z axially passes through the first connecting base 138Z and abuts against the second locking member 1311Z to drive the second locking member 1311Z to move, so that the second locking member 1311Z can withdraw from the first locking groove 1382Z. Specifically, referring to FIG. 42 and FIG. 47 to FIG. 49, the height adjustment locking mechanism 130Z further includes a second traction member 137Z, the second traction member 137Z being connected between the driving member 1312Z and the second unlocking member 320Z. When the height of the handlebar frame 100Z is required to be adjusted, the second unlocking member 320Z can be driven to rotate by operating the operating member 330Z, so that the driving member 1312Z is driven to move under the transmission action of the second traction member 137Z, so as to push against the second locking member 1311Z to completely withdraw into the second chamber 1391Z. Certainly, in other embodiments, the driving member 1312Z may alternatively be movably arranged on a side of the second connecting base 139Z opposite to the first connecting base 138Z, and the driving member 1312Z axially passes through the second connecting base 139Z and abuts against the second locking member 1311Z to drive the second locking member 1311Z to move, so that the second locking member 1311Z can withdraw from the second locking groove. When the height of the handlebar frame 100Z is required to be adjusted, the second unlocking member 320Z can be driven to rotate by operating the operating member 330Z, so that the driving member 1312Z is driven to move under the transmission action of the second traction member 137Z, so as to push against the second locking member 1311Z to completely withdraw into the first chamber 1381Z.

It should be noted that, in this embodiment, the third reset member 135Z axially abuts between the second locking member 1311Z and the second connecting base 139Z and is configured to keep the second locking member 1311Z at the lock position. In addition, it should be further noted that, in this embodiment, when the height of the handlebar frame 100Z is required to be adjusted, the user can push against the second locking member 1311Z by directly operating (e.g., pressing) the driving member 1312Z without operating the operating member 330Z.

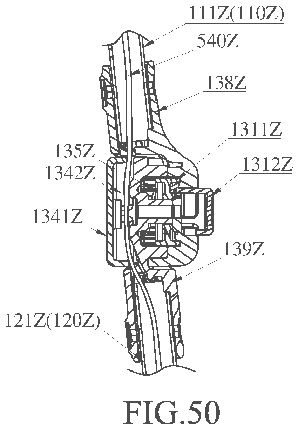

In this embodiment, the first traction member 540Z may be directly inserted between the first connecting base 138Z and the second connecting base 139Z to extend into the wheel frame 200Z through the height adjustment locking mechanism 130Z. Certainly, in other embodiments, as shown in FIG. 50, the height adjustment locking mechanism 130Z may further include a cover 1341Z, the cover 1341Z may be connected to the first connecting base 138Z or the second connecting base 139Z, for example, a penetrating space 1342Z may be formed between the cover 1341Z and the first connecting base 138Z or the second connecting base 139Z, and the first traction member 540Z is inserted into the penetrating space 1342Z. Specifically, when the driving member 1312Z is movably arranged on the side of the first connecting base 138Z opposite to the second connecting base 139Z, the cover 1341Z is arranged on the side of the second connecting base 139Z opposite to the first connecting base 138Z, and the penetrating space 1342Z is formed between the cover 1341Z and the second connecting base 139Z. When the driving member 1312Z is movably arranged on the side of the second connecting base 139Z opposite to the first connecting base 138Z, the cover 1341Z is arranged on the side of the first connecting base 138Z opposite to the second connecting base 139Z, and the penetrating space 1342Z is formed between the cover 1341Z and the first connecting base 138Z.

The stroller frame 1000Z and the unlocking mechanism 300Z thereof have the following technical effects.

The stroller frame 1000Z includes the unlocking mechanism 300Z. In the above unlocking mechanism 300Z, the first unlocking member 310Z is rotatably arranged on the stroller frame 1000Z and drivingly connected to the wheel locking mechanism 500Z, the second unlocking member 320Z is rotatably arranged on the stroller frame 1000Z and drivingly connected to the height adjustment locking mechanism 130Z, the operating member 330Z is movable and configured to drive either of the first unlocking member 310Z and the second unlocking member 320Z to rotate, the wheel locking mechanism 500Z can allow the wheel 240Z to rotate with the wheel base 230Z relative to the rear wheel frame 220Z for drifting steering, and the height adjustment locking mechanism 130Z can allow the upper handlebar frame 110Z to move relative to the lower handlebar frame 120Z. Therefore, the user can control the first unlocking member 310Z to rotate by driving the operating member 330Z to move, and then indirectly control the wheel locking mechanism 500Z, so that the stroller frame 1000Z has the drifting steering function. Meanwhile, the user can also control the second unlocking member 320Z to rotate by driving the operating member 330Z to move, and then indirectly control the height adjustment locking mechanism 130Z, so that the height of the entire handlebar frame 100Z can be adjusted. Since the user can control different locking mechanisms only by operating the above unlocking mechanism 300Z, convenience of the operation of the user is improved.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

## Claims

1. An unlocking mechanism applying for a stroller frame, the stroller frame comprising an upper handlebar frame, a lower handlebar frame, a wheel frame, a height adjustment locking mechanism, and a fold locking mechanism, the upper handlebar frame and the lower handlebar frame being restricted from moving relatively or allowed to move relatively through the height adjustment locking mechanism, and the lower handlebar frame and the wheel frame being pivotally connected and restricted from pivoting relatively or allowed to pivot relatively through the fold locking mechanism, wherein the unlocking mechanism comprises:
a first unlocking member rotatably arranged on the stroller frame, the first unlocking member being drivingly connected to the fold locking mechanism to allow the lower handlebar frame to pivot relative to the wheel frame;
a second unlocking member rotatably arranged on the stroller frame, the second unlocking member being drivingly connected to the height adjustment locking mechanism to allow the upper handlebar frame to move relative to the lower handlebar frame; and
an operating member movably arranged on the stroller frame and adapted to drive either of the first unlocking member and the second unlocking member to rotate.

2. An unlocking mechanism applying for a stroller frame, the stroller frame comprising a handlebar frame, a wheel frame, a direction-change locking mechanism, and a fold locking mechanism, the handlebar frame being rotatably arranged on the wheel frame, both the direction-change locking mechanism and the fold locking mechanism being arranged between the handlebar frame and the wheel frame, the handlebar frame being capable of being restricted from rotating relative to the wheel frame for direction changing or allowed to rotate relative to the wheel frame for direction changing through the direction-change locking mechanism, the handlebar frame being further capable of being restricted from rotating relative to the wheel frame for folding or allowed to rotate relative to the wheel frame for folding through the fold locking mechanism, wherein the unlocking mechanism comprises:
a first unlocking member rotatably arranged on the stroller frame and drivingly connected to the direction-change locking mechanism to allow the handlebar frame to rotate relative to the wheel frame for direction changing;
a second unlocking member rotatably arranged on the stroller frame and drivingly connected to the fold locking mechanism to allow the handlebar frame to rotate relative to the wheel frame for folding; and
an operating member movably arranged on the stroller frame and selectively driving the first unlocking member or the second unlocking member to rotate.

3. The unlocking mechanism according to claim 1 or 2, wherein the unlocking mechanism further comprises a safety lock, the safety lock being movably arranged on the stroller frame and switchable between a first position and a second position; when the safety lock is located at the first position, the operating member being drivingly connected to the first unlocking member through the safety lock; when the safety lock is located at the second position, the operating member being drivingly connected to the second unlocking member through the safety lock.

4. The unlocking mechanism according to claim 3, wherein the safety lock comprises:
a toggle member movably arranged on the stroller frame along a first direction and switchable between the first position and the second position;
a first linkage member movably connected to the toggle member along a second direction and drivingly connected to the first unlocking member; and
a second linkage member movably connected to the toggle member along the second direction and drivingly connected to the second unlocking member;
wherein the first direction intersects with the second direction, and the operating member is movable relative to the stroller frame along the second direction; when the toggle member is located at the first position, the operating member is capable of being operated to push against the first linkage member to move, such that the first unlocking member is rotated; when the toggle member is located at the second position, the operating member is capable of being operated to push against the second linkage member to move, such that the second unlocking member is rotated.

5. The unlocking mechanism according to claim 4,
wherein the first linkage member has a first abutting portion, the second linkage member has a second abutting portion, and the operating member has a first driving portion and a second driving portion which are spaced apart;
when the toggle member is located at the first position, the first abutting portion is aligned with the first driving portion, and the second abutting portion is misaligned with the second driving portion; when the toggle member is located at the second position, the second abutting portion is aligned with the second driving portion, and the first abutting portion is misaligned with the first driving portion.

6. The unlocking mechanism according to claim 5,
wherein the operating member further has a third driving portion and a fourth driving portion, and the third driving portion and the fourth driving portion are spaced apart and located between the first driving portion and the second driving portion;
the first linkage member and the second linkage member are spaced apart, a third avoidance portion is formed between the first linkage member and the second linkage member, the first linkage member further has a third abutting portion, and the second linkage member further has a fourth abutting portion;
when the toggle member is located at the first position, the third abutting portion is aligned with the third driving portion, and the fourth driving portion is aligned with the third avoidance portion; when the toggle member is located at the second position, the fourth abutting portion is aligned with the fourth driving portion, and the third driving portion is aligned with the third avoidance portion.

7. The unlocking mechanism according to claim 6,
wherein a first avoidance portion is formed between the first abutting portion and the third abutting portion; a second avoidance portion is formed between the second abutting portion and the fourth abutting portion;
when the toggle member is located at the first position and the operating member is operated, the second avoidance portion is configured to avoid the second driving portion; when the toggle member is located at the second position and the operating member is operated, the first avoidance portion is configured to avoid the first driving portion.

8. The unlocking mechanism according to claim 4,
wherein one of the first linkage member and the first unlocking member has a first guide concave portion, the other has a first engaging convex portion, the first engaging convex portion is slidably arranged in the first guide concave portion, and the first guide concave portion extends along the first direction;
one of the second linkage member and the second unlocking member has a second guide concave portion, the other has a second engaging convex portion, the second engaging convex portion is slidably arranged in the second guide concave portion, and the second guide concave portion extends along the first direction.

9. The unlocking mechanism according to claim 4, wherein the operating member has an initial position and an unlock position; when the operating member is located at the initial position, the operating member is capable of being operated to move to push against the first linkage member or the second linkage member to move; when the operating member is located at the unlock position, the operating member pushes against the first linkage member or the second linkage member.

10. The unlocking mechanism according to claim 1,
wherein the first unlocking member is provided with a first connecting portion, the first connecting portion is misaligned with a rotation center of the first unlocking member, and the first connecting portion is configured to be connected to the fold locking mechanism;
the second unlocking member is provided with a second connecting portion, the second connecting portion is misaligned with a rotation center of the second unlocking member, and the second connecting portion is configured to be connected to the height adjustment locking mechanism.

11. A stroller frame, comprising an upper handlebar frame, a lower handlebar frame, a wheel frame, a fold locking mechanism, a height adjustment locking mechanism, and the unlocking mechanism according to claim 1, the upper handlebar frame and the lower handlebar frame being restricted from moving relatively or allowed to move relatively through the height adjustment locking mechanism, the lower handlebar frame and the wheel frame being pivotally connected and restricted from pivoting relatively or allowed to pivot relatively through the fold locking mechanism, and the unlocking mechanism being arranged on the handlebar frame or the wheel frame and drivingly connected to the fold locking mechanism and the height adjustment locking mechanism, so as to allow the lower handlebar frame to pivot relative to the wheel frame and the upper handlebar frame to move relative to the lower handlebar frame.

12. The stroller frame according to claim 11, wherein the fold locking mechanism comprises a first locking member and a fixing member, the fixing member being provided with a locking concave portion and mounted on one of the wheel frame and the lower handlebar frame, and the first locking member being movably arranged on the other of the wheel frame and the lower handlebar frame and operably connected to the first unlocking member; when the first locking member is inserted into the locking concave portion, the lower handlebar frame is restricted from pivoting relative to the wheel frame, and when the first locking member is withdrawn from the locking concave portion, the lower handlebar frame is capable of pivoting relative to the wheel frame.

13. The stroller frame according to claim 12, wherein the fold locking mechanism further comprises a first traction member, the first traction member being connected between the first unlocking member and the first locking member, and the first unlocking member drives the first locking member to withdraw from the locking concave portion through the first traction member.

14. The stroller frame according to claim 11, wherein the height adjustment locking mechanism comprises a handlebar locking assembly and a locking hole, one of the upper handlebar frame and the lower handlebar frame is provided with the locking hole, the other is provided with the handlebar locking assembly, and the handlebar locking assembly is capable of being engaged with the locking hole to lock the upper handlebar frame and the lower handlebar frame.

15. The stroller frame according to claim 14, wherein the handlebar locking assembly is arranged on the upper handlebar frame, and the handlebar locking assembly comprises:
a moving member movably arranged on the upper handlebar frame and operably connected to the second unlocking member, the moving member being provided with a guide groove, and the guide groove extending obliquely relative to a moving direction of the moving member; and
a second locking member having a guide column, the guide column extending into the guide groove and being slidably engaged with the guide groove, so as to extend into or withdraw from the locking hole.

16. The unlocking mechanism according to claim 2,
wherein the first unlocking member is provided with a first connecting portion, the first connecting portion is misaligned with a rotation center of the first unlocking member, and the first connecting portion is configured to be connected to the direction-change locking mechanism;
the second unlocking member is provided with a second connecting portion, the second connecting portion is misaligned with a rotation center of the second unlocking member, and the second connecting portion is configured to be connected to the fold locking mechanism.

17. A stroller frame having an unfolded state and a folded state, comprising:
a wheel frame;
a handlebar frame rotatably arranged on the wheel frame;
a direction-change locking mechanism arranged between the handlebar frame and the wheel frame, the handlebar frame being capable of being restricted from rotating relative to the wheel frame for direction changing or allowed to rotate relative to the wheel frame for direction changing through the direction-change locking mechanism;
a fold locking mechanism arranged between the handlebar frame and the wheel frame, the handlebar frame being capable of being restricted from rotating relative to the wheel frame for folding or allowed to rotate relative to the wheel frame for folding through the fold locking mechanism; and
the unlocking mechanism according to claim 2 arranged on the handlebar frame and drivingly connected to the fold locking mechanism and the unlocking mechanism, so as to allow the handlebar frame to rotate relative to the wheel frame for direction changing or folding.

18. The stroller frame according to claim 17,
wherein the handlebar frame and the wheel frame are pivotally connected at a first pivot point, so that the handlebar frame has a first use position and a second use position relative to the wheel frame;
the direction-change locking mechanism comprises a first locking member, a first engaging member, and a second engaging member, the first engaging member and the second engaging member being spaced apart on the wheel frame along a circumferential direction of the first pivot point, and the first locking member being arranged on the handlebar frame and adapted to be engaged with the first engaging member or the second engaging member; when the first locking member is engaged with the first engaging member, the handlebar frame being located at the first use position, and when the first locking member is engaged with the second engaging member, the handlebar frame being located at the second use position.

19. The stroller frame according to claim 18,
wherein the first locking member has a locking portion, and each of the first engaging member and the second engaging member is provided with an engaged locking portion adapted to be engaged with the locking portion;
the first locking member is movably arranged on the handlebar frame and has a first lock position and a first unlock position, and when the first locking member is at the first lock position, the locking portion is engaged with the engaged locking portion to restrict the handlebar frame from switching between the first use position and the second use position; when the first locking member is at the first unlock position, the locking portion is disengaged from the engaged locking portion to allow the handlebar frame to switch between the first use position and the second use position.

20. The stroller frame according to claim 17,
wherein the handlebar frame and the wheel frame are pivotally connected at a first pivot point, so that the handlebar frame has a first use position and a third use position relative to the wheel frame;
when the handlebar frame is at the first use position, the handlebar frame gets away from the wheel frame around the first pivot point, so as to cause the stroller frame to be in the unfolded state, and when the handlebar frame is at the third use position, the handlebar frame gets close to the wheel frame around the first pivot point, so as to cause the stroller frame to be in the folded state.

21. The stroller frame according to claim 20, wherein the fold locking mechanism comprises:
a second locking member movable relative to the handlebar frame and having a second lock position and a second unlock position;
the wheel frame comprises a rear wheel frame and a first transmission member, one end of the first transmission member being pivotally connected to the rear wheel frame, and the other end of the first transmission member being pivotally connected to the handlebar frame at the first pivot point;
when the second locking member is at the second lock position, the second locking member is engaged with the first transmission member to restrict the handlebar frame from pivoting relative to the first transmission member, thereby restricting the handlebar frame from switching between the first use position and the third use position; when the second locking member is at the second unlock position, the second locking member is disengaged from the first transmission member to allow the handlebar frame to pivot relative to the first transmission member, thereby allowing the handlebar frame to switch between the first use position and the third use position.

22. The stroller frame according to claim 21, wherein the fold locking mechanism further comprises:
a second driving assembly movably arranged on the handlebar frame and drivingly connected to the second locking member; and
a second traction member connected to the second driving assembly and the second unlocking member;
when the second unlocking member rotates, the second unlocking member drives the second driving assembly to move through the second traction member, so as to drive the second locking member to move from the second lock position to the second unlock position.

23. An unlocking mechanism applying for a stroller frame, the stroller frame comprising a handlebar frame, a wheel frame, a wheel base, and a wheel locking mechanism, the handlebar frame comprising an upper handlebar frame, a lower handlebar frame, and a height adjustment locking mechanism arranged between the upper handlebar frame and the lower handlebar frame, and the upper handlebar frame and the lower handlebar frame being restricted from moving relatively or allowed to move relatively through the height adjustment locking mechanism; the wheel base being rotatably connected to the wheel frame, the wheel locking mechanism being arranged between the wheel frame and the wheel base and configured to restrict the wheel base from rotating relative to the wheel frame or allow the wheel base to rotate relative to the wheel frame, wherein the unlocking mechanism comprises:
a first unlocking member rotatably arranged on the stroller frame and drivingly connected to the wheel locking mechanism to allow the wheel base to rotate relative to the wheel frame;
a second unlocking member rotatably arranged on the stroller frame and drivingly connected to the height adjustment locking mechanism to allow the upper handlebar frame to move relative to the lower handlebar frame; and
an operating member movably arranged on the stroller frame and selectively driving the first unlocking member or the second unlocking member to rotate.

24. The unlocking mechanism according to claim 23,
wherein the first unlocking member is provided with a first connecting portion, the first connecting portion is misaligned with a rotation center of the first unlocking member, and the first connecting portion is configured to be connected to the wheel locking mechanism;
the second unlocking member is provided with a second connecting portion, the second connecting portion is misaligned with a rotation center of the second unlocking member, and the second connecting portion is configured to be connected to the height adjustment locking mechanism.

25. A stroller frame, comprising: a handlebar frame, a wheel frame, a wheel base, a wheel locking mechanism, and the unlocking mechanism according to claim 24, the handlebar frame comprising an upper handlebar frame, a lower handlebar frame, and a height adjustment locking mechanism arranged between the upper handlebar frame and the lower handlebar frame, and the upper handlebar frame and the lower handlebar frame being restricted from moving relatively or allowed to move relatively through the height adjustment locking mechanism; the wheel base being rotatably connected to the wheel frame, the wheel locking mechanism being arranged between the wheel frame and the wheel base and configured to restrict the wheel base from rotating relative to the wheel frame or allow the wheel base to rotate relative to the wheel frame, and the unlocking mechanism being arranged on the handlebar frame and drivingly connected to the wheel locking mechanism and the height adjustment locking mechanism, so as to allow the wheel base to rotate relative to the wheel frame and the upper handlebar frame to move relative to the lower handlebar frame.

26. The stroller frame according to claim 25, wherein the wheel locking mechanism comprises:
a first locking concave portion arranged in the wheel base;
a first locking member movably arranged on the wheel frame and adapted to be locked and engaged with the first locking concave portion; and
a first traction member connected between the first unlocking member and the first locking member; when the first locking member extends into the first locking concave portion for locking and engagement, the wheel base being restricted from rotating relative to the wheel frame, and when the first unlocking member drives the first locking member to withdraw from the first locking concave portion for disengagement through the first traction member, the wheel base being allowed to rotate relative to the wheel frame.

27. The stroller frame according to claim 26, wherein the first traction member is configured within the handlebar frame and the wheel frame and passes through the height adjustment locking mechanism.

28. The stroller frame according to claim 27, wherein the height adjustment locking mechanism comprises a support base, the support base being provided with a first penetrating channel, the first penetrating channel being a U-shaped channel, and an end of the first traction member away from the first unlocking member extending into one opening of the U-shaped channel and extending out of the other opening of the U-shaped channel, so that the first traction member is arranged around the support base.

29. The stroller frame according to claim 25, wherein the upper handlebar frame is slidable relative to the lower handlebar frame, and the height adjustment locking mechanism comprises:
a second engaged locking portion arranged on the lower handlebar frame;
a second locking assembly movably arranged on the upper handlebar frame and adapted to be locked and engaged with the second engaged locking portion; and
a second traction member connected between the second unlocking member and the second locking assembly;
when the second locking assembly extends into the second engaged locking portion for locking and engagement, the upper handlebar frame is restricted from sliding relative to the lower handlebar frame; when the second unlocking member drives the second locking assembly to withdraw from the second engaged locking portion for disengagement through the second traction member, the upper handlebar frame is allowed to slide relative to the lower handlebar frame;or
the height adjustment locking mechanism comprises:
a first connecting base connected to the upper handlebar frame;
a second connecting base connected to the lower handlebar frame and pivotally connected to the first connecting base;
a second locking member movably arranged between the first connecting base and the second connecting base axially to restrict or allow relative pivoting of the first connecting base and the second connecting base;
a driving member movably arranged on the first connecting base, or the second connecting base, the driving member axially passing through the first connecting base or the second connecting base and abutting against the second locking member to drive the second locking member to move; and
a second traction member connected to the driving member and the second unlocking member, when the second unlocking member is operated, the second traction member driving the second locking member to move through the driving member, so as to allow the first connecting base to pivot relative to the second connecting base.

30. The stroller frame according to claim 29,
wherein the height adjustment locking mechanism further comprises a support base, the support base being provided with a first penetrating channel and a second penetrating channel, the first penetrating channel being a U-shaped channel, the second penetrating channel being a linear channel, and the second traction member being received in the linear channel;
the wheel locking mechanism comprises a first traction member, the first traction member being configured within the wheel frame and the handlebar frame and passing through the U-shaped channel.
